(19) Europäisches Patentamt
European Patent Office
Office européen des brevets

(11) Publication number: **0 283 751**
**A2**

(12) **EUROPEAN PATENT APPLICATION**

(21) Application number: **88102748.6**

(51) Int. Cl.[4]: **B01D 13/02**

(22) Date of filing: **24.02.88**

(30) Priority: **25.02.87 US 18891**
**25.02.87 US 18888**
**25.02.87 US 18895**

(43) Date of publication of application:
**28.09.88 Bulletin 88/39**

(84) Designated Contracting States:
**AT BE CH DE FR GB IT LI NL SE**

(71) Applicant: **AQUANAUTICS CORPORATION (a Californian corporation)**
**4560 Horton Street, Q-111**
**Emeryville California 94608(US)**

(72) Inventor: **Zenner, Bruce David**
**121 Bay Street**
**Hercules California(US)**
Inventor: **Ciccone, Joseph Paul**
**4560 Horton Street, Q-111**
**Emeryville California 94608(US)**
Inventor: **De Castro, Emory Sayre**
**4560 Horton Street, Q-111**
**Emeryville California 94608(US)**
Inventor: **Deardurff, Larrie Alan**
**4560 Horton Street, Q-111**
**Emeryville California 94608(US)**
Inventor: **Kerr, John Borland**
**6091 Rockridge Boulevard**
**Oakland California 94618(US)**
Inventor: **Vinson, Jeffry D.**
**1702 East Laurel Street**
**Goldsboro North Carolina 27530(US)**

(74) Representative: **Reitzner, Bruno, Dr. et al**
**Patentanwälte Dipl.-Ing. R. Splanemann Dr. B. Reitzner, Dipl.-Ing. K. Baronetzky Tal 13**
**D-8000 München 2(DE)**

(54) **Polyalkylamine complexes for ligand extraction and generation.**

(57) Methods and apparatus for electrochemical extraction of a ligand such as molecular oxygen from a first fluid environment and for release of a ligand such as molecular oxygen, as well as ligand carrier compounds therefor comprising linear, pentadentate polyalkylamines and transition metal ions. The carrier compounds have the general formula:

EP 0 283 751 A2

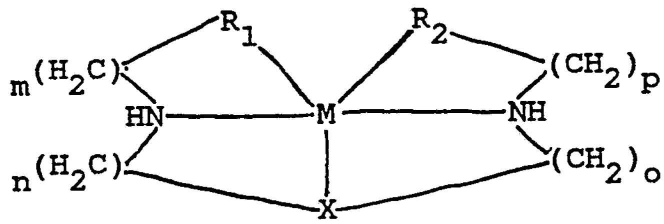

where:

M is an electrochemically active transition metal ion;

$R_1$ and $R_2$ are each organic groups including a nitrogen coordinated to M;

m, n, o, and p are each 1, 2, 3, or 4; and

X is selected from the group consisting of 2,6-pyridyl, 2,6-piperidyl, 2,5-pyrrolyl, 2,4-imidazolyl, substituted heterocyclic amines, -O-, -S-, -P-, and -N-$R_3$ where R is hydrogen lower alkyl, or aralkyl.

By providing an electrocatalyst capable of rapid electron transfer and having an electropotential less than that of the carrier compound, low energy electron transfer between the carrier compounds and the electrode of the electrochemical cell is achieved. The use of electrodes having catalytically active surface sites leads to efficient electron transfer between the carrier compounds and the electrodes of the electrochemical cell, resulting in lower energy consumption and/or increased oxygen output.

# POLYALKYLAMINE COMPLEXES FOR LIGAND EXTRACTION AND GENERATION

## BACKGROUND OF THE INVENTION

### 1. Field of the Invention

This invention relates to carrier complexes for use in apparatus and methods for extracting small ligands from a fluid; more particularly, the invention relates to electrochemically active polyamine (also referred to as polyalkylamine) complexes of transition metals that reversibly bind small ligands such as molecular oxygen and the use of such complexes for extraction of ligands from a first fluid environment and release ligands to a second fluid environment. Other aspects of the invention relate to the electrochemical extraction of oxygen employing electrocatalysts which promote oxygen release by facilitating electron transfer to and from carrier compounds which reversibly bind oxygen and to the construction and use of an electrochemical cell having surface-modified electrodes which interact with a carrier compound-containing fluid to transport and concentrate oxygen.

Molecular oxygen is used in many industrial, scientific, medical, and recreational applications.

A wide variety of methods for extracting oxygen from air, sea water, and other fluids are known. On a large scale, oxygen is generally prepared by fractional distillation of liquid air. Typically, filtered air is passed through an alkali absorbent in order to remove moisture and carbon dioxide. The air is then compressed and the heat of compression is removed by ordinary cooling procedures. The cooled compressed air is allowed to expand which causes it to cool further. The expanded air is then recompressed, cooled and reexpanded repeatedly to liquify the air. Liquid air is then fractionally distilled to remove nitrogen and other impurity gases. The remaining liquid oxygen may be stored in that form or as compressed gaseous oxygen. Cryogenic methods of oxygen production typically entail large installations which are not portable and are energy intensive. The production and storage of oxygen present severe explosion and fire hazards. While cryogenic fractional distillation processes have proved useful for supplying oxygen to large industrial users, such as the steel industry and sewage treatment plants, there are many applications in which local production of oxygen in relatively smaller quantities is both useful and desirable.

Numerous methods and devices for separating oxygen from fluids such as air and sea water have been devised. Many utilize gas permeable membranes to separate oxygen from the particular fluid feedstock by diffusion. For example, Bodell, U.S. Patent No. 3,333,583, and Robb, U.S. Patent Nos. 3,369,343, and 3,510,387, disclose apparatus for extracting oxygen from sea water using thin tubes of silicon rubber or a membrane of silicone rubber, respectively. Isomura, U.S. Patent No. 3,377,777, discloses concentrating oxygen from natural waters by equilibration with exhaled gases, i.e., by utilizing large areas of gas water interface and simple diffusional considerations for transport of oxygen from the liquid phase across the permeable membrane to a gas phase. Systems based on simple diffusion processes are also taught by: Blanchard, et al., U.S. Patent No. 3,651,616; Blackmer, et al., U.S. Patent No. 3,976,451; Hedman, U.S. Patent No. 3,979,190; and Shindo, et al., U.S. Patent No. 4,268,279. Such systems have proven impractical for actual use due to a variety of factors including: the lack of selectivity of the membranes for oxygen, the size or weight of the system required to produce useful quantities of oxygen, and the limitation that the maximum partial pressure of oxygen which can be extracted without additional vacuum or compression pumps is approximately equivalent to that of the fluid feed stock.

The permeation rates and selectivity of such membranes can be increased by coating the delivery side of the membrane with a gas-solubilizing substance (Allington, U.S. Patent 3,751,879) or by incorporating transition metal based carrier complexes in the membrane (e.g., Nishide, et al., Macromolecules 19, 494-496 (1986)). Other examples of facilitation of the rate or enhancement of the selectivity of diffusion extraction by incorporation of absorbing materials in polymeric membranes are given by Ward, et al., U.S. Patent No. 3,396,510. While the use of such membranes would be an improvement in oxygen extraction devices, the partial pressure of oxygen that may be delivered remains limited by the effective partial pressure of oxygen in the feed stock fluid.

A second type of oxygen source that is portable and can supply oxygen in small amounts as needed is disclosed by Rind, U.S. Patent No. 4,020,833. This system includes a mixture of a metallic superoxide, decomposable to release oxygen upon contact with carbon dioxide and water vapor, and a material which absorbs $CO_2$. The utility of this system is limited in that the capacity of oxygen which can be produced is limited by the bulk of material which can be carried; in addition, the supply of chemical reactants must be

continuously replenished for continued use of oxygen.

A variety of electrochemical methods of producing oxygen from water have been developed. The most basic of these methods is the electrolysis of water into component hydrogen and oxygen gases. Where oxygen is the product of primary interest, electrolysis techniques usually suffer from the significant disadvantage of cogenerating hydrogen. The oxygen produced is typically contaminated with small quantities of hydrogen; in addition, the hydrogen produced presents a severe fire or explosion hazard which makes such systems generally unsuitable for use in closed environments and nearby people. Electrolysis of water to produce oxygen is extremely energy intensive. Some of these disadvantages have been ameliorated by the apparatus disclosed by Nolan, U.S. Patent No. 4,488,951, in which the hydrogen produced from an electrolysis cell is electrochemically reacted with oxygen from air to form water and hydrogen peroxide; the hydrogen peroxide produced is then decomposed to form water and oxygen. However, the power requirements of such a cell remain quite large.

Other electrochemical methods of oxygen production utilize a variety of two and four electron redox processes to extract oxygen from air. Tseung, et al., U.S. Patent No. 4,416,758, describes a cell in which oxygen from air is reduced in solution at a graphite electrode to form peroxyl and hydroxyl ions. The peroxyl ions so produced diffuse through an ion permeable membrane and are catalytically reacted to form oxygen in a second cell compartment with a $NiCo_2O_4$ or $CoFe_2O_4$ catalysts. This cell, which requires an operating voltage of about one volt, uses a concentrated alkaline electrolyte at elevated temperatures and consumes substantial electrical energy. Chillier-Duchetel et al., U.S. Patent No. 4,061,445 also regenerates oxygen from peroxyl ions. The cell uses bipolar electrodes coated with anthraquinone derivatives; these anthraquinones are electrochemically reduced and, in turn, reduce the oxygen to the desired peroxyl ions. The peroxyl ions are reacted at the anode to regenerate oxygen gas. Blanchard, et al., U.S. Patent No. 4,137,371 discloses a zinc oxide cell which extracts oxygen from the air by diffusion. Gagne, et al., U.S. Patent No. 4,475,994 discloses an electrochemical cell in which oxygen from the air is reduced to superoxide ions ($O_2^-$) on a quinoline-coated electrode. The superoxide anions are transported to the anode using transition metal carrier compounds; at the anode, the superoxide is reoxidized to oxygen. Tomter, U.S. Patent No. 3,410,783, discloses electrolytic reduction of air-borne oxygen at one electrode and regeneration of oxygen at a second; the reduced oxygen species are pumped or diffuse, respectively, between the two electrodes.

It has long been known that the variety of naturally occurring metalloproteins, including hemoglobin, myoglobin, hemocyanin, and hemerythrin, are capable of reversibly binding oxygen and transporting oxygen from a permeable membrane to a site within an organism at which the oxygen is needed. In hemoglobin, for example, oxygen is reversibly bound to ferrous (Fe(II)) porphyrins incorporated in the protein. Oxidized, ferric hemoglobins are unreactive to molecular oxygen. The properties of hemoglobins, hemerythrins, and hemocyanins have been the subjects of numerous studies, as documented in, e.g., Bonaventura, et al. Symposium on Respiratory Pigments, 20 J. Am. Zool. 20, 7 (1980) and 20, 131 (1980).

The oxygen binding properties of such proteins have been utilized to extract oxygen from air and other fluids. Miller, U.S. Patent No. 3,230,045 discloses the use of an oxygen binding chromoprotein such as hemoglobin to separate oxygen from other gases. The chromoproteins are kept moist or in solution and are absorbed on or bound to filter paper; an electrolyte such as sodium chloride may also be present. The filter paper is alternately exposed to air (the carrier absorbs oxygen) and vacuum, which removes the bound oxygen.

Bonaventura, et al., U.S. Patents No. 4,427,416, and 4,343,715, also use of naturally occurring oxygen carriers to extract oxygen from fluids. The metalloproteins are insolubilized at high concentrations by entrapment and/or covalent linkage to a polyurethane matrix or similar, flexible support in states that are capable of reversible binding oxygen. The material disclosed in these patents, generally known as "hemosponge" since it usually incorporates hemoglobin or another heme-type protein, is capable of extracting oxygen from various fluid environments. However, the rate of extraction is less than that which may be desired for many applications which involve a high rate of oxygen use. Further, these disclosures utilize chemical regeneration of the oxidized carrier compounds, with, e.g., ferricyanide solutions, which, in applications which require large amounts of oxygen, present considerable supply and waste disposal problems. Release of bound oxygen from the "hemosponges" requires either chemical oxidation of the carrier compound with the concomitant supply and waste disposal problems or various methods for pressing the hemosponge, which require pumps, vacuums, and the like which use substantial quantities of energy.

A variety of transition metal complexes with mono-, bi-, and multi-dentate ligands are also capable of reversibly binding oxygen. Several devices and methods utilizing such synthetic transition metal oxygen-carrier compounds have been devised for extraction of oxygen from air. For example, Warne, et al., U.S.

Patent No. 2,217,850, disclose the reaction of oxygen in air with solids of cobaltous hexamine salts to synthesize, on a large scale, peroxo-cobalt amine solids, followed by removal of the solution, and separate chemical regeneration of the oxygen and the starting cobalt hexamine salts. Fogler, et al., U.S. Patent No. 2,450,276 utilize a solid cobaltous compound of a tetradentate Schiff base ligand to extract oxygen from air by alternately cooling a bed of the solid carrier compound, which absorbs oxygen from the air, and heating the oxygenated carrier compound to release bound oxygen. This process is accompanied by severe decomposition of the carrier compound. Iles, et al., U.S. Patent No. 4,165,972 discloses an apparatus for alternately heating and cooling alternate beds of carrier compound to absorb oxygen from air into cooled beds of carrier and expel oxygen into a second gas handling system by heating the bed of carrier compound.

Solutions of transition metal carrier compounds have been used in both electrochemical and non-electrochemical methods of extracting oxygen from air. For example, Gagne, U.S. Patent No. 4,475,994, discussed above, utilizes cobaltous compounds to transport electrochemically generated superoxide anions from the cell cathode to the anode where the oxygen is regenerated.

Roman, U.S. Patent No. 4,542,010, discloses a method for producing oxygen and nitrogen using a porous, hydrophilic membrane support containing a solution of a transition metal oxygen carrier in a non-aqueous solvent. This device serves as a facilitated diffusion membrane; oxygen bound to the carrier diffuses from a first permeable membrane contacting air to a second membrane where the oxygen is released from the carrier. Thus, the permeability of oxygen through the membrane is increased by the reversible binding of oxygen to the organometallic carrier compound. Loading and unloading of oxygen from the liquid membrane is accomplished by a combination of temperature and/or pressure differentials. One drawback to this process is that oxygen generated using this device is costly, since the temperature and/or pressure differentials required to load and unload the oxygen carriers require large energy inputs. In addition, both sides of the membranes must remain saturated with solvent in order for the membrane to function, significantly adding to the cost and complexity of the device.

It is now well understood that many such transition metal-based carriers typically have a lower valence state, i.e., Mn(II), Fe(II), Co(II) or Cu(I) in which the carrier is capable of reversibly binding molecular oxygen under appropriate conditions; and a higher valence (more oxidized) state, e.g., Mn(III), Fe(III), Co(III), or Cu(II), in which binding of molecular oxygen is essentially absent. Most of the known methods for extracting oxygen from air using such transition metal carrier compound are dependant upon the carrier compound remaining in the lower valence state. Molecular oxygen is absorbed from sources with a relatively high concentration (and hence chemical activity) of oxygen and reversibly bound to the carrier compound. The oxygen desorbs when the carrier compound is exposed to an environment in which the chemical activity of oxygen is lower, e.g., low oxygen partial pressures or elevated temperatures. Extraction processes may be carried out by exposing the carrier compounds to alternating environments of higher and lower oxygen activity, e.g., alternating partial pressure of oxygen or alternately low and high temperatures. The carrier compound may actually be used to carry oxygen from the feedstock environment to the delivery environment by diffusion or by pumped circulation.

After prolonged use, as with repeated heating and cooling cycles in bed reactors, or oxygenated solutions, the carrier compounds tend to oxidize and become inactive toward oxygen. In solution, this oxidation and degradation often occurs via the formation of the stable and unreactive $\mu$ oxo dimer of, e.g., iron porphyrins. E.g., Leal, et al., J. Am. Chem. Soc. 97, 5125 (1975). Similarly, many cobalt based carrier compounds tend to oxidize spontaneously to forms which are unreactive to oxygen. Various solutions to the problem of carrier compound decomposition have been suggested, although generally not with a view to oxygen extraction. For example, in attempts to protect the transition metal from its environment but allow diffusion of oxygen to the metal, various bulky ligands have been used. An alternate approach, suggested by Leal, et al., supra, is to immobilize the carrier compound on a solid support. Another approach to avoiding many of these difficulties is the regeneration of the lower valence state through the use of chemical and/or electrochemical reduction. Chemical regeneration methods may succeed, but, for the large scale production of oxygen from air, require large quantities of regenerating chemicals and typically produce commensurate quantities of waste chemicals.

Bonaventura, et al., in U.S. Patents Nos. 4,602,383; 4,609,987; and 4,629,544 disclose another apparatus and methodology for extraction of oxygen from gas or liquid streams and delivery of the oxygen in high purity, in which the binding of oxygen to the transition metal carrier is modulated electrochemically. These patents disclose circulating a fluid containing dissolved organometallic carrier compounds to a region in which the carrier complex, in its lower valence state, is contacted with oxygen diffusing through a permeable membrane. The fluid, with oxygen bound to the carrier, is pumped to one electrode compartment in which the carrier is oxidized to its higher valence state, forcing the release of the bound oxygen.

The carrier is then circulated to a second electrode compartment in which the carrier is reduced to its lower state in which it can again bind oxygen. Since the oxygen capacity of the fluid is enhanced by the solubility of the organometallic carrier compound, high partial pressures of oxygen may be obtained and oxygen may be "pumped" to concentrations or pressures greater than those of the feedstock fluid. The pressures of oxygen which may be produced are thus greater than the concentrations obtainable by simple diffusion through membranes or facilitated diffusion without electrochemical unloading of the carrier compounds.

Despite the substantial advances represented by U.S. Patent Nos. 4,602,987, 4,609,383, and 4,629,544, it would still be desirable to provide improvements in the systems described. For example, the efficiency of oxygen extraction systems could be increased by optimizing the structures, and hence the electrochemical, thermodynamic, and kinetic properties of the carrier compounds. It would also be desirable to provide a more efficient transfer of electrons from the carrier compounds to the anodic electrode and from the cathodic electrode to carrier compounds. Further, enhanced oxygen extraction by promoting the transfer of electrons from the carrier compounds to the anodic electrode and/or from the cathodic electrode to the carrier compounds would be possible. Such increased efficiencies would increase the volume output of oxygen from a fixed sized cell or, alternatively, allow a fixed amount of oxygen to be produced by a cell having reduced electrode area and/or lower power consumption.

2. Description of the Background Art

Artificial, transition metal oxygen carriers which are potentially usable in oxygen extraction systems have been described by a number of researchers. For example, Brault, et al., Biochemistry 13, 4591 (1974), discloses the preparation and properties of ferrous deutero-and tetraphenyl-porphyrins in various organic solvents. Castro, Bioinorganic Chemistry 4, 45-65 (1974), discloses the synthesis of hexa-and penta-coordinate iron porphyrins, which are models for the prosthetic groups of active sites of certain cytochromes and other heme proteins. Other iron-containing transition metal compounds which may reversibly bind oxygen are described by Chang, et al., J. Am. Chem. Soc. 95, 5810 (1973).

Numerous cobalt, manganese, and copper compounds also exhibit reversible oxygen binding. For example, Crumbliss, et al., Science 164, 1168-1170 (1969), disclose Schiff base complexes of Co(II) which form stable complexes with oxygen species in solution. See also: Crumbliss, J. Am. Chem. Soc. 92, 55 (1970) (monomeric cobalt complexes of oxygen); Dufour, et al., J. Mol. Catalysis 7, 277 (1980) (Catalysis of oxidation of simple alkyl-substituted indoles by Co(II), Co(III), and Mn(III) meso-tetraphenyl porphyrins via a ternary porphyrin-indole-oxygen complex); Traylor, et al., J. Am. Chem. Soc. 96, 5597 (1974) (effect of solvent polarity on reversible oxygenation of several heme complexes prepared by reduction with sodium dithionite or a mixture of palladium black and calcium hydride); Held, U.S. Patent No. 4,442,297 (absorption of gases using manganese compounds); Simmons, et al., J. Chem. Soc. Dalton Trans. 18-37 (1980) (reversible coordination of oxygen to copper (I) complexes of imidazole derivatives).

Some types of such transition metal carrier complexes have been used in or suggested for use in devices for extraction, absorption, and generation of oxygen from fluid media. For example, Roman, U.S. Patent Nos. 4,451,270 and 4,452,010, discloses Schiff base complexes of metals in an oxygen selective, permeable membrane and extraction system. The carriers include cobalt complexes of linear and macrocyclic tetradentate, linear pentadentate, and bidentate Schiff base ligands in primarily non-aqueous, Lewis base solvents. Hill, U.S. Patent No. 4,442,297, uses phosphine complexes of Mn(II) in dehydrated solvents to purify nitrogen gas by extracting impurities including molecular oxygen. Sievers, U.S. Patent No. 4,514,522, discloses oxygen sorbents comprising linear, tetradentate ketoamine complexes bound to porous polymers. Gagne, U.S. Patent No. 4,475,994, uses cobalt complexes of unknown stoichiometry in a mixed solvent at high pH to transport electrochemically generated superoxide ions across a fluid membrane. Bonaventura, et al., U.S. Patents Nos. 4,602,383; 4,609,987; and 4,629,544, disclose a variety of metalloporphyrins, in combination with Lewis bases, in aqueous, non-aqueous, and water-immiscible solvents and their use to electrochemically separate oxygen from fluids.

Oxygen carrier compounds, including cobalt complexes of some linear, pentadentate polyamines, and their properties have been extensively reviewed and tabulated. Niederhoffer, et al., Chem. Rev. 84 137-203 (1984). More detailed investigations of cobalt complexes of some linear, pentadentate polyamines have been reported in a series of articles by Harris, et al., and Timmons, et al. Inorg. Chem. 17 889 (1978); Inorg. Chem. 17 2192 (1978); Inorg. Chem. 18 1042 (1979); Inorg. Chem. 18 2977 (1979); Inorg. Chem. 19 21 (1980); and Inorg. Chem. 21 1525 (1982). The use of transition metal complexes of polyalkylamines in electrochemical or other oxygen extraction and generation processes is not known.

Various electrochemically active transition metal complexes and organic substances can be bound to or

incorporated in electrode surfaces. For example, Doblhofer and Durr, J. Electrochem. Soc. (1980) 127:1041, disclose codeposition of acrylonitrile monomers with metal acetylacetonates on glassy carbon electrodes to form an electrode surface for cathodic reduction of molecular oxygen. Dubois, et al., J. Electroanal. Chem. - (1981) 117:233, disclose ferrocene derivatives covalently linked to polytryptamine films and their electrochemical properties. Oyama and Anson, J. Electrochem. Soc. (1980) 127:640, disclose the electrochemical characteristics of ruthenium complexes bound to poly-(4-vinyl pyridine) coated electrodes. Naphthaquinones have been bound to an electrode surface and used to catalyze the reduction of $O_2$ to $H_2O_2$. Calabrese, et al., J. Am. Chem. Soc. (1983) 105:5594-5600. Methods of preparing chemically modified electrodes are reviewed by Murray, Acc. Chem. Res. (1980) 13:135.

A number of surface groups have been identified on carbon electrodes, including carboxyl, phenolic hydroxyl, quinone normal lactone, fluorescein-like lactone, carboxylic and anhydride, and cyclic peroxide (Comprehensive Treatise of Electrochemistry, Vol. 4, Chap. 10, p. 479); cyclic esters (Barton and Harrison, Carbon (1975) 13:283-288); quinoid, quihydrone, phenolic, carboxyl, carbonyl, lactone, sulfates, metal acid derivatives, and lamellar compounds (Panzer, Electrochimica Acta (1975) 20:635-647); carboxyl, alcoholic phenolic hydroxyl, quinones, and lactones (Bensenhard and Fritz, Angew. Chem. Int. Ed. Engl. (1983) 22:950-975): and ketone carbonyl groups (Mattson and Mark, Jr., J. Coll. Inter. Sci. (1969) 31:131-144).

The surfaces of carbon electrodes have been modified by a number of techniques, including electrochemical oxidation (Weinberg and Reddy, J. App. Electrochem. (1973) 3:73-75; Vasquez and Imai, Bioelectrochem. Bioener. (1985) 14:389-403; and U.S. Patent No. 3,657,082); oxidation in a heated airstream (Hollax and Cheng, Carbon (1985) 23:655-664); voltage cycling with a planar electrode surface (Engstrom, Anal. Chem. (1982) 54:2310-2314; Blaedel and Schieffer, J. Electroanal. Chem. (1977) 80:259-271); and acid oxidation of carbon fibers (Proctor and Sherwood, Carbon (1983) 21:53-59). Various pretreatments have been reported to increase electron transfer rates to certain couples (Engstrom, supra, and Blaedel and Schieffer, supra).

The use of immobilized oxygen carriers for separating oxygen from fluid mixtures is described in U.S. Patent Nos. 4,343,715 and 4,427,416. An electrochemical cell which oxidizes oxygen to the superoxide ion to facilitate separation is described in U.S. Patent No. 4,475,994.

The mechanism of electrochemical catalysts in promoting the reduction of carbon-halogen bonds is described in Andrieux et al., J. Am. Chem. Soc. (1979) 101:3431-3441, and (1984) 106:1957-1962, and Saveant and Binh, J. Electroanal. Chem. (1978) 88:27-41.

## SUMMARY OF THE INVENTION

Methods and apparatus for extraction of a ligand such as molecular oxygen from a first fluid environment and for release of a ligand such as molecular oxygen to a second fluid environment are disclosed, as well as ligand carrier compounds therefor comprising linear, pentadentate polyalkylamines and transition metal ions. The carrier compounds have the general formula:

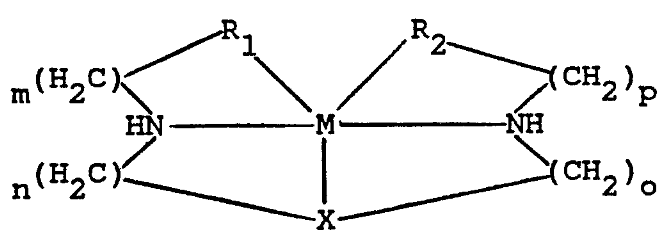

where

$R_1$ and $R_2$ are each organic groups including a nitrogen coordinated to M;

m, n, o, and p are each 1, 2, 3, or 4; and

X is selected from the group consisting of 2,6-pyridyl, 2,6-piperidyl, 2,5-pyrrolyl, 2,4-imidazolyl, substituted heterocyclic amines, -O-, -S-, -P-, and $-N-R_3$ where R is hydrogen lower alkyl, or aralkyl.

Typical methods according to the invention include: contacting a first fluid environment containing a ligand with the first surface of a first ligand permeable membrane having a first and second surface wherein the membrane separates the environment from an interior space of a container; contacting a carrier fluid with the second surface of the membrane wherein the carrier fluid is confined in the container and the carrier fluid contains a carrier compound, whereby at least a portion of a ligand which diffuses through the membrane binds to the carrier compound to give bound ligand complex; transporting the carrier fluid

containing the bound ligand complex to a first electrode compartment of an electrochemical cell which forms a second portion of the container; electrochemically modulating the carrier compound to an oxidation state having relatively less binding affinity for ligand, thereby releasing free ligand into the carrier fluid and producing a non-binding state carrier compound; removing ligand from the carrier fluid to give a ligand depleted carrier fluid; transporting the ligand depleted carrier fluid containing the non-binding state carrier compound to a second electrode compartment of an electrochemical cell which forms a third portion of the container; and electrochemically modifying the non-binding state carrier compound to reform the binding state carrier compound.

Typically, an apparatus used for the extraction of a ligand such as oxygen from fluids, for example, air or seawater, will comprise an oxygen loading station in which an oxygen (or ligand) binding carrier compound in its reduced valence state is transported past an oxygen permeable membrane in contact with the first fluid environment from which oxygen is being extracted. A carrier fluid containing the carrier compound is transported through an apparatus through a conducting system which seals the carrier fluid from both the first fluid environment (occasionally referred to herein as an external fluid environment) and a second fluid environment (sometimes referred to herein a the internal environment) into which oxygen is being released. The reduced state oxygen carrier is oxidized at the anode of an electrochemical cell, and the carrier fluid containing free dissolved or gaseous oxygen is transported to a separate location, generally, an "unloader," where the oxygen passes into the interior environment, in some embodiments, through an oxygen permeable membrane. The carrier fluid containing the oxidized-state carrier compound is then circulated back through a cathode compartment of an electrochemical cell where the reduced state oxygen carrier is reformed by electrochemical reduction. The carrier fluid containing the reduced state oxygen carrier is then transported back to the oxygen loading station, after which the entire operation can be repeated.

Efficient extraction of oxygen from a fluid mixture feestock may be enhanced by employing an electrochemical cell having electrodes which possess surface catalytic sites as a result of pretreatment, usually oxidation, of the electrode surface.

The type of electrode is not critical, generally being a chemically inert carbon or metallic electrode, often being porous to provide a large surface area and good contact with the circulating carrier fluid. The manner of introducing the surface catalytic sites is also not critical, usually being an oxidation process, such as voltage cycling, thermal oxidation, chemical oxidation, or plasma oxidation.

In the preferred embodiment, carbon felt electrodes are employed. The carbon felts are woven from bundles (yarns) of individual carbon fibers woven in a plurality of layers. The resulting structure is oxidized by voltage cycling in an electrolyte under particular conditions, as described in detail hereinafter. Experimental results show that the use of such electrodes in the method of the present invention results in a significant increase in oxygen production when compared with the use of nontreated electrodes, particularly with certain classes of carrier compounds.

Another aspect of the invention relies on the use of an electrocatalyst to promote electron transfer between the carrier compounds and either or both of the electrodes of the electrochemical cell. The electrocatalyst is a substance capable of rapid electron transfer which has an electrical potential less than that of the carrier compounds under the operating conditions of the cell. That is, the energy required to transfer electrons to and from the electrocatalyst will be less than that required to transfer electrons to and from the carrier compounds directly. The electrocatalyst may be immobilized on either or both of the electrodes or, more usually, will be present in the carrier fluid so that it circulates together with the carrier compounds. Alternatively, the electrocatalysts may be bound to a support substrate outside of the electrochemical cell, and flow of the carrier fluid can be isolated from the electrochemical cell by using unbound electrocatalyst (or other mediator) to charge the immobilized electrocatalysts, and separately exposing the immobilized electrocatalyst to release the bound oxygen.

As just described, the voltage required to operate the electrochemical cell is decreased as a result of substituting the oxidation/reduction of an electrochemical catalyst having a lesser potential than that of the carrier compound. In order to retain a reasonable equilibrium in favor of formation of the second oxidation state of the carrier compound, however, it is necessary that the standard potential not be reduced too greatly. For most of the electrocatalysts described below, the difference between the standard potential of the electrocatalysts and that of the oxygenated carrier complex should be in the range from about -1.0 to 0.0 volts, more usually from about -0.5 to -0.2 volts.

Other methods and apparatus according to the invention utilize diffusive transport of oxygen or other ligands as ligand-carrier complexes between electrodes of an electrochemical cell either in conjunction with ligand permeable membranes or using ligand permeable electrodes.

Although reference will be made to "oxygen carriers" and "oxygen binding compounds," many of the

carrier compounds according to the invention reversibly bind other small molecules, or "ligands," such as carbon monoxide, carbon dioxide, nitric oxide, cyanide, isocyanide, hydroxide, and the like. It will be understood that the invention is intended to comprehend extraction (from an appropriate fluid medium), transport, and regeneration or release of such ligands as well as oxygen, where the carrier compounds of the invention reversibly bind such ligands and have differential affinities for such ligands in the oxidized and reduced states of the carrier compounds.

## BRIEF DESCRIPTION OF THE DRAWINGS

A more complete appreciation of the invention and many of the attendant advantages thereof will be better understood by reference to the following detailed description of the specific embodiments thereof when considered in connection with the accompanying drawings, wherein:

Fig. 1 is a plot representing the variation with pH of the optical absorbance at 330 nanometers (nm) of selected carrier compounds according to the invention.

Fig. 2 is a plot representing the results of potentiometric pH titrations of selected polyalkylamines according to the invention.

Fig. 3 is a plot representing the results of potentiometric pH titrations of selected cobalt carrier compounds according to the invention.

Fig. 4 is a plot representing the results of potentiometric pH titrations of complexes with molecular oxygen of selected cobalt carrier compounds according to the invention.

Fig. 5 is a plot representing the endpoints of potentiometric pH titrations of selected carrier compounds according to the invention and their molecular oxygen complexes, along with initial working pH values for these carrier compounds as determined from the titrations of the corresponding oxygen complexes.

Fig. 6 is a plot of a cyclic voltammetry trace for the oxygenated cobalt carrier compound of polyalkylamine No. 76 using an initial voltage of 0.19 V vs. an Ag/AgCl reference electrode, an initially negative sweep rate of 50 mV/s, and a glassy carbon working electrode.

Fig. 7 is a schematic diagram illustrating an apparatus for practice of the methods of the invention.

Fig. 8 is a schematic diagram illustrating an Electrochemical Oxygen Cell (EOC) used for preliminary evaluation of the properties of individual carrier compounds for use practicing the methods of the invention.

Fig. 9 is a schematic diagram of a specific embodiment of an apparatus for the practice of the methods of the invention, showing manufacturing parameters for this apparatus.

Fig. 10 is a schematic diagram of a second specific embodiment of an apparatus for the practice of the methods of the invention.

Fig. 11 is a schematic illustration of a bipolar cell useful for extracting oxygen from an oxygenated carrier compound according to the present invention.

Fig. 12 is a schematic illustration of an apparatus useful for treating electrodes according to the present invention.

Fig. 13 illustrates a useful waveform for driving the apparatus of Fig. 1.

Figs. 14A-14C are a comparison of the current density, oxygen production, and power consumption of an electrochemical cell employing both pretreated and non-pretreated electrodes for a first carrier compound.

Figs. 15A-15D are a comparison of the current density, oxygen production, power consumption, and anodic and cathodic overpotentials of an electrochemical cell employing both pretreated and non-pretreated electrodes for a second carrier compound.

Figs. 16A-16B are a consumption of the current density, oxygen production, and power consumption of an electrochemical cell employing both pretreated and non-pretreated electrodes for a third carrier compound.

Fig. 17 is a cyclic voltammagram demonstrating the effect of pH on the ability of 1,1'-ferrocenedicarboxylic acid (5 mM) to mediate electron transfer to air-saturated Co(1,9-bis-(2-pyridyl)-2,5,8-triazanone)$Cl_2$.

## DETAILED DESCRIPTION OF THE SPECIFIC EMBODIMENTS

The chelating ligands which may be used to form the transition metal carrier compounds of the present invention and of potential use in electrochemical ligand extraction, transport, and generation processes according to the present invention are generally linear (as opposed to branched, macrocyclic, or tripod-type

ligands) and pentadentate. At least four of the atoms available for coordination to the selected transition metal ion (generally referred to herein as "ligating atoms") will be nitrogen. Hence, chelating ligands of the invention will generally be referred to as polyalkylamines, and will frequently be generically abbreviated "PAA." The remaining ligating atom, usually the third or central ligating atom, will usually be nitrogen or oxygen, although sulfur and phosphorus atoms may find use. The ligating nitrogens may be of the primary aliphatic, secondary aliphatic, tertiary aliphatic, or aromatic type; one or more such types of nitrogen may generally be present in the same polyalkylamine. Ligating oxygen, when present in a particular PAA, will usually be of the ether type, while ligating sulfur will be a thioether. The polyalkylamines of a type useful in the present invention will include those of the general formula:

$$R_1\text{-}(CH_2)_m\text{-}NH\text{-}(CH_2)_n\text{-}X\text{-}(CH_2)_o\text{-}NH\text{-}(CH_2)_p\text{-}R_2$$

where X may be 2,6-pyridyl, 2,6-piperidyl, 2,5-pyrrolyl, 2,4-imidazolyl, substituted heterocyclic amines, -O-, -S-, -P-, and -N-$R_3$ where R is hydrogen lower alkyl, or aralkyl; m, n, o, and p may each be equal to 1, 2, 3, or 4. $R_1$ and $R_2$ are each an organic group having a nitrogen atom of the primary aliphatic, secondary aliphatic, tertiary aliphatic, heterocyclic, or heteroaromatic type which is also available for coordination to a transition metal ion. As examples, $R_1$ and $R_2$ may each be selected from the group including, but not limited to, amino-, alkylamino-, dialkylamino-, 2-pyridyl, substituted 2-pyridyl such as 2-(6-methyl)pyridyl, 2-piperidyl, substituted 2-piperidyl, 2-imidazolyl, 4-imidazolyl, substituted 2-and 4-imidazolyl such as 2-(1-methylimidazolyl), 2-benzimidazolyl, and 2-(1-benzylimidazolyl), 2-pyrrolyl, alkyl-substituted 2-pyrrolyl, 2-pyrazinyl, 2-indolyl, 1-and 3-isoindolyl, 8-quinolinyl, 2-quinolinyl, and alkyl-substituted 2-and 8-quinolinyl. $R_1$ and $R_2$ may, in any particular polyalkylamine, be the same or different. In addition, the alkyl chains interconnecting the ligating atoms may themselves be branched or substituted with, e.g., short chain alkyl groups such as methyl, ethyl, n-or s-propyl, or n-, s-, or t-butyl, or with relatively small heterogroups such as acetyl, methyl acetyl, hydroxymethyl, hydroxyethyl, halomethyl, or haloethyl, where "halo-" denotes F, Cl, Br, or I.

Representative examples of specific polyalkylamine (PAA) compounds presently contemplated for use in the invention are listed in Table I. In Table I (and the remainder of the present disclosure), the compound numbers (PAA Nos.) have been arbitrarily chosen for ease of reference and have no independent significance; however, these compound numbers will be used in the following discussion to refer to particular compounds. The presently preferred polyalkylamines for use according to the invention are listed in Table II, along with literature abbreviations, where known, that have previously been used for particular polyalkylamines.

## EXAMPLE I

Preparation of 1,11-Bis(2-Pyridyl)-2,6,10-Triazaundecane 3HCl (PAA No.64)

Pyridine-2-carboxaldeyde (4.3 g, 0.04 mole) and 1,5,9-triazanonane (2.6 g, 0.02 mole) (bis-(aminopropyl) amine, available, for example, from Aldrich Chemical Company) were dissolved in ca. 60 mL of absolute ethanol and warmed (ca. 50° C) with stirring for 10 minutes. The solution was hydrogenated at room temperature over 1.5 g of 5% Pd on charcoal in an atmosphere of hydrogen. After the calculated amount of hydrogen (0.04 mole; ca. 0.90 L at 25° C and 1 atm. pressure) had been consumed, the charcoal catalyst was removed by filtration, and dry HCl gas was bubbled in to the solution until no further white precipitate formed. After removing the precipitate by filtration of the cooled solution, the product was washed with absolute ethanol, dried, and recrystallized from 95% ethanol.

The product was then dissolved in a minimum amount of a solution of about 70% v/v methanol and about 30% v/v concentrated ammonium hydroxide. This solution was chromatographed on a column of silica gel F254 using the same solvent mixture. The eluate containing the product was partially evaporated under vacuum with heating (ca.70-80°C), cooled, and filtered to remove the precipitated silica (dissolved from the column during chromatography), and then evaporated to dryness. The purified product was again recrystallized from 95% ethanol. The product could also be successfully purified by chromatography on silica gel using a solvent comprising about 66% chloroform, 5% triethylamine, and 29% methanol.

The following characterization of the product polyalkylamine trihydrochloride was obtained by standard

techniques: M.P. 263-65°C; UV (0.04 mg/ml in methanol): $g_{max}$ = 258.5 nm, $\epsilon_{max}$ = 5540; elemental analysis: theory: 51.12% C, 7.17% H, 16.56% N, 25.25% Cl; found: 50.83% C, 7.06% H, 16.45% N, 24.97% Cl; thin layer chromatography (TLC) on a silica gel F-254 plate, with methanol:ammonium hydroxide (10:3) solvent and UV/Iodine detection indicated a single spot with $R_f$ = 0.6.

EXAMPLE II

Preparation of 1,10-Bis-(2-Pyridyl)-2,5,9-Triazadecane 3HCl (PAA No. 72)

The preparation and purification of this polyalkylamine were accomplished by the procedure of Example I substituting 1,5,8-triazaoctane (2.3 g; 0.02 mole) ((aminoethyl)(aminopropyl)amine; available from Aldrich Chemical Company) for bis(aminopropyl) amine. The following characterization of the purified product by standard techniques was obtained: UV (0.04 mg/ml in methanol): $\lambda_{max}$ 259 nm, $\epsilon_{max}$ 5,500; elemental analysis: theory 49.73% C, 6.92% H, 17.06% N, 25.90% Cl; found (after correction for 0.2% water determined by Karl Fischer analysis) 49.48% C, 6.83% H, 17.01% N, 26.42% Cl. TLC analysis on silica gel F-254 with methanol:ammonium hydroxide solvent yielded a main spot at $R_f$ = 0.7 and a faint spot (<1%) at $R_f$ = 0.2.

EXAMPLE III

Preparation of 1,11-Bis(2-(1-Benzylimidazolyl))-2,6,10-Triazaundecane 3HCl (PAA No. 118)

The preparation and purification of this polyalkylamine was accomplished by the procedure of Example I, except that 1-benzylimidazole-2-carboxaldehyde (7.44 g, 0.04 mole) was substituted for pyridine-2-carboxaldehyde.

Table I

REPRESENTATIVE POLYALKYLAMINE LIGANDS

| PAA No. | $R_1$ | $R_2$ | X | m n o p | Alkyl Branch |
|---|---|---|---|---|---|
| 21 | 2-pyridyl | 2-pyridyl | 2,6-pyridyl | 1 1 1 1 | |
| 33 | amino | amino | -NH | 2 2 2 2 | |
| 62 | 2-pyridyl | 2-pyridyl | -NH | 1 2 2 1 | |
| 63 | 2-pyridyl | 2-pyridyl | 2,6-pyridyl | 2 1 1 2 | |
| 64 | 2-pyridyl | 2-pyridyl | -NH | 1 3 3 1 | |
| 68 | amino | amino | 2,6-pyridyl | 2 1 1 2 | A |
| 69 | amino | amino | 2,6-pyridyl | 2 1 1 2 | |
| 70 | amino | amino | 2,6-pyridyl | 3 1 1 3 | |
| 71 | 2-pyridyl | 2-pyridyl | -O- | 1 2 2 1 | |
| 72 | 2-pyridyl | 2-pyridyl | -NH | 1 2 3 1 | |
| 73 | 2-imidazolyl | 2-imidazolyl | -NH | 1 3 3 1 | |
| 74 | 4-imidazolyl | 4-imidazolyl | -NH | 1 3 3 1 | |
| 75 | 4-imidazolyl | 4-imidazolyl | -NH | 1 2 2 1 | |
| 76 | 2-pyridyl | 2-pyridyl | -N-CH3 | 1 3 3 1 | |
| 77 | 2-pyridyl | 2-pyridyl | -N-CH2CH3 | 1 3 3 1 | |
| 78 | 2-pyridyl | 2-pyridyl | -NH | 1 3 4 1 | |
| 79 | 2-BzIm | 2-BzIm | 2,6-pyridyl | 1 1 1 1 | |
| 80 | 2-(6-MePy) | 2-(6-MePy) | -NH | 1 2 2 1 | |
| 81 | 2-(6-MePy) | 2-(6-MePy) | -NH | 1 3 3 1 | |
| 82 | 2-pyridyl | 2-pyridyl | -NH | 1 3 3 1 | B |
| 83 | 2-pyridyl | 2-pyridyl | -NH | 1 3 3 1 | C |
| 84 | 2-pyridyl | 2-(6-MePy) | -NH | 1 2 2 1 | |
| 85 | 2-pyridyl | 2-(6-MePy) | -NH | 1 3 3 1 | |
| 86 | 2-pyridyl | 4-imidazolyl | -NH | 1 3 3 1 | |
| 87 | 2-pyridyl | 4-imidazolyl | -NH | 1 2 2 1 | |
| 88 | 2-pyridyl | 2-imidazolyl | -NH | 1 3 3 1 | |
| 89 | 2-imidazolyl | 4-imidazolyl | -NH | 1 3 3 1 | |
| 90 | 8-quinolinyl | 8-quinolinyl | -NH | 1 3 3 1 | |
| 91 | 8-quinolinyl | 8-quinolinyl | -NH | 1 2 2 1 | |
| 92 | 2-quinolinyl | 2-quinolinyl | -NH | 1 3 3 1 | |
| 93 | 2-quinolinyl | 2-quinolinyl | -NH | 1 2 2 1 | |
| 94 | 4-imidazolyl | 4-imidazolyl | 2,6-pyridyl | 2 1 1 2 | D |
| 95 | 4-(NbIm) | 4-(NbIm) | 2,6-pyridyl | 2 1 1 2 | D |
| 116 | 2-imidazolyl | 2-imidazolyl | -NH | 1 2 2 1 | |
| 117 | 2-(NbIm) | 2-(NbIm) | -NH | 1 2 2 1 | |
| 118 | 2-(NbIm) | 2-(NbIm) | -NH | 1 3 3 1 | |
| 119 | 4-imidazolyl | 4-imidazolyl | -NH | 1 2 3 1 | |

Abbreviations used:

2-(BzIm) = 2-benzimidazolyl;
2-(6-MePy) = 2-(6-methyl)pyridyl;
4-(NbIm) = 4-(1-benzyl)imidazolyl;
2-(NbIm) = 2-(1-benzyl)imidazolyl

Alkyl Branching:

A = carbons 1 and 1' are methyl substituted
B = carbons 1 and 9 are methyl substituted
C = carbons 1 and 11 are methyl substituted
D = carbons 1 and 1' are methyl substituted; carbons 3 and 3' are methyl acetylated

Table II

SELECTED POLYALKYLAMINE LIGANDS

| PAA No. | Name | Literature Abbreviation |
|---|---|---|
| 21 | 2,6-Bis(1-(3-(2-Pyridyl)-2-Azapropyl))Pyridine | DMPAP |
| 33 | 1,4,7,10,13-Pentaazatridecane | TETREN |
| 62 | 1,9-Bis(2-Pyridyl)-2,5,8-Triazanonane | PYDIEN |
| 63 | 2,6-Bis(1-(4-(2-Pyridyl)-2-Azabutyl))Pyridine | |
| 64 | 1,11-Bis(2-Pyridyl)-2,6,10-Triazaundecane | PYDPT |
| 68 | 2,6-Bis(5-(1,4-Diazahexyl))Pyridine | EPYDEN |
| 69 | 2,6-Bis(5-(1,4-Diazapentyl))Pyridine | |
| 70 | 2,6-Bis(6-(1,5-Diazahexyl))Pyridine | |
| 72 | 1,10-Bis(2-Pyridyl)-2,5,9-Triazadecane | |
| 73 | 1,11-Bis(2-Imidazolyl)-2,6,10-Triazaundecane | 2-IMDPT |
| 74 | 1,11-Bis(4-Imidazolyl)-2,6,10-Triazaundecane | 4-IMDPT |
| 75 | 1,9-Bis(4-Imidazolyl)-2,5,8-Triazanonane | 4-IMDIEN |
| 76 | 1,11-Bis(2-Pyridyl)-6-Methyl-2,6,10-Triazaundecane | |
| 78 | 1,12-Bis(2-Pyridyl)-2,6,11-Triazadodecane | |
| 80 | 1,9-Bis(2-(6-Methylpyridyl))-2,5,8-Triazanonane | |
| 81 | 1,11-Bis(2-(6-Methylpyridyl))-2,6,10-Triazaundecane | |
| 92 | 1,11-Bis(2-Quinolinyl)-2,6,10-Triazaundecane | |
| 93 | 1,9-Bis(2-Quinolinyl)-2,5,8-Triazanonane | |
| 116 | 1,9-Bis(2-Imidazolyl)-2,5,8-Triazanonane | |
| 117 | 1,9-Bis(2-(1-Benzylimidazolyl))-2,5,8-Triazanonane | |
| 118 | 1,11-Bis(2-(1-Benzylimidazolyl))-2,6,10-Triazaundecane | |
| 119 | 1,10-Bis(4-Imidazolyl)-2,5,9-Triazadecane | |

The carrier compounds may be coordination complexes of any of a variety of transition metals including titanium, manganese, chromium, iron, cobalt, nickel, copper, ruthenium, rhodium, palladium, osmium, iridium, and platinum; usually, the transition metal will be manganese, iron, or cobalt, but the invention is not so limited. Other transition metals that form complexes that reversibly bind molecular oxygen may also be used; complexes of such metals are contemplated to be within the scope of the present invention. The primary requisites of the transition metal are that it form complexes, have a first valence state in which the transition metal complex reversibly binds molecular oxygen or another ligand of interest, and have a second valence state in which the transition metal complex has a substantially lower affinity toward molecular oxygen or other ligand. Preferably, the metal is chosen to be, in its second valence state, substantially unreactive with molecular oxygen or other ligand of interest. In addition, the valence state of the transition metal(s) used will be electrochemically modulable. In known transition metal complexes which will be suitable for use, the valence state in which oxygen is reversibly bound will be lower (more reduced), e.g.,

Mn(II), Fe(II), Co(II) or Cu(I); this lower valence state will be generally referred to herein as the "binding state." The non-binding valence state (generally referred to herein as the "non-binding state") will generally be higher and achieved via a one electron oxidation of the lower valence state, e.g., Mn(III), Fe(III), Co(III), or Cu(II).

The carrier compounds according to the present invention comprise, generally, ions of one of the above transition metals reacted with a polyalkylamine chelating ligand. The carrier compounds may be prepared and isolated as will be outlined below. Alternatively, since many of the polyalkylamines according to the present invention have a very high affinity for metal ions such as cobaltous ion, suitable carrier compounds may be prepared in situ during the preparation of carrier solutions for the extraction, transport, and regeneration of small ligands, e.g., molecular oxygen. Preparation of carrier compounds in situ is accomplished in such instances by the addition of equimolar amounts of the metal ion, e.g., 1 millimole/liter $Co^{2+}$, and polyalkylamine e.g., 1 mM/L PAA, to a particular carrier fluid.

Carrier compounds useful in the present invention will thus have the general formula $M(PAA)^{n+}$, where M is a transition metal ion and PAA is a pentadentate polyalkylamine ligand. The charge on the carrier compound will depend on the valence state of the metal ion, the extent of ionization of the polyalkylamine, the pH of the carrier solution, etc. Sufficient counterions will accompany carrier compounds (whether as solids or in solution) to counterbalance this charge. The counterions will usually be anions and will be both chemically and electrochemically unreactive under the conditions to be employed for extraction, transport, or regeneration of molecular oxygen. Counteranions will typically be small, unreactive anions such as: halide ions, e.g., fluoride, chloride, bromide, or iodide; oxyanions, e.g., nitrate, sulfate, or phosphate; or organic ions, e.g., acetate or citrate. For convenience, the carrier compounds may be designated herein M-(PAA); it will be understood that this designation will include both charged and uncharged carrier compounds and that charged carrier compounds will be understood to be accompanied by suitable counterions. Carrier compounds according to the present invention will thus generally be metallic complexes having the general formula:

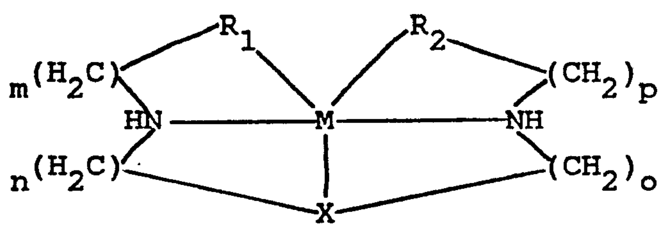

where X may be 2,6-pyridyl, 2,6-piperidyl, 2,5-pyrrolyl, 2,4-imidazolyl, substituted heterocyclic amines, -O-, -S-, -P-, and -N-$R_3$ where R is hydrogen lower alkyl, or aralkyl; and m, n, o, and p may each be equal to 1, 2, 3, or 4. $R_1$ and $R_2$ are each an organic group having a nitrogen atom of the primary aliphatic, secondary aliphatic, tertiary aliphatic, heterocyclic, or heteroaromatic type which is also available for coordination to a transition metal ion; as examples, $R_1$ and $R_2$ may each be selected from the group including, but not limited to, amino-, alkylamino-, dialkylamino-, 2-pyridyl, alkyl-substituted 2-pyridyl such as 2-(6-methyl)pyridyl, 2-piperidyl, alkyl-substituted 2-piperidyl, 2-imidazolyl, 4-imidazolyl, alkyl-substituted 2-and 4-imidazolyl such as 2-(N-methylimidazolyl) and 2-(N-benzylimidazolyl), 2-pyrrolyl, alkyl-substituted 2-pyrrolyl, 2-pyrazinyl, 2-indolyl, 1-and 3-isoindolyl, 8-quinolinyl, 2-quinolinyl, and alkyl-substituted 2-and 8-quinolinyl. $R_1$ and $R_2$ may, in any particular polyalkylamine, be the same or different. the alkyl chains interconnecting the ligating atoms may themselves be branched or substituted with, e.g., short chain alkyl groups such as methyl, ethyl, n-or s-propyl, or n-, s-, or t-butyl, or with relatively small heterogroups such as acetyl, methyl acetyl, hydroxymethyl, hydroxyethyl, halomethyl, or haloethyl, where "halo-" denotes F, Cl, Br, or I. M is an ion of a metal selected from the titanium, manganese, chromium, iron, cobalt, nickel, copper, ruthenium, rhodium, palladium, osmium, iridium, and platinum; usually, M will be manganese, iron, or cobalt; most frequently, M will be cobalt.

EXAMPLE IV

Preparation of $[Co(II)(1,11\text{-Bis}(2\text{-}(1\text{-Benzylimidazolyl}))\text{--}2,6,10\text{-Triazaundecane})]Cl_2$ ($Co(PAA)Cl_2$, with PAA No. 118)

Cobalt (II) chloride hexahydrate (2.4 g, 0.01 mole) and 1,11-Bis(2-(1-Benzylimidazolyl))-2,6,10-Triazaundecane 3HCl from Example III (4.7g, 0.01 mole) are separately dissolved under a nitrogen atmosphere in deoxygenated water, slowly mixed together under nitrogen and precipitated with deoxygenated acetone addition. After stirring for ca. 1 hour at room temperature, the pink product is removed by filtration, washed with deoxygenated ethanol, and dried.

The dimeric oxygen complex $[Co(PAA)_2]O_2Cl_4$, can be obtained by exposing the above solutions to oxygen, with stirring, and evaporating the solvent.

The polyalkylamine carrier compounds according to the present invention may form both monomeric and dimeric complexes with molecular oxygen, although typically the dimeric complex is more readily and frequently observed. Using cobalt carrier compounds as an example, the following equilibria may generally observed in aqueous solution, depending on such factors as the pH of the carrier fluid, the identities and relative concentrations of the various species, the temperature, and the solvent.

$$PAA + Co^{2+} = Co(PAA)^{2+} \quad (1)$$

$$Co(PAA)^{2+} + H^{+} = Co(PAAH)^{3+} \quad (2)$$

$$Co(PAA)^{2+} + O_2 = Co(PAA)(O_2)^{2+} \quad (3)$$

$$Co(PAA)(O_2)^{2+} + Co(PAA)^{2+} = [Co(PAA)]_2O_2^{4+} \quad (4)$$

$$2\ Co(PAA)^{2+} + O_2 = [Co(PAA)]_2O_2^{4+} \quad (5)$$

Reactions (1) and (2) are characterised by the equilibrium constants $K_{ML}$ and $K_{MLH}$, given by:

$$K_{ML} = [Co(PAA)^{2+}] / [PAA] [Co^{2+}] \quad (6)$$

and

$$K_{MLH} = [Co(PAAH)^{3+}] / [Co(PAA)^{2+}] [H^{+}]. \quad (7)$$

For the carrier compounds according to the present invention, usually only the dimeric oxygen complex is observed in solution, so that the equilibrium between oxygen and carrier compound is effectively characterized by $K_{app.\,O2}$, given by:

$$K_{app.O2} = [[Co(PAA)]_2O_2^{4+}]/[Co(PAA)^{2+}]^2 [O_2]. \quad (8)$$

In addition, each of the ligating nitrogen atoms of the polyalkylamines can be protonated (at increasingly acidic pH):

$$PAA + nH^{+} = PAA(H^{+})_n; \quad (9)$$

the equilibrium constants for successive protonations of the PAA compounds are defined by

$$K_{H_i} = [PAA(H^{+})_i] / [PAA(H^{+})_{i-1}] [H^{+}]. \quad (10)$$

Each of the above disclosed carrier compounds will be useful in the electrochemical extraction, transport, and generation of oxygen and other small ligands according to the methods of the present invention. However, the selection of particular carrier compounds according to the invention for optimization of the practice of the methodology and processes depends on a variety of factors. Further, the carrier compound preferred for a particular apparatus and process will depend on the characteristics and operating environment of the apparatus and associated power supplies and sources, fluid media used to supply ligand, the intended use of the extracted ligand, and other considerations. Generally, the characterization of carrier compounds and selection of particular carrier compounds entail several levels of experimentation, which will now be described. Although the following will make particular reference to oxygen binding to cobalt complexes of particular polyalkylamines, it is understood that the invention is not so limited.

## EXAMPLE V

UV - Visible Spectroscopy

Initially, solutions of particular carrier compounds are monitored by UV-visible spectroscopy to determine whether the carrier compound forms oxygen complexes of sufficient stability as to be potentially useful in processes according to the present invention. UV-visible spectra of carrier compounds are also observed as a function of the pH to determine the pH range, if any, over which the carrier compounds binds oxygen without decomposition. The initial pH for use in further experiments (the "Working pH") is defined as one pH unit above that at which the proportion of carrier compound-oxygen complex is about 90% or more of the maximum formed under ca. 0.2 atm oxygen, as determined by this spectroscopic examination. At this working pH, the formation of oxygen complex of cobalt carrier compounds, when the cobalt carrier compound is exposed to molecular oxygen, is heavily favored; in addition, the pH is generally low enough at the working pH to avoid decomposition of the particular carrier compound or spontaneous oxidation of the cobalt ion. This working pH is an initial estimate of a pH for the carrier fluids and practice of the methods of the invention. Experimentation involving varying the pH of the carrier fluids may indicate a more efficacious pH for actual use in the methods. Usually, the pH will be chosen such that at least half of the maximal concentration of carrier compound oxygen complex is formed, more usually, the pH is selected so that at least 75% of the maximal concentration is formed, and preferably the pH is selected so that 90% or more of the maximal proportion of oxygen complex is present, all under a pressure or partial pressure of ca. 0.2 atm oxygen. An initial working pH can also be determined from potentiometric experiments on the oxygen complexes of cobalt carrier compounds, as will be discussed below.

1. Procedure

The necessary UV and visible spectra necessary for this evaluation are obtained with any of a variety of commercially available spectrophotometers. The solution to be measured is prepared in or transferred to a suitable quartz cell with provision for the exclusion of oxygen. This solution contains the cobalt carrier compound of interest in a concentration calculated to yield a level of absorbance at, e.g., 330 nm, commensurate with the range of the particular instrument in use, and will be appropriately buffered or otherwise adjusted to the desired pH. Spectra are then recorded under both oxygen free and oxygenated conditions at each of the desired pH values.

2. Results

Typical results from the spectrophotometric evaluation of cobalt carrier compounds are shown in Fig. 1. Generally, with increasing pH, an increasingly greater proportion of the cobalt complex is present as the oxygen complex, which is identified by a characteristic absorbance maximum (for cobalt complexes of the type of interest here) at about 330 nm. As the pH is increased further, a decrease in absorbance at this wavelength is observed, indicating a decreasing amount of the oxygen complex of interest due to, most likely, decomposition of the carrier compound, oxidation of the metal ion such that oxygen binding no longer occurs, or other reasons. For example, the Co(II) complex of PAA No. 21, abbreviated in the literature as DMPAP, has been determined to be relatively unsatisfactory for use in the molecular oxygen extraction and generation processes of the invention due to relatively rapid, irreversible oxidation of the cobalt ion to Co(III), which does not bind oxygen. From the results of such spectrophotometric analysis, the cobalt complex of PAA No. 76 does not appear to bind oxygen under conditions of interest here.

## EXAMPLE VI

Potentiometric Experiments

Where spectrophotometric characterization of a particular cobalt carrier compound has proven satisfactory, both the polyalkylamine and the cobalt carrier compound are characterized by a set of potentiometric pH titrations to determine the basicity of the ligating atoms, the formation constants $K_{ML}$ and $K_{MLH}$, and the apparent oxygen binding equilibrium constants.

1. Procedure

Potentiometric titrations are performed using a Fisher or Cole-Palmer pH meter in a sealed, jacketed glass cell equipped with glass and calomel electrodes and with provision for performing measurements under oxygen-free conditions. The cell is kept at a constant temperature of 25 ±0.1° C by circulating water from a thermostatted bath through the cell jacket. The electrodes and pH meter are standardized with commercially available standard buffer solutions (Fisher Scientific). The polyalkylamine ligands and cobalt carrier compounds were each titrated potentiometrically by incrementally adding standard potassium hydroxide solution and recording the pH of the solution after each addition of base. Titrations of the cobalt carrier compounds are carried out under prepurified nitrogen or argon; titrations of oxygenated carrier compounds are performed under oxygen treated with Ascarite to remove carbon dioxide.

All solutions contained ca. 1.5 mM PAA; for titrations of cobalt complexes, the solutions contained, in addition, 1.5 mM $CoCl_2$.

2. Results

Typical results obtained as outlined above from pH titrations of selected polyalkylamines, cobalt carrier compounds, and oxygen complexes of cobalt carrier compounds are graphically depicted in Figs. 2, 3, and 4, and summarized in Table III. The values shown in Table III, defined by equations (6)-(8) and (10), above, were derived either by direct measurement from the titration curves obtained, or determined by the iterative best fit of the data to a computer program such as that described by Harris, et al., Inorganic Chemistry, vol. 17, p. 889, 890 (1978). Generally, although the latter values are considered to be more reliable, values obtained by either method are approximately the same and sufficient for the present evaluation.

Table III

POLYALKYLAMINE BASICITY AND BINDING TO COBALT

| PAA NO. | Log $K_1$ | Log $K_2$ | Log $K_3$ | Log $K_4$ | Log $K_5$ | Log $K_{MLH}$ | Log $K_{ML}$ | Log $K_{O2}$ | Ref. |
|---|---|---|---|---|---|---|---|---|---|
| 21 | 7.55 | 6.86 | 3.2 | 2.9 | --- | --- | 14.8 | * | 2 |
| 21 | 7.74 | 6.69 | 2.95 | --- | --- | --- | --- | --- | 3 |
| 33 | 9.85 | 9.27 | 8.19 | 5.08 | 3.43 | 5.40 | 13.66 | 15.83 | 1 |
| 62 | 8.88 | 7.04 | 3.82 | 1.44 | --- | 2.28 | 14.73 | 11.4 | 1 |
| 62 | 8.91 | 6.95 | 3.64 | --- | --- | --- | --- | --- | 3 |
| 63 | 8.75 | 7.61 | 3.81 | --- | --- | --- | --- | --- | 3 |
| 64 | 9.92 | 7.63 | 6.76 | 1.79 | --- | 4.42 | 11.47 | 7.7 | 1 |
| 64 | 9.54 | 7.44 | 6.34 | --- | --- | --- | --- | --- | 3 |
| 69 | 9.31 | 8.6 | 5.9 | 4.74 | --- | --- | --- | --- | 3 |
| 72 | 8.6 | 6.75 | 4.76 | --- | --- | --- | --- | --- | 3 |
| 73 | 9.76 | 7.22 | 6.51 | 3.92 | 3.29 | --- | 11.55 | 8.63 | 4 |
| 74 | 10.12 | 8.62 | 7.36 | 4.51 | 3.82 | 3.99 | 11.36 | 9.49 | 4 |
| 74 | 9.75 | 8.58 | 7.2 | 4.75 | 3.75 | --- | --- | --- | 3 |
| 75 | 9.22 | 8.18 | 4.91 | 3.90 | 2.92 | 3.33 | 13.84 | --- | 4 |
| 75 | 9.15 | 8.03 | 4.92 | 3.91 | --- | --- | --- | --- | 3 |
| 76 | 9.15 | 7.20 | 5.79 | 3.40 | --- | --- | --- | ** | 3 |
| 78 | 9.36 | 7.69 | 6.60 | --- | --- | --- | --- | --- | 3 |
| 80 | 8.52 | 6.72 | 4.1 | 3.28 | 2.86 | --- | --- | --- | 3 |
| 81 | 9.44 | 7.40 | 6.25 | 3.40 | --- | --- | --- | --- | 3 |

References:


1. Harris, et al., Inorganic Chemistry, vol. 17, 889-94 (1978);
2. Gruenwedel, Inorganic Chemistry, vol. 7, 495-501 (1968);
3. determined by applicants.
4. Timmons, et al., Inorganic Chemistry, vol. 17, 2192-97 (1978)


Notes:
*Oxygen complex is unstable.
**No oxygen complex observed.

An appropriate "Working pH" can also be derived from the potentiometric titration data obtained with the oxygenated $Co(PAA)^{n+}$ complexes. The working pH is, as described above, the pH at which 90% or more of the cobalt carrier compound is present in solution as the oxygen complex, and is about one pH unit greater than the apparent $pK_a$ obtained from the potentiometric titration curve (the pH at the midpoint of the pH titration). Fig. 5 graphically depicts the working pH values obtained in this way for several cobalt carrier compounds, along with the pH values for the endpoints of the titrations of the unoxygenated and oxygenated cobalt carrier compounds.

From the $K_{O_2}$ values, the change in the free energy for the oxygenation of the cobalt carrier compounds and thus the minimum power requirements for the electrochemical release of oxygen can be calculated. For the overall equilibrium given by equation (5) above, the standard free energy in calories/mole is given by

$$\Delta G^\circ = - RT \ln K_{O_2} = -nFE^\circ_{O_2} \qquad (11)$$

where:

T is the temperature in Kelvins; R is a constant of 1.987 cal/mole - K; F = 96,487 C/mole; $K_{O_2}$ is given by equation (8); and $E^\circ_{O_2}$ is the standard potential for the reaction of equation (5). For a two electron process (n = 2), RT/nF = 0,01285 V. For non-standard states (i.e. where the chemical activities of the species in solution are not equal to one):

$$\Delta G = \Delta G^\circ + RT \ln Q \qquad (12)$$

and

$$E_{O_2} \; -E^\circ_{O_2} \; + RT/nF \ln Q = 0.01285 \ln (K_O/Q) \qquad (13)$$

where the concentrations actually present in solution are used to caloulate Q from $Q = [(Co(PAA))_2O_2] / [Co(PAA)]^2 [O_2]$. (14)

Assuming the total carrier compound concentration is initially 0,1 mole/liter, that half of the cobalt ion is oxidized electrochemically to release oxygen, and that the resulting concentration of oxygen (in solution) is 1.5 mM, for the carrier compound equilibrium of equation (5),

$$Q = (0.25x) / (A-0.5x)^2 [O_2] \qquad (15)$$

where A is the initial carrier compound concentration and x is A times the percentage of carrier compound which is present as the oxygen complex, the minimum voltage, E, for the process can be determined. If the total oxygen to be released is 1 L/min, the total current, I, required is 71.8 n amperes, where n is the number of electrons per oxygen released, and the minimum power, in Watts, required is given by P = 71.8 n E. This is the minimum power required, and neglects such factors are parasitic power losses due to the resistance of the carrier fluid. Calculations of the voltage and power required for various dimeric cobalt carrier compounds indicate required cell voltages between about 100 and about 400 mV and power requirements of between about 15 W/L and about 50 W/L of $O_2$ released per minute.

## EXAMPLE VII

### Electrochemical Experiments

Further characterization by cyclic voltammetry and coulometry is performed for those cobalt carrier compounds that exhibit suitable oxygen binding properties and the identification of cobalt carrier compounds for which electrical operating parameters, such as the voltage and current requirements of apparatus for practicing the methods of the present invention would be most convenient with minimum actual power consumption.

1. Procedures

Cyclic voltammetry experiments were performed under nitrogen or air for the unoxygenated or oxygenated carrier compounds, respectively, in a cell having a platinum wire auxiliary electrode, a silver-silver chloride reference electrode, and a suitable working electrode. The potential between the auxiliary and working electrodes was varied with a Princeton Applied Research (Princeton, N.J.) Scanning potentiostat at 50 mV/s from a suitable $E_{initial}$, with a suitable initial scan direction (Scan Dir.), depending on the electrochemical potentials of interest. All solutions contained 1 mM $CoCl_2$, 1 mM or 1.5 mM PAA, and a supporting electrolyte, and were adjusted to a suitable pH, usually about the initial working pH.

Cyclic voltammetry enables the estimation of anode ($E_{P_A}$) and cathode ($E_{P_C}$) half cell potentials, the cell potential, $\Delta E = (E_{P_A} - E_{P_C})$, and an approximate formal reaction potential $E° = (E_{P_A} - E_{P_C})/2$. In addition, estimates of the rate of electron transfer to a particular electrode and the electrochemical reversibility of the reaction can be obtained. However, cyclic voltammetry experiments do not show whether or to what extent molecular oxygen is released.

Coulometry techniques allow the determination of the relative energetics and rates of oxygen release. For such experiments, solutions similar to those outlined above for cyclic voltammetry are placed in a three-electrode electrolysis cell equipped with a Clarke-type oxygen probe. The carrier compound is electrochemically reduced, oxygenated, and then reoxidized by the application of a series of oxidizing potentials. Each such oxidizing potential is held constant with respect to a silver-silver chloride reference electrode. The resulting current is integrated over time to yield the amount of carrier compound oxidized. By employing the same electrode geometry, solution volume, and stirring rate, information about the relative rate and amount of oxygen release (the "$O_2$ rate") can be determined, at a particular applied cell voltage, $E_{app}$, from the response of the oxygen probe.

The expected amount of oxygen evolved is given by one-half the total integrated charge through the cell divided by F = 96,484 C/mole, since, theoretically, 2 electrons are required to oxidize two cobalt ions and release one oxygen molecule. The ratio of this figure to the actual amount of oxygen produced is "% $O_2$ max.", at the minimum voltage, $V_{min}$, required to produce oxygen. In addition, the "voltage window," the difference between the anodic oxygen evolution and cathodic reduction potentials, is measured.

2. Results

A typical cyclic voltammetry trace, for the oxygenated Co(II) complex of PAA No. 72 using a glassy carbon electrode, is shown in Fig. 6. Results for several cobalt carrier compounds are summarized in Table IV. Coulometry data for several cobalt carrier compounds is summarized in Table V. The coulometric data reported on the averages of 325 experiments. The standard deviations for $O_2$ rate were +/- 0.36 microliters per minute.

Table IV

SUMMARY OF CYCLIC VOLTAMMETRY DATA OF $Co(PAA)^{n+}$ CARRIER COMPOUNDS

| PAA No. | [PAA], mM | pH | Buffer | Type | Electrode | $E_{initial}$, V | Scan Dir. | E°, V | ΔE, V | $E_{P_A}$, V | $E_{P_C}$, V |
|---|---|---|---|---|---|---|---|---|---|---|---|
| 33 | 1.5 | 9.0 | 1 | deox | C | -0.3 | + | -0.39 | 0.12 | -0.33 | -0.45 |
| 33 | 1.5 | 9.0 | 1 | ox | C | -0.3 | + | * | 1.2 | 0.7 | -0.5 |
| 62 | 1.5 | 3.0 | 2 | deox | G | -0.3 | + | -0.05 | 0.1 | 0.0 | -0.1 |
| 62 | 1.0 | 9.0 | 3 | ox | G | +0.12 | + | * | 1.3 | 0.75 | -0.55 |
| 64 | 1.0 | 7.6 | 4 | deox | G | -0.3 | + | -0.05 | 0.85 | 0.4 | -0.45 |
| 64 | 1.0 | 7.6 | 2 | ox | G | +0.3 | + | * | 1.2 | 0.08 | -0.4 |
| 72 | 1.0 | 5.93 | 2 | deox | C | +0.1 | + | -0.02 | 0.11 | 0.03 | 0.66 |
| 72 | 1.0 | 5.93 | 2 | ox | C | +0.1 | + | * | 0.73 | 0.66 | -0.07 |
| 78 | 1.0 | 10.1 | 2 | deox | C | +0.15 | - | 0.14 | 0.08 | 0.18 | 0.1 |
| 78 | 1.0 | 10.1 | 2 | ox | C | +0.1 | + | 0.12 | 0.13 | 0.185 | 0.055 |
| 69 | 1.0 | 3.0 | 2 | ox | C | -0.05 | + | * | 0.7 | 0.5 | -0.2 |
| 63 | 1.0 | 6.0 | 2 | ox | C | +0.1 | + | * | N.O. | N.O. | N.O. |
| 76 | 1.0 | 12.0 | 2 | ox | C | +0.19 | - | * | 0.6 | 0.25 | -0.35 |

[PAA] = Polyalkylamine concentration, milliMoles/L

Buffer:
1 = 0.5 M NaCl, 0.1 M Borate
2 = 0.5 M KCl, 0.1 M $K_2HPO_4$
3 = 0.5 M NaCl, 0.1M Borate
4 = 0.5M NaCl, 0.1M $K_2HPO_4$

Type: deox = unoxygenated carrier compound
ox = oxygenated carrier compound

$E_{initial}$: volts v. Ag/AgCl reference electrode.

Electrode: C = glassy carbon electrode
G = gold

N.O. = not observed due to low electrochemical activity.

*Cyclic voltammetry does not provide an accurate E° value for oxygenated complexes; spectroelectrochemical or potentiometric methods are preferred.

TABLE V

COULOMETRY DATA FOR SELECTED COBALT PAA CARRIER COMPOUNDS

| PAA No. | $E_{App}$, V | $O_2$ Rate (µl/min) | $\%O_2$ max | $V_{min}$ | Voltage Window |
|---|---|---|---|---|---|
| 33 | 0.75 | 0.92 | 13 | 0.5 | 1.0 |
| 62 | 0.75 | 1.22 | 9 | 0.5 | 0.9 |
| 64 | 0.65 | 1.68 | 7 | 0.2 | 0.6 |
| 72 | 0.7 | 1.11 | 6 | 0.35 | 0.75 |
| 73 | 0.7 | 0.7 | 31 | 0.5 | 0.65 |
| 75 | 0.7 | 1.2 | 29 | 0.5 | 0.6 |
| 78 | 0.5 | 0.78 | 16 | 0.2 | 0.55 |
| 118 | 0.75 | 1.56 | 11 | 0.5 | 0.75 |

Fig. 7 shows in schematic form the operation of an idealized apparatus for use in accordance with the processes of the present invention in combination with an oxygen loading device of unspecified character. Oxygen is presumed to be the ligand in this illustration. The essential characteristics of the apparatus of the invention include a container 1 which communicates with an external environment 2 from which oxygen is to be extracted through a gas permeable membrane 3 and with an internal environment 2′ into which oxygen is to be transported by means of a second gas permeable membrane 3. The remaining portion of the container wall in the embodiment shown is impermeable to gas, but in other embodiments is not so limited. Within the confines of container 1 is a fluid 5 which contains oxygen binding carrier compound 6. For purposes of illustration, the binding state is shown as a reduced oxidation state. In an oxygen loading compartment 4, oxygen becomes bound to oxygen carrier compound 6a (the reduced form of compound 6) to form a bound-oxygen complex 7. Complex 7 is transported along with fluid 5 to a compartment 4 where oxygen is unloaded (dissociated) from the oxygen carrier compound to which it is bound by oxidation of the reduced state oxygen carrier compound 6a to the oxidized state oxygen carrier compound 6b at anode 8 to produce free oxygen and free oxidized oxygen carriers 6b. The oxygen is separated from the oxygen carrier compound, in the embodiment shown, by diffusion through gas permeable membrane 3′. The fluid 5 containing the free oxidized oxygen carrier compound 6b is then circulated past cathode 10 where oxidized state oxygen carrier 6b is reduced to reduced state oxygen carrier compound 6a. Carrier fluid 5 containing reduced carrier compound 6a is then circulated back to compartment 4 where the process is repeated.

One apparatus for bench scale or laboratory scale evaluation of particular carrier compounds for use in practicing the methods according to the invention is illustrated schematically in Fig. 8. This electrochemical oxygen cell (EOC), designated 20, includes generally an oxygen loader 22, an electrochemical cell 24 having an anode compartment 26 and a cathode compartment 28 separated by an ion permeable membrane 30 and an unloader 32. Carrier fluid is circulated through loader 22, anode compartment 26, unloader 32, cathode compartment 28 and back to loader 22 using the pump 34 with appropriate plastic or glass conduit.

The carrier fluids suitable for use in, for example, electrochemical oxygen cell 20 comprise a carrier compound in a concentration between or about 1 mM and 700 mM, usually between about 10 and 500 mM, and most usually between about 50 and about 400 mM. Carrier fluids comprising carrier compounds according to the present invention are preferably aqueous and include in addition an electrolyte, e.g., sodium chloride, potassium chloride, sodium nitrate, potassium sulfate, at a concentration of between about

0.1 M (moles/liter) and about 4.0 M, usually about 0.5 to 1.5 M. The carrier fluids may be titrated or buffered to the desired pH; buffer salts such as sodium borate, potassium phosphate, sodium phosphate, etc. may be used depending upon the pH desired, the availability of particular salts, and compatibility of particular buffer salts with particular carrier compounds. The buffer salt(s) are generally present in concentrations of between about 10 mM and about 0.5 M, usually between about 50 mM and 100 mM.

Loader 22 is, for example, a microporous hydrophobic hollow fiber membrane array such as that which will be described more fully below in connection with Fig. 9. Suitable membrane arrays are manufactured by Bard Cardiosurgery, Inc. of Concord, California. These membrane arrays are typically modified to allow fluid flow both inside and outside the hollow fibers in a manner that will apparent to those skilled in the art.

Cell 24 includes a pair of titanium current collector plates 36, 38, which press against two electrodes 40, 42. Typically, electrodes 40, 42 are carbon felt electrodes, in one example of the cell 24, having dimensions of about 25 cm. × 10 cm. × 0.5 cm. Electrodes 40, 42, and thus anode compartment 26 in cathode compartment 28, are separated by membrane 30 which is an ion permeable membrane made, for example, of Celgard or NAI anionic exchange membrane. Cell 24 is assembled in a plexiglass housing (not separately shown) having two halves which are bolted together and sealed with an O-ring or gasket seal (not shown). Cell 24 includes the necessary ports for introducing and removing carrier fluids from anode compartment 26 and cathode compartment 28. Cell 24 further includes ports for insertion of reference electrodes 44, 46 which are conveniently, but not necessarily, silver-silver chloride reference electrodes. Current collector plates 36, 38 are connected via titanium posts 48, 50 to a potentiostat (not shown) capable of supplying either a constant or variable current or voltage to cell 24. Suitable potentiostats are available, for example, from Princeton Applied Research, Princeton, New Jersey. Unloader 32, in the embodiment shown in Fig. 8 includes a cylindrical fluid gas separation chamber 52, equipped with a sweep gas bubbler 54 near the bottom thereof and an exit port at the top thereof. Alternatively, unloader 32 may be a hollow fiber device such as that described above in connection with loader 22.

In operation, carrier fluid is circulated through loader 22 where it is exposed, through the ligand permeable membrane, to the fluid from which oxygen is to be extracted. In the typical laboratory scale electrochemical oxygen cell 20, carrier fluid is oxygenated using air as the external fluid. The carrier fluid is circulated through anode compartment 26, where it is oxidized to dissociate bound oxygen, and then to unloader 32, where the dissociated oxygen is removed by the sweep gas. In some cases, no sweep gas is used; evolved oxygen may then be measured directly. The deoxygenated carrier fluid is thereafter circulated through cathode compartment 28, where the carrier compound is reduced, and then back to loader 22 for repetition of the cycle.

The concentration of oxygen present in the carrier fluid is measured at several points with oxygen probes 56, 58, 60. A flow meter (not shown) is used to measure the recirculation of carrier fluid through electrochemical oxygen cell 20. In addition, the cathode and anode potentials are measured with respect to reference electrodes 44, 46, respectively, and the current through cell 24 is monitored by means that will be apparent to those skilled in the art. The flow rate of the gas stream is monitored as is the concentration of oxygen in the gas outlet with a fourth oxygen probe 62, so that oxygen extraction and release may be quantitated. Oxygen probes 56, 58, 60, 62 are Clarke-type oxygen probes, operable to produce an electrical potential proportional to the oxygen concentration ambient to the probe. Oxygen probe 56 monitors the loading process; probe 58 monitors the oxygen evolved in anode compartment 26. Oxygen probe 60 is used to monitor the efficiency of the unloading process and unloader 32.

Preferably, the signals from oxygen probes 56, 58, 60, 62, the flow rates of the carrier fluid and the exiting gas, the potentials of the anode and cathode plates 48, 50 with respect to electrodes 44 and 46, and the current through cell 24 are all simultaneously monitored, digitized, and stored in a computer for later analysis.

Typically, this data and the carrier compound concentration, carrier fluid flow rate, and the applied cell voltages, are analyzed to derive the rate of oxygen production, the power consumed by cell 20, and the number of electrons flowing through cell 20 to produce one molecule of oxygen. Generally, it is preferred that power and the average number of electrons passed per molecule of oxygen produced should be minimized, while the rate of oxygen production should be maximized. Results for selected cobalt carrier compounds are given in Table VI.

TABLE VI

ELECTROCHEMICAL OXYGEN CELL
RESULTS FOR COBALT CARRIER COMPOUNDS

| PAA No. | [PAA], mM | Flow*1 (mL/min) | pH | E, V*2 | EC $0_2$*3 ml/min. | Power*4 W/L/min. | e-/$0_2$*5 |
|---|---|---|---|---|---|---|---|
| 33 | 10 | 30 | 6 | 1.6 | 0.284 | 839 | 7.3 |
| 33 | 110 | 50 | 6 | 1.6 | 2.0 | 259 | 2.3 |
| 62 | 10 | 30 | 3 | 0.9 | 0.143 | 178 | 2.5 |
| 62 | 10 | 30 | 3 | 1.6 | 0.5 | 580 | 4.9 |
| 62 | 100 | 30 | 4 | 0.9 | 1.15 | 158 | 2.3 |
| 62 | 100 | 30 | 4 | 1.6 | 1.7 | 550 | 4.8 |
| 62 | 100 | 120 | 4 | 1.6 | 3.76 | 260 | 2.3 |
| 62 | 100 | 100 | 4 | 0.5 | 0.082 | 99.2 | 2.5 |
| 62 | 75 | 95 | 5 | 0.5 | 0.081 | 86.2 | 2.4 |
| 62 | 162 | 68 | 3 | 0.5 | 0.133 | 99.5 | 2.7 |
| 64 | 10 | 30 | 7 | 0.9 | 0.104 | 854 | 13 |
| 64 | 10 | 30 | 7 | 1.6 | 0.279 | 570 | 5.15 |
| 64 | 167 | 138 | 10.12 | 0.5 | 0.341 | 99.5 | 2.75 |
| 64 | 150 | 58 | 9.18 | 0.5 | 0.194 | 108 | 2.9 |
| 64 | 150 | 146 | 9.18 | 0.5 | 0.259 | 100 | 2.85 |
| 72 | 10 | 30 | 6.7 | 0.9 | 0.091 | 400 | 6.23 |
| 72 | 10 | 30 | 6.7 | 1.6 | 0.548 | 556 | 4.8 |

*1 carrier fluid flow rate
*2 applied cell potential
*3 electrochemical oxygen production rate
*4 power consumed, in watts/liter of $0_2$/min
*5 electrons passed per molecule of $0_2$ produced

It should be noted in connection with the operation of the apparatus shown in Figs. 7, 8, and 9 that it may prove energetically or otherwise advantageous to "cycle" only a portion of the carrier compound during any particular oxidation and/or reduction step. That is, the necessary cell voltages and energetics may be favorably adjustable by maintaining a mixture of both oxidized state and reduced state carrier

compound at all times in all portions of the apparatus, so that only a portion of the carrier compound is capable of binding or binds oxygen during the complete cycle.

Fig. 9 shows a schematic diagram of a working electrochemical cell and unloading station in combination with a pump for circulating the carrier and a ligand extraction station. The apparatus shown in Fig. 9 will be referred to herein as the demonstration unit. These components together form a sealed system containing a fixed volume of ligand carrier and carrier fluid. The apparatus shown in Fig. 9 is generally of a type generally intended for relatively larger scale production of oxygen. The electrochemical cell comprises twenty parallel teflon plates having sputtered gold surfaces, between which the carrier fluid is directed, in parallel. The plates are 3 mm thick and spaced at a distance of 1 mm. An individual plate is 62.5 cm long and 8 cm wide. When stacked in a parallel plate arrangement, the twenty layers have a total height of 8 cm. The use of such a bipolar cell such as this enables the use of higher voltages at proportionately smaller currents than would be required to operate a single anode, single cathode cell of the same surface area. The electrochemical cell is connected to a voltage supply capable of providing 25 amps at 20 volts. The unloading station comprises one or more (one is shown) hollow fiber cartridges 1 inch in diameter and 43 inches in length containing hollow fibers which consist of porous polysulfone with an interior silicon rubber skin. The surface area of the hollow fibers is 0.25 $m^2$. When more than one such cartridge is used, they are arranged for parallel flow of a commensurate fraction of the total carrier fluid flow through the apparatus. Polyvinylchloride or polypropylene piping is used to connect various inlets and outlet ports. The outlet port of the first electrode compartment is connected to the inlet port of the smaller of the two hollow fiber cartridges so that fluid which exits from the first electrode compartment enters the interior of the hollow fibers. The outlet port of this hollow fiber cartridge is connected to the inlet port of the second electrode compartment. The inlet port of the first electrode compartment is connected to the outlet port of the ligand extracting station while the outlet port of the second electrode compartment is connected through a pump to the inlet port of the ligand extracting station. In the embodiment shown, the ligand extracting station comprises one or more (one is shown) hollow fiber cartridges 3 inches in diameter and 43 inches in length, arranged for simultaneous parallel flow through the cartridges when more than one is used. Each cartridge contains 660 hollow fibers made of porous polysulfone with an interior silicon rubber skin. The hollow fibers have a membrane surface area of 2.5 $m^2$ and an interior volume of 646 ml. The space surrounding the hollow fibers is in communication with the electrochemical cell, not the interior of the hollow fibers. A fluid containing the ligand which is being extracted passes through the interior of the hollow fibers.

Operation of the demonstration unit apparatus is illustrated with the ligand carrier. Approximately 1 liter of carrier fluid is present in the interior volume of the apparatus as described above and the ligand extracting station together. Carrier fluid containing the ligand carrier having a ligand bound thereto passes from the exit port of the ligand extracting station into the inlet port of the first electrode compartment where a redox reaction takes place in order to release the ligand from the ligand carrier. Free ligand, carrier fluid, and nonbinding-state ligand carrier pass from the exit port of the first electrode chamber into the ligand unloading station there ligand passes through the walls of the ligand-permeable membrane and is collected. In the particular illustration shown, oxygen passes directly into the space where it is being utilized. It is also possible the pass fluids or chemical reactants over the outside of the hollow fibers. It will of course be recognized that the ligand can be concentrated or diluted depending on the rate at which the carrier fluid is circulated. Slow circulation results in high concentrations of the ligand bound to the ligand carrier and thus released at the first electrode compartment. Carrier fluid (now depleted of ligand) and nonbinding-state ligand carrier pass from the exit port of the ligand unloading station to the inlet port of the second electrode compartment where an electrochemical reaction opposite to that which occurred in the first electrode compartment takes place. This second redox reaction reforms the original binding-state ligand carrier. Binding-state ligand carrier and carrier fluid then pass from the exit port of the electrochemical cell through a gear pump to the inlet port of the ligand extracting station. In the embodiment shown as an example in Fig. 9 which may be used to extract oxygen from water and release oxygen into a second environment, water flows through the ligand (oxygen) extracting hollow fiber cartridge at a rate of 20 gallons per minute at 20 psi pressure. Circulating carrier compound in an aqueous carrier fluid (20 mM) circulates at 0.25 gallons per minute. Results obtained from tests using the demonstration unit, an apparatus similar to that shown in Fig. 9, are given in Table VII. The parameters of operation and values obtained are as defined above in connection with Fig. 8 and Table VI.

TABLE VII
DEMONSTRATION UNIT RESULTS
FOR COBALT CARRIER COMPOUNDS

| PAA No. | [PAA], mM | Flow*1 (mL/min) | pH | E, V*2 | EC $O_2$*3 ml/min. | Power*4 W/L/min. | e-/$O_2$*5 |
|---|---|---|---|---|---|---|---|
| 33 | 110 | 4000 | 8.3 | 16 | 87.5 | 808 | — |
| 33 | 52.5 | 1200 | 10.15 | 16 | 58.7 | 250 | — |
| 62 | 75 | 3380 | 5.0 | 16 | 72.4 | 285 | 2.44 |
| 62 | 75 | 3380 | 5.0 | 18 | 94.5 | 320 | 2.46 |

*1 carrier fluid flow rate
*2 applied cell potential
*3 electrochemical oxygen production rate
*4 power consumed, in watts/liter of $O_2$/min
*5 electrons passed per molecule of $O_2$ produced

The variables of operation include concentration of the carrier compound in the carrier fluid, flow rate of the carrier fluid through the apparatus, voltage applied across the electrodes, current load consumed by the electrodes, electrode area, and the volume of oxygen produced by the apparatus. When employing the ligand-metal ion carrier compounds described above, it has been found that oxidation of the carrier compounds and release of oxygen is promoted by controlling pH, usually in the range from 3 to 12, more usually in the range from 6 to 8. Typical values for these parameters are set forth in Table VII below.

Table VII

| | Broad Range | Narrow Range |
|---|---|---|
| Carrier Compound Concentration | 1 mM - 4M | 10 mM - 600 mM |
| Flow Rate of Carrier Fluid | 0-$10^5$ L/min | 10ml/min - 100L/min |
| Voltage* | 0.1 - 2.0 | 0.2 - 1.0 |
| Current Density | 100µA - 5A/$cm^2$ | 1mA - 200mA/$cm^2$ |
| Electrode Area | 1$cm^2$ - $10^5 m^2$ | 1$cm^2$ - 100$m^2$ |
| Volume $O_2$ Produced | 0.1ml - 1000$m^3$/min | 1ml - 1000L/min |
| pH | 3 - 12 | 6 - 8 |

* These voltage ranges apply to a cell consisting of a single anode and cathode pair. For bipolar stacks, the voltage will be proportionally higher.

A second specific embodiment designated electrochemical cell 110 of an apparatus for practicing the methods of the invention is shown schematically in Fig. 10. This electrochemical cell 110 utilizes diffusive and/or convective transport of carrier compound-ligand complexes through an electrolyte solution to transport oxygen (or other ligand) from a first fluid environment from which the ligand is extracted to a second fluid environment to which the ligand is released.

Electrochemical cell 110 includes a cathode 112, an anode 114, and an electrolyte 116 extending between cathode 112 and anode 114. Electrolyte 116 comprises a carrier fluid as described above containing a metallic complex of a polyalkylamine. Briefly, electrochemical cell 110 is operated to extract a ligand (oxygen, in this example) from a fluid (such as air, in this example) by impressing an appropriate potential across anode 112 and cathode 114 and by introducing air into a first fluid environment, e.g., chamber 118 in fluid communication with electrolyte 116 adjacent cathode 112. This fluid communication may be established, for example, with a ligand permeable membrane adjacent cathode 112 and separating electrolyte 116 from chamber 118. Alternatively, cathode 112 may be chosen to be ligand permeable and simultaneously serve as a physical separator between electrolyte 116 and chamber 118. Carrier compound, reduced at cathode 112 binds the ligand thus communicated from chamber 118. (Excess fluid may be expelled from chamber 118 via a vent 120 or the like.) The carrier compound-oxygen complex formed at cathode 112 migrates into and travels through electrolyte 116 under the influence of diffusion, convection, and/or electromigration to anode 114 where the metal of the carrier compound is electrochemically converted to its non-binding valence state and the oxygen or other bound ligand is released. Free ligand is collected in a second chamber 122 from which it is withdrawn or consumed, for example, through a vent 124. The released ligand may be diffused through a ligand-permeable membrane to second chamber 122 or an anode 114 selected to be ligand permeable, or may be removed from electrolyte 116 with a bubble dispersion device or the like, as described above.

Referring to Fig. 11, it is frequently desirable to employ a bipolar stack 150 of electrodes as the electrochemical cell of the present invention. The bipolar stack 150 includes a pair of conductor plates 152 and 154 located within a cell enclosure 156. A plurality of anodes 158 and cathodes 160 are positioned alternately between the conductive plates 150. Adjacent anode/cathode pairs 158/160 are separated by ion-permeable membranes 162, and individual anodes and cathodes may be separated by membranes 164, or may be a unitary structure having one side which functions as an anode and the other side which functions as a cathode. A voltage (or current) source 166 is connected across the conductor plates 150, and a voltage

drop is induced across adjacent anode/cathode pairs 158/160. Usually, the voltage drops will be substantially equal and chosen to provide sufficient current density to evolve the desired volume of oxygen at each anode 158. With the bipolar stack 150, the total operating voltage will be greater than that for cells including a single set of one anode and one cathode. The increase will be proportional to the number of anode/cathode pairs. The current flow, however, will remain essentially the same and the overall power consumption per unit of oxygen will be the same or reduced. The advantage to using a bipolar stack is primarily that increased electrode surface areas can be obtained in a single operating unit; such a bipolar stack also may be operated at higher voltages.

The electrochemical cell compartments will contain an inlet and outlet in each anode and cathode compartment through which fluid can be conducted. Of course, one skilled in the art will recognize that anode and cathode compartments can be changed merely by reversing the electrical leads. The present example is illustrated by assuming that the first electrode compartment is an anode compartment and that an oxygen carrier which binds oxygen in the reduced state is being used. A container is attached by means of a conduit to the outlet of the anode compartment. The conduit may be a separate tube or may be formed entirely or in part from the walls of the container or the anode compartment. Since oxidation takes place in the anode compartment, the anode compartment when in operation will contain the carrier in the oxidized state and free oxygen in solution. Since all oxygen is released by the electrochemical oxidation of the carrier, an extremely high concentration of oxygen can exist in the carrier fluid. Accordingly, in embodiments in which oxygen is released to the internal environment through a ligand permeable membrane, a positive gradient across the gas permeable membrane will exist even if air is present on the opposite side of the membrane. It is only necessary that the partial pressure (chemical activity) of oxygen be lower in the internal environment than it is (locally) in the carrier fluid. This is the meaning of "low partial pressure" of the ligand as used in this application in reference to the environment in which the ligand is being released.

The fluid is then transported through a second conduit attached to the container so that fluid which enters the container from the anode compartment contacts the membrane prior to exiting the container through the second conduit. This second conduit is attached to an inlet in the cathode compartment and can be formed in the same manner as the first conduit described above. The cathode compartment also contains an outlet through which the fluid passes on its way to pick up oxygen from the environment.

To continue the illustration of releasing oxygen, where oxygen is generally being produced for consumption, it is relatively easy to maintain a low partial pressure of oxygen on the gas-collecting side of the container membrane. If this oxygen is consumed by a human, animal, or fuel burning engine, the result is the same: reduction of the partial pressure of oxygen on the oxygen consuming side of the membrane, which maintains the pressure gradient and the high rate of oxygen removal from the system.

Of course, it is possible to consume the oxygen without isolating the oxygen in gaseous form. Oxygen in the carrier fluid may be transported to a fuel cell where the oxygen is consumed directly. In a preferred embodiment of the invention, the anode compartment is itself part of the cathode portion of an energy generating fuel cell as well as being a place where oxygen is released from the carrier so that no transportation is required. Fuel cells are of course well known and can easily be adapted to the process of the present invention. See, for example, U.S. Pat. Nos. 4,215,182; 4,075,396; and McDougall, Fuel Cells, John Wiley & Sons, New York (1976).

In some embodiments, it may be possible and desirable to unload the oxygen from the carrier compound by transporting the oxygen-bound carrier compound in the carrier fluid to an unloading compartment in which the oxygen is removed by exposing the carrier fluid to a sufficiently low pressure (partial pressure) of oxygen to deplete the carrier fluid of oxygen, without electrochemical release of the bound oxygen.

When a ligand other than oxygen is being collected at the unloading station, other means of maintaining a low ligand partial pressure (or concentration when the ligand is nonvolatile and is being extracted into a liquid phase) will be required. Generally, some chemical reaction which converts the ligand to a state not free to migrate back into the carrier fluid will be used, or the ligand will be transported away from the membrane by physical means. Chemical reactions for removing ligands (e.g., NO in a waste stream) are already known. The present invention offers advantages over direct contact of a waste stream with these chemical reactants. If the ligand being removed from a waste stream is present only in small quantities, it is possible to concentrate the ligand by utilizing the binding affinity of the ligand carrier and to release the ligand in high concentration for ready reaction with the ultimate removing chemical. The method of the invention also provides a method for readily concentrating minute quantities of material which are to be removed by physical transport; e.g., trapping as a compressed gas or concentrated solution for later disposal.

One component of an apparatus of the present invention is the ligand permeable membrane. However,

the technology relating to the production and use of ligand permeable membranes is well known and need not be set forth here in detail. See, for example, "Membrane Technology", Kirk-Othmer Encyclopedia of Chemical Technology, 3rd Edition, John Wiley and Sons, New York, Volume 15, pages 92-131, and the references cited therein. Certain preferred embodiments of suitable membranes are discussed here, however, in order to exemplify the invention.

The selection of a membrane for use in the present invention is not limited other than by the ability of the membrane to pass the ligand while retarding the passage of other components of the fluid environment from which the ligand is being extracted. It will be desirable to select a membrane based on the purpose for which it will be used, e.g., use in contact with exhaust gas or extraction of a ligand from a waste liquid stream. Most important synthetic membranes are formed from organic polymers, and there are extensive tabulations of permeability coefficients for various ligand/polymer systems now in existence. See, for example, van Amerongen, Rubber Chem. Technol., 37 1065 (1964); Allen et al, J. Member. Sci., 2,153 (1977); Yasuda et al in Brandrup et al Eds., Polymer Handbook, Second Edition, John Wiley and Sons, New York, 1975, p. 111; and Bixlar et al in Sweeting, Ed., The Science and Technology of Polymer Films, Vol. II, John Wiley and Sons, New York, 1971, p. 85. In addition to ligand permeability, inertness to the external fluid environment and the internal carrier fluid are also required.

The physical microstructure of the membrane is not important so long as the membrane performs the function described herein. Accordingly, dense films, porous membranes, and asymmetric and composite membranes are suitable. The macroscopic form of the membrane is also relatively unimportant although hollow fibers are preferred over flat sheets or tubular membrane configurations since hollow fibers are self-supporting and thus eliminate the need for expensive support materials. In fact, hollow fiber cartridges in which a plurality of gas permeable hollow fibers are connected in parallel between two manifolds at opposite ends of each tube can readily be adapted for use in the present invention. For example, Romicon manufactures a hollow fiber cartridge 3 inches in diameter and 43 inches long containing 660 hollow fibers joined to manifolds at opposite ends of the cartridge. The hollow fibers have a surface area of 2.5 $m^2$ and volume of 647 ml and are in the form of a polysulfone membrane with a silicone rubber layer over the polysulfone layer to form a composite membrane. Fluid from the environment, e.g. seawater, is transported through the inside the hollow fibers (i.e., the interior of the fibers is the outside of the closed container) where extraction of oxygen into the fluid carrier takes place. When used to release oxygen, for example, the cartridge walls form an oxygen-collecting chamber around the hollow fibers through which the carrier fluid is transported.

When the environmental fluid from which oxygen is extracted is an aqueous fluid, a polymer having a high permeability to oxygen is particularly preferred because of the low chemical activity of oxygen in water. Silicone rubber, natural rubber, poly(phenylene oxide), and poly(trimethylsilylpropyne), often abbreviated as PMSP, have been found to form suitable membranes in such environments. When oxygen is being extracted from air, high permeability is less important. In any event, the present invention has advantages over passive diffusion systems since the partial pressure of oxygen in the carrier fluid itself is essentially zero at all times until the oxygen binding compound is saturated. Accordingly, a constant oxygen chemical activity gradient across the membrane exists in practice since the oxygen bound to the carrier compound will normally be transported to a second location where the oxygen will be unloaded prior to saturation.

Another material of interest is porous polysulfone in the form of hollow fibers having an internal skin of silicone (e.g., polydimethylsiloxane). This composite material provides both strength and high oxygen transport. Composite fibers consisting of a porous outer layer and an oxygen permeable layer (here permeable is used in the traditional sense of transport by solution of oxygen in the membrane) on the inside of the fiber are preferred for use in extracting oxygen from fluids under pressure, such as seawater. Hollow fibers having interior diameters of 50 microns have been produced as have much larger hollow fibers having interior diameters of 2 millimeters. Smaller fibers have a greater resistance to pressure, with bursting strengths of 6,000 pounds per square inch having been recorded. In lower pressure environments or when extracting oxygen from air, large diameter fibers are preferred since the larger fibers are rated up to 50 pounds per square inch bursting pressure and offer less resistance to flow, thereby reducing energy required to drive water or air through the fibers where extraction takes place. This is particularly true when large volumes of oxygen are desired to be extracted since a theoretical oxygen extraction of 1 liter per second requires that 3175 gallons of, e.g., seawater must contact the membrane surface each minute. Efficiencies of extracting oxygen across membranes of 85% have been obtained in practice.

Preferred membranes of the invention, particularly those intended for use in an aqueous environment, should in addition have minimal water and carrier fluid flux. Typically, water flux through the membrane is limited by selecting hydrophobic membranes, such as fluorocarbons.

During operation, flow of carrier in contact with the second side of the membrane is balanced against oxygen flux which in turn depends on the oxygen concentration in the environment from which oxygen is being extracted and the rate at which this environment contacts the membrane. Higher oxygen carrier concentrations and faster carrier flow rates both operate to increase the rate of oxygen pick-up. High capacity oxygen carriers are therefore preferred since they decrease the required volume of carrier and minimize pumping requirements.

Loading and unloading devices can be, as discussed above, hollow fiber devices, but are not so limited. In addition, other continuous aeration or gas exchange devices may be used, including plate or packed gas-liquid contacting columns, bubble dispersion devices and the like, as discussed for example in Section 18 of the Chemical Engineers' Handbook, Perry and Chilton, eds., 5th Ed., 1973.

The individual components of an electrochemical cell used in the practice of the method of the invention are readily available to those skilled in the art although certain combinations of these components have not been previously known. For example, the electrochemical reactions themselves can be conducted in any electrochemical cell which has an anode compartment and a cathode compartment through which the appropriate fluids can be transported. For simplicity in the following discussion, it will be assumed that an oxygen carrier in which the oxygen binding state is a lower oxidation state and the nonbinding state is a higher oxidation state is being used in order to simplify discussion of anode and cathode compartments. However, it will be easily recognized that when an oxygen carrier in which the oxygen binding state is a higher oxidation state can readily be used by reversing the anode and cathode.

Although the design of the electrode and cathode compartments of the electrochemical cell are not critical to the practice of this invention, certain embodiments are preferred. For example, a parallel plate electrochemical cell in which anode and cathode compartments alternate (as described above in connection with Fig. 11) in order to increase voltage and decrease current is a preferred embodiment. In order to maximize contact of the carrier fluid containing the oxygen binding compound with the anode and cathode, it is preferred that the anode and cathode compartments have a thickness of no more than 5 millimeters, preferably no more than 1 millimeter. Particularly preferred are porous electrodes, such as vitreous carbon, carbon felt, or polytetrafluoroethylene covered with a thin layer of an inert metal such as gold or platinum. The carrier fluid in such an embodiment passes through the porous electrodes, the spaces of which form the anode and cathode compartments.

The electrode material will usually be a metal or a carbon/graphite, with suitable metals including transition metals such as titanium, iron, nickel, copper, silver, platinum, gold, palladium, tin, tantalum, cobalt, cadmium, lead, ruthenium oxide, and alloys and mixtures thereof. Suitable carbon/graphite electrodes include glassy (amorphous) carbons, reticulated vitreous carbons, pyrolytic carbons, carbon felts, and the like.

The construction of the electrode will depend on the material type, with metal electrodes generally being in the form of plates, bars, and screens, or being sintered to form a highly porous structure. Metal electrodes may also be formed by depositing a film or layer of the metal on a nonconductive substrate, such as glass. The structure of carbon/graphite electrodes will depend upon the type of carbon. Glassy carbon electrodes are generally flat, polished surfaces while reticulated vitreous carbons are glass-like porous structures, typically pyrolyzed polyacrylonitriles. Pyrolytic carbons are produced by vapor phase deposition of carbon on a substrate, resulting in a polycrystalline structure with a high degree of atomic orientation.

Preferred is the use of carbon felt electrodes which have been found to provide particularly effective catalytic sites after an oxidative pretreatment, as described below. Carbon felts are generally woven from yarns which are bundles of individual carbon monofilaments generally having a diameter in the range from about 1 to 50 µm, usually in the range from about 5 to 10 µm. The yarns will typically include from about 100 to 20,000 monofilaments, usually having from about 3,000 to 6,000 filaments. The denier of the yarns used as in fabricating the carbon felts will typically be in the range from about 500 to 5,000 mg/m, usually being in the range from about 1,000 to 2,000 mg/m. Denier is equal to the number of grams which yield 9,000 meters of the yarn or filament.

The yarns are woven by conventional weaving machines yielding large fabrics which may be cut into the desired dimensions for the electrode. Each electrode may employ a plurality of layers of the fabric, so that the final dimensions of the electrode may vary widely. Generally, the electrodes will have a height in the range from about 1 cm to 100 cm, a width in the range from about 0.1 cm to 100 cm, and a thickness in the range from about 0.1 cm to 1.0 cm. The particular dimensions chosen will depend primarily on the capacity of the electrochemical cell.

Carbon felts suitable for use in the present invention may be obtained commercially from suppliers such as FMI Fiber Materials, Inc., Biddleford, Maine; Hercules, Inc., Wilmington, Delaware; Celanese

Engineering, Chatham, New Jersey; Ultra Carbon Corp., Bay City, Michigan; and Union Carbide Corp., Specialty Polymers and Composites Division, Danbury, Connecticut.

Pretreatment of the electrode surfaces may, in some embodiments of the invention, be highly desirable. Pretreatment of certain electrodes, such as carbon felt electrodes, used for oxidizing and/or reducing the carrier compounds, leads to differential enhancement, with certain of the carrier compounds of the invention of the power consumption and/or oxidation and/or reduction rates and efficiencies of processes according to the invention.

The electrode material will be treated in order to form catalytically active sites on the electrode surface. For porous electrodes, the surface includes all areas exposed to the circulating carrier fluid during operation of the cell, specifically including the interior surfaces of the pores. The electrode material will be treated after the fabrication is essentially complete, but treatment may occur prior to final cutting of the electrode so long as the electrode surface is well defined before the treatment occurs.

Catalytically-active sites may be formed by a variety of techniques, including covalent binding, coating, adsorption, in situ polymerization of species on the electrode surface, in situ oxidation of species on the electrode surface, and the like. Various approaches for forming catalytically-active species on the surface of both metal and carbon electrodes are described in the scientific and patent literature, and reference is made to the articles cited in the Description of the Background Art, above.

The preferred techniques for introducing catalytically-active sites include oxidation reactions which convert species normally present on the electrode surface to oxidized species capable of catalyzing the transfer of electrons between the electrode and the carrier compounds of the present invention. In the case of the preferred carbon electrodes of the present invention, it is believed that certain surface oxides present on the electrode surface are converted to quinones which have a particularly useful catalytic effect on electron transfer, particularly with certain of the synthetic organometallic carrier compounds described hereinafter.

Oxidation of the electrode surfaces may be accomplished by various techniques. The electrodes can be exposed to an elevated temperature, typically in the range from about 200 to 1000°C, in an oxidizing environment, such as air or oxygen. Alternatively, the electrode surfaces can be chemically oxidized in an aqueous solution of an oxidizing agent, such as thionyl chloride or oxy-acids. Plasma reactors can also be used to generate reactive species, particularly reactive oxygen radicals, which can react on the electrode surface to create the preferred oxidized catalytic sites of the present invention. See, also, U.S. Patent No. 3,657,082, which teaches methods for oxidizing the surface of carbon fibers.

The preferred pretreatment method of the present invention involves exposing a pair of electrodes to an alternating current in an electrolytic solution. Such current cycling appears to promote the formation of catalytic sites by successive oxidations and reductions on the surface. The catalytic sites produced this manner have been found to be particularly effective in the oxygen extraction methods of the present invention.

Referring to Fig. 12, an apparatus 170 for performing such current cycling is illustrated. The apparatus includes a reservoir 172 for holding the electrolyte, a chamber 174 housing a pair of electrodes 176 and 178, and a semipermeable membrane 180 separating electrodes 176 and 178 within chamber 114. Tubing 182 connects the reservoir with chamber compartments 174a and 174b so that the electrolyte will flow sequentially from reservoir 172 to compartment 174a, compartment 174b and back to reservoir 172, or vice versa. In this way, the electrolyte can be continuously circulated past both electrodes. A pump (not illustrated) is supplied to provide such circulation. To complete the apparatus 170, electrical contact plates 184 and 186 are provided on electrodes 176 and 178, respectively. Each contact plate 184 and 186 is connected to a voltage source which is capable of applying voltage of either polarity to the plates. The apparatus 170 of Fig. 12 is particularly useful for surface oxidation of porous electrodes, particularly the preferred carbon felt electrodes described above.

In operating apparatus 170, an electrolyte is first placed in reservoir 172. For carbon felts, a suitable electrolyte is an aqueous solution of 2 M NaCl, 7 mM $Na_2B_4O_7$, with a pH chosen to provide the desired type and amount of surface oxide. Typically, the pH will be in the range from about 6 to 12, more typically in the range from about 9 to 10.5. The electrolyte is then circulated through tubing 172 at a flow rate which depends primarily on the size of electrodes 184 and 186. Typically, the flow rate will be chosen to provide an average flow velocity through chamber 174 in the range from about 0.5 to 10 cm/sec, usually about 3.0 to 7.0 cm/sec. As the electrolyte is circulating from chamber 174a to chamber 174b (or in the opposite direction), an alternating voltage is applied across electrodes 176 and 178 through current collectors 184 and 186.

Referring to Fig. 13, the voltage will conveniently have a sawtooth pattern with a peak voltage $E_{max}$ in the range from about 1 to 10 volts, usually in the range from about 2 to 6 volts, more usually in the range

from about 2.5 to 5 volts. The cycle period $t_o$will typically be in the range from about 0.1 to 10.0 sec, more typically in the range from about 0.5 to 5 sec. The total treatment time may vary from about 5 min. to 1.0 hr, typically being in the range from about 10 to 20 min.

Although the applied voltage is illustrated as a sawtooth wave, it will be appreciated that other waves, such as sine waves, square waves, and the like, may also find use.

Prior to placement in the apparatus 170, electrodes 176 and 178 should be thoroughly cleaned to remove all organic contaminants and metal ions. This may be accomplished by washing in an acid bath, typically 1 M $H_2SO_4$ bath. The organics may be removed in an ethanol bath. Both washings can be conveniently carried out in a sonication bath, and the electrodes should be thoroughly rinsed in deionized water prior to placement in the electrolyte for reversing voltage treatment.

Using the pretreated electrodes of the present invention substantially reduces the operating voltage required to effect the oxidation and reduction of the carrier compounds of the present invention. Typically, the oxygen production obtained from conventional (non-pretreated) electrodes which is obtained with a voltage of 1.0 volts, can be obtained with 0.8 volts when using the pretreated electrodes of the present invention. Alternatively, if the pretreated electrodes of the present invention are operated at 1.0 volt, the current density can be doubled, resulting in a doubling of the oxygen production. The type of behavior observed and the extent of increased efficiency are dependent on the nature of the carrier compound used.

The following examples are offered by way of illustration and not by way of limitation.

## EXAMPLE VII

### Materials and Methods

Electrodes (2.5 × 10 cm) were cut from a sheet of 0.5 in. graphite felt (2 lbs/linear yard, Fiber Materials, Inc. Biddleford, Maine). In order to remove trace metals and organic impurities, the electrodes were soaked in deionized water followed by sonication for 20 minutes in 1 M $H_2SO_4$ and for an additional 20 min. in ethanol. The electrodes were then rinsed in deionized water.

The cleaned electrodes were pretreated in a 2M NaCl, aqueous solution with the pH adjusted to 10.5. The electrodes were connected to a Hewlett-Packard bipolar power supply (Model 6825A) controlled by a Zenith Model 152 PC computer connected through a Tecmar Labmaster interface. Voltage ramps (sawtooth) were applied with amplitudes varying between ± 2 volts and ± 6 volts, and rates varying between 0.5 volts/sec and 5 volts/sec. The flow rate of the aqueous solution varied from 0.2 L/min to 0.388 L/min., and treatment times varied from 10.7 min to 25 min. After pretreatment, the electrodes are washed in 2L of deionized water.

The pretreated electrodes were placed in an electrochemical oxygen cell (EOC) as described above in connection with Fig. 8. The EOC is controlled and monitored by a Zenith Model 152PC computer and Tecmar Labmaster interface, as described above. An RAI R-4035 anion exchange membrane is employed between the anode and cathode.

### Results

Three carrier compounds were tested in the EOC using pretreated and non-pretreated electrodes. The carrier ligands were:

(1) 1,4,7,10,13-pentazatridecane (PAA No. 33)

(2) 1,9-bis-(2-pyridyl)-2,5,8-triazanonane (PAA No. 62)

(3) 1,11-bis-(2-pyridyl)-2,6,10-triazaundecane (PAA No. 64)

The test consisted of increasing the voltage applied to the EOC from 0 to 1.8 volts in increments of approximately 15 mV. The current and oxygen evolution rate were recorded at each voltage, and the cell voltage increased after about 5 min.

Compound (1) (PAA No. 33; 110 mM) and cobalt (55 mM $CoCl_2$) at pH 6 were tested in the EOC, as just described. The current, oxygen generation, and power consumption as a function of voltage are shown in Figs. 13A-13C, respectively. Increased current density and oxygen generation and decreased power consumption were achieved. The experiment was run a second time under the same conditions, with the results shown in Figs. 14A-14C. For unknown reasons, the same increase in current density and oxygen production and decrease in power consumption was not observed.

Compound (2) (PAA No. 62; 50 mM) and cobalt (50 mM $CoCl_2$) at pH 9 were tested in the EOC, as just

described. The results are shown in Figs. 15A-15C. No increase in current density or oxygen production was observed, although power consumption appeared to be marginally lower. Fig. 15D, which shows the overpotential at the cathode and anode measured in reference to a Ag/AgCl electrode, indicates that the cathodic reduction may be enhanced for compound (2).

Compound (3) (PAA No. 64; 50 mM) and cobalt (50 mM $CoCl_2$) at pH 8.5 were tested in the EOC, as just described. The results are shown in Figs. 16A-16CB which represent the average of three trials. The solid lines flanking the results are the individual maximum and minimum points observed. Substantial increases in current density are observed. For example, 1.0 volts across the cell yields 45 mA for the non-pretreated electrodes and 90 mA for the pretreated electrodes. Similarly, oxygen production doubles from 0.25 mL/min to about 0.5 ml/min, with no increase in power.

It is possible to carry out the redox process on the oxygen carrier directly without the intervention of any modifier, promoter, linker, mediator, or other electrocatalyst. However, such materials may be included if desired, and, according to another aspect of the invention, can significantly increase the efficiency of oxygen extraction. A mediator is a small molecule also present in a circulating carrier fluid which serves to transport charge from the electrode surface to the oxygen carrier. A modifier or promoter is a molecule attached to the electrode surface which facilitates electron transfer without itself undergoing a redox reaction. A linker is a molecule which binds the carrier to the electrode surface where the redox process can take place.

The substance used as the electrocatalyst may be any atomic species, compound, or aggregate which fulfills certain physical requirements. The substance must be able to rapidly transfer electrons between the electrodes and the carrier compound in order to allow indirect oxidation/reduction of the carrier compound. Additionally, the electrical potential required to transfer electrons between the electrodes and the electrocatalyst must be less than that required for electron transfer between the electrodes and the carrier compounds under the operating conditions of the cell. Usually, this corresponds to a lower standard potential for the electrocatalyst than for the oxygenated carrier compound. The standard half-cell reaction for oxidation of the electrocatalyst (EC) can be written as follows:

$$EC = EC^{+} + e^{-},\ E°_{ec} \qquad (16)$$

where $E°_{ec}$ is the oxidation potential of the electrocatalyst. Thus, $E°_{ec}$ will be less than

$$E°_{CoO_2Co},$$

the oxidation potential for the reaction:

$$[Co(II)(PAA)]_2O_2 = Co(II)(PAA)O_2Co(III)(PAA), \qquad (17)$$

(Eq. 11), providing a decreased potential for driving the oxidation of the carrier compound and release of oxygen.

The electrical potential of the electrocatalyst normally is not be too far below that of the oxygenated carrier compounds, or an unfavorable thermodynamic equilibrium may result. Usually, the electrocatalyst will have a potential below that of the carrier compound by about 0.1 to 0.5 volts, usually by about 0.2 to 0.3 volts.

Suitable electrocatalysts are selected based on their oxidation/reduction potentials relative to the carrier compounds. Such selection could be made by measuring the potentials for both the electrocatalyst and the carrier compound by conventional techniques, typically using a calomel or other standard electrode. Conveniently, selection may be made by simply testing the effectiveness of a candidate electrocatalyst in lowering the potential required to release oxygen in a coulometric experiment as follows. Oxygenated carrier compound is placed in a cell having a working electrode and an auxiliary electrode. The electrodes are separated by an ion permeable membrane, and the oxygenated carrier compound is in contact only with the working electrode. A suitable electrolyte is placed in contact with the auxiliary electrode. The voltage required to release oxygen from the oxygenated carrier compound can then be determined by simply stepping the voltage until oxygen release is detected, typically using a conventional oxygen probe. The experiment may then be repeated with the addition of the electrocatalyst, either in solution or immobilized on the electrode, in order to determine the reduction in potential required for the release of oxygen. If the reduction is in the suitable range from about 0.1 to 0.5 volts, usually from about 0.2 to 0.4 volts, the electrocatalyst will be effective in reducing the energy consumption in an electrochemical cell as described above.

A variety of compounds are generally suitable as electrocatalysts, although testing of the individual compounds with particular carrier compounds is still required. The classes of electrocatalysts which are suitable for use in the present invention include anions, such as iodide, bromide, and nitrate; cations, such as ruthenium pentamine pyridine complex and 2,2'-bipyridyl cerium; phenolic compounds, such as catechols, hydroquinones, dopamines, indophenols, and phenolic ether compounds; sulfonic ether compounds (sulfur analogs of the phenolic ether compounds just listed); organometallic compounds, such as ferrocenes, particularly ferrocenecarboxylic acid, cobaltocenes, nickelocenes, and metal carbonyls; metal porphyrins which do not bind oxygen, such as iron tetraphenylporphyrin and metal corrin compounds, particularly vitamin B-12; metal macrocyclic compounds, such as cobalt phthalocyanines, iron phtyalocyanines, metal cyclams, particularly nickel cyclam, and metal salen complexes; amines, such as p-phenylenediamine. N,N,N',N'-tetramethylphenylenediamine, and tris(p-bromophenyl)amine; thiazines, such as methylene blue and new methylene blue; delocalized aromatic molecules, such as Koelsch's radial; cytochrome molecules, hydroxylamines, metal phosphine complexes, such as nickel triphenylphosphine; and the like. Preferred electrocatalysts include substituted ferrocenes, iodide ions, phenylenediamines, and substituted quinones.

Once the electrocatalyst has been selected, it must be introduced to the oxygen extraction system. Usually, the electrocatalyst will be dissolved or mixed with the circulating carrier fluid, although it will sometimes be desirable to immobilize the electrocatalyst on the electrodes or on a support other than the electrodes. By including the electrocatalyst in the carrier fluid, the oxidation/reduction reactions may take place in the carrier fluid away from the electrode surfaces. This geometric effect increases the frequency of encounters between the carrier compounds and the electrocatalysts, and thus promotes the net electron transfer between the electrodes and the carrier compound. Such promotion is in addition to the primary catalytic effect, i.e., lowering of the energy required to transfer electrons between the electrodes and carrier compound, discussed above.

Depending on its solubility, the electrocatalyst may be present in the carrier fluid at a concentration from about 0.01 mM to about 1 M, more usually from about 0.1 mM to 0.1 M, more usually from about 0.1 mM to 100 mM. Usually, it will be desirable to maintain an electrocatalyst concentration having an equivalent ratio to the carrier compound concentration of at least 1:1000 (e.g., electrocatalyst:eq. carrier compound), usually at least 1:500, more usually at least 1:200, and frequently higher, with the upper limit being the solubility or the concentration where the electrocatalyst interferes with the ability of the carrier compound to take up oxygen. For the preferred electrocatalysts, a concentration of approximately 0.5-30 mM has been found effective.

The electrocatalyst may also be bound to an inert, solid substrate, particularly when the electrocatalyst otherwise interferes with the oxygen uptake of the carrier compound. By immobilizing the electrocatalyst, and keeping it away from the loading station where oxygen is bound, such interference can be avoided. The method for binding the electrocatalyst to the solid phase will depend on both the nature of the electrocatalyst and the nature of the solid phase. Numerous binding and conjugation techniques for a wide variety of substances are described in the scientific and patent literatures and immobilization methods for most combinations of electrocatalyst and solid phase material will be readily available.

The solid phase will usually, but not necessarily, be the electrode itself. It is also possible to bind the electrocatalyst to a solid phase which is maintained outside of the electrochemical cell. The electrocatalyst on such a remote solid phase is charged using a separate fluid circuit which carries additional liquid phase (mobile) electrocatalyst, which may be the same or a different electrocatalyst than that which is bound to the solid phase. By exposing the liquid phase to the electrochemical cell, the mobile electrocatalyst may be oxidized or reduced, as desired. The remote solid phase catalyst is oxidized or reduced by the mobile electrocatalyst. After clearing all mobile electrocatalyst, the remote solid phase is exposed to the carrier fluid which includes the oxygenated carrier compounds so that the solid phase may oxidize or reduce the carrier compounds to release oxygen therefrom. In this way, the electrocatalyst is kept from the loading station to avoid interference.

As demonstrated more fully in the examples below, using the electrocatalysts of the present invention substantially reduces the operating voltage required to effect the oxidation/reduction of the carrier compounds with the accompanying release of oxygen. Typically, operating voltages will be decreased by about 0.1 to 0.5 volts, usually about 0.2 to 0.4 volts, when the electrocatalysts of the present invention are employed. This decrease, in turn, provides for a substantial reduction in energy consumption as the current load remains constant for a given volume of oxygen.

The effect of the electrocatalysts of the present invention enhancing oxygen extraction was tested by cyclic voltammetry and coulometry, and in the electro chemical oxygen cell systems described above in connection with Fig. 8.

EXAMPLE IX

Cyclic voltammetry experiments were carried out as outlined in Example VII, above. Figure 17 shows cycli voltammetry plots obtained from solutions of 1,1'-ferrocenedicarboxylic acid in a buffered, saline solution at different acidities in the presence of a large excess of oxygen carrier. It can be clearly seen that the shape of the plot is dependent upon the pH of the solution. Figure 17(a), recorded at pH 7.3, resembles most closely the behavior of the 1,1'-ferrocenedicarboxylic acid in the absence of the oxygen carrier and this indicates that there is very little interaction between the two species under these conditions. Figure 17-(b) in contrast, shows a marked increase in the oxidation current at pH 10.1 with 0.4 - 0.5V and complete removal of the reduction current at 0.4V on the reverse sweep. At this pH then, there is a large interaction between the species. Figure 17(c), which was recorded using a pH intermediate between those used in Figures 17(a) and 17(b), shows intermediate behavior. In the absence of the 1,1'-ferrocenedicarboxylic acid there is little or no current flowing at 0.4V so that there is no oxidation of the oxygen carrier at this potential normally. The increase in the current of the 1,1'-ferrocenedicarboxylic acid shown in Figure 17(b) and 17(c) indicates that oxidation of the carrier is occurring through the mediation of electron transfer by the ferrocene species. The dependence of this mediation on the pH of the solution indicates that the reactivity of the carrier controls this process since the voltammograms of 1,1'-ferrocenedicarboxylic acid alone in solution show no pH dependence. The voltammograms of the oxygen carrier complexes are very dependent upon the pH.

EXAMPLE IX

Coulometry experiments experiment involved the use of a larger electrode than in cyclic voltammetry (Example IX) and the measurement of the oxygen produced as well as the current as a function of the applied potential. A cell was used which comprised two compartments separated by an ion exchange membrane or microporous separator. One compartment was the counter electrode compartment and contained potassium ferricyanide in the buffered aqueous solution of interest and the counter electrode itself which was reticulated vitreous carbon (1 cm × 2 cm). The working electrode compartment contained the oxygen carrier solution, a reference electrode (silver/silver chloride), the working electrode (carbon felt, 2cm x 1cm), and a Clark oxygen electrode probe (Yellow Springs Instruments, Model 5775). The experiment consisted of saturating the carrier solution with air by bubbling and then applying a potential difference between the working and reference electrodes by means of a potentiostat (BAS CV-27). The potential was increased in steps of 100 - 200 mV from 0 to 0.7 volts, and the charge passed and the oxygen released was monitored. The potential was then set to a value sufficiently negative to reduce all or most of the oxidized carrier back to its original form. This value was usually in the range of 0 to -0.2V. The working electrode compartment was then resaturated with air and the procedure repeated to ensure that the carrier can complete the cycle. Sometimes the oxidized carrier was not reduced fully back to its original form before the solution was resaturated with air. This was to allow the behavior of the carrier to be studied while it was a mixture of its oxidized and reduced forms.

Once the behavior of the carrier was ascertained, the electrocatalyst was added to the working electrode compartment and the potential step procedure was repeated. Table IX shows the results of a number of such experiments using three different oxygen carrier compounds and several different electrocatalysts. It is clear from the response of the oxygen probe electrode that oxygen is released at a lower potential in the presence of the electrocatalysts than in their absence and the charge passed demonstrates that the electron transfer proceeds through the mediation of the electrocatalyst at these lower potentials.

## TABLE IX

Coulometry of Oxygen Carriers in the Presence and Absence of Electrocatalysts

| Carrier Compound | Electrocatalyst | pH | E/Volts | Q/coulombs* | $O_2$/mV |
|---|---|---|---|---|---|
| Cobalt - 1,9-bis-(2-pyridyl)-2,5,8-triazanonane 2Cl Co(PAA No. 62)$Cl_2$ (4 mM) | | 9.4 | 0.2 | 0.02 | 0 |
| | | | 0.4 | 0.09 | 10 |
| | | | 0.5 | 0.29 | 30 |
| | | | 0.6 | 0.58 | 52 |
| | | | 0.7 | 1.62 | 113 |
| Cobalt - 1,9-bis-(2-pyridyl)-2,5,8-triazanonane 2Cl Co(PAA No. 62)$Cl_2$ (4 mM) | 1,1'-Ferrocene-dicarboxylic acid (1 mM) | 9.4 | 0.2 | 0 | 0 |
| | | | 0.35 | 0.93 | 78 |
| | | | 0.4 | 1.54 | 99 |
| Cobalt - 1,9-bis-(2-pyridyl)-2,5,8-triazanonane 2Cl Co(PAA No. 62)$Cl_2$ (4 mM) | | 6.9 | 0.3 | 0.05 | 0 |
| | | | 0.5 | 0.5 | 45 |
| | | | 0.6 | 1.26 | 83 |
| | | | 0.7 | 2.63 | 184 |
| Cobalt - 1,9-bis-(2-pyridyl)-2,5,8-triazanonane 2Cl Co(PAA No. 62)$Cl_2$ (4 mM) | KI (1 mM) | 6.9 | 0.4 | 2.17* | 0 |
| | | | 0.45 | 2.73 | 112 |
| | | | 0.6 | 5.0 | 298 |

| | | | | | |
|---|---|---|---|---|---|
| Cobalt - 1,9-bis-(2-pyridyl)-2,5,8-triazanonane 2Cl Co(PAA No. 62)$Cl_2$ (4 mM) | | 7.3 | 0.3 | 0.03 | 0 |
| | | | 0.5 | 0.21 | 18 |
| | | | 0.6 | 0.7 | 65 |
| | | | 0.7 | 2.37 | 167 |
| Cobalt - 1,9-bis-(2-pyridyl)-2,5,8-triazanonane 2Cl Co(PAA No. 62)$Cl_2$ (4 mM) | Ferrocene-carboxylic acid | 7.3 | 0.2 | 1.56* | 9 |
| | | | 0.25 | 2.01 | 67 |
| | | | 0.3 | 2.31 | 85 |
| | | | 0.35 | 2.4 | 85 |
| Cobalt - 1,11-bis-(2-pyridyl)-2,6,10-triazaundecane 2Cl Co(PAA No. 64)$Cl_2$ (4 mM) | | 7.5 | 0.1 | 0.09 | 16 |
| | | | 0.2 | 0.34 | 69 |
| | | | 0.3 | 0.45 | 76 |
| | | | 0.4 | 0.58 | 86 |
| | | | 0.5 | 0.9 | 115 |
| | | | 0.6 | 1.47 | 174 |
| | | | 0.7 | 2.07 | 174 |
| Cobalt - 1,11-bis-(2-pyridyl)-2,6,10-triazaundecane 2Cl Co(PAA No. 64)$Cl_2$ (4 mM) | 1,1'-Ferrocene-dicarboxylic acid | 7.5 | 0.1 | 0.05 | 11 |
| | | | 0.2 | 0.18 | 28 |
| | | | 0.3 | 0.76 | 114 |
| | | | 0.4 | 2.02 | 218 |

| | | | | | |
|---|---|---|---|---|---|
| Cobalt - 1,10-bis-(2-pyridyl)-2,5,9-triazadecane 2Cl Co(PAA No. 72)$Cl_2$ (4 mM) | | 7.4 | 0.3 | 0.16 | 15 |
| | | | 0.4 | 0.64 | 26 |
| | | | 0.5 | 2.59 | 68 |
| | | | 0.6 | 4.23 | 105 |
| | | | 0.7 | 5.83 | 117 |
| Cobalt - 1,10-bis-(2-pyridyl)-2,5,9-triazadecane 2Cl Co(PAA No. 62)$Cl_2$ (4 mM) | 1,1'-Ferrocene-dicarboxylic acid | 7.4 | 0.1 | 0.08 | 16 |
| | | | 0.2 | 0.21 | 34 |
| | | | 0.3 | 0.48 | 56 |
| | | | 0.4 | 1.00 | 71 |
| Cobalt - 1,10-bis-(2-pyridyl)-2,5,9-trianadecane 2 Cl Co(PAA No. 72)$Cl_2$ (4 mM) | 3-methoxycate-chol (1 mM) | 7.6 | 0.35 | 0.24 | 40 |
| | | | 0.45 | 0.42 | 92 |
| | | | 0.6 | 0.7 | 112 |
| | | | 0.65 | 1.05 | 182 |
| Cobalt - 1,11-bis-(2-pyridyl)-2,6,10-triazaundecane 2Cl Co(PAA No. 72)$Cl_2$ (4 mM) | 3-methoxycate-chol (1 mM) | 7.5 | 0.15 | 0.25 | 10 |
| | | | 0.25 | 0.89 | 25 |
| | | | 0.4 | 1.14 | 55 |
| | | | 0.6 | 1.51 | 155 |

Conditions: 0.5M KCl,0.1M $K_2HPO_4$ adjusted with KOH, auxiliary compartment contains ca. 5 mM $K_3Fe(CN)_6$.

* Where the number of coulombs is greater than 0 at the start of the experiment, the carrier was not reduced back to the Co(II) form before the solution was resaturated with air. Thus, Q-1.53 means that 1.53 mM of the Co is in the Co(III) form.

EXAMPLE XI

The experiment using the electrochemical oxygen cell systems described above in connection with Fig. 8 demonstrated the operation of the electrocatalysts in a flowing, cycling system where large electrodes (25 $cm^2$) were used and significant volumes of oxygen were produced (0.2 to 2 ml/min). In this experiment, the overall cell voltage was controlled since the product of the voltage and the current gives the power required to extract the oxygen. A solution of cobalt chloride (100 mM) and 1,9-bis-(2-pyridyl)-2,5,8-triazanonane (PAA No. 62; 100 mM) in 0.8M sodium chloride/water was oxidized in the electrochemical cell so that half of the cobalt complex was in the reduced from (Co(II)) and half was in the oxidized form (Co(III)). This solution was circulated in the electrochemical oxygen cell system and voltage was applied. It was found that 0.3ml/min of oxygen was produced at 0.94 V. The current required was 94 mA, which corresponds to a value of 297 W/L-min of oxygen produced. When ferrocenecarboxylic acid was added to this solution (1 mM concentration), 0.3 ml/min of xoygen was produced at 0.7 V using 86 mA of current. This corresponds to a power requirement of 202 W/L-min of oxygen produced. A second solution was prepared in the same manner, and again 0.3 ml/min of oxygen was obtained at 0.94 V using 109 mA of current and requiring 324 W/L-min of oxygen. When potassium iodide was added to this solution (1 mM concentration), 0.3 ml/min of oxygen was obtained at 0.75V using 82 mA corresponding to a power requirement of 200 W/L-min of oxygen. A third solution prepared in the same manner gave 0.3 ml/min of oxygen at 0.86V using 123 mA and 343 W/L-min of oxygen. After addition of 1,1′-ferrocenedicarboxylic acid (1 mM concentration), 0.3 ml/min of oxygen was obtained at 0.69V using 88 mA current and requiring 200 W/L-min of oxygen.

The apparatus and method of the invention can be used in any application where it is desirable to remove oxygen from one location and concentrate it in a second location. For example, there are many applications in which the oxygen is present as a contaminant in a fluid, and removal of oxygen therefrom is desired. For example, oxygen degrades food products such as beer, wine, and orange juice, and removal of oxygen from these fluids greatly enhances the shelf storage life of the commodity.

In other applications, it is desirable to increase the concentration of oxygen above that which is present in a given environment. For example, persons afflicted with lung disorders who require a high concentration of oxygen for each of breathing are now mostly limited to bottled oxygen, and movement of such persons is accordingly severely restricted. Miners also need higher oxygen levels than are available under some mining conditions.

Oxygen may also be extracted from water using the apparatus and method of the invention. Typical applications include supplying oxygen to free-swimming divers, to divers in submersible vehicles, to fuel cells which operate under water, and to various energy consuming engines which require oxygen for combustion processes.

While the above is a complete description of the preferred embodiments of the invention, other arrangements and equivalents are possible and may be employed without departing from the true spirit and scope of the invention. Therefore the description and illustrations should not be construed as limiting the scope of the invention, which is delineated by the appended claims.

## Claims

1. A polyalkylamine of the general formula
$R_1$-($CH_2$)-NH-$(CH_2)_3$-$NR_3$-$(CH_2)_o$-NH-($CH_2$)-$R_2$ where
$R_1$ = $R_2$ = 2-Pyridyl;
o = 2, 3, or 4;
$R_3$ is hydrogen for o = 2 or 4; and
$R_3$ is methyl for o = 3.

2. A polyalkylamine of the general formula
$R_1$-$(CH_2)_2$-NH-($CH_2$)-X-($CH_2$)-NH-$(CH_2)_2$-$R_2$
where
$R_1$ and $R_2$ are selected from the group consisting of 2-pyridyl and amino; and
X is 2,6-pyridyl.

3. A polyalkylamine of the general formula
$R_1$-$(CH_2)_m$-NH-$(CH_2)_n$-X-$(CH_2)_o$-NH-$(CH_2)_p$-$R_2$
where
$R_1$ and $R_2$ are each organic groups including a nitrogen;
m, n, o, and p are each 1, 2, 3, or 4; and

X is selected from the group consisting of 2,6-pyridyl, 2,6-piperidyl, 2,5-pyrrolyl, 2,5-imidazolyl, -O-, -S-, -P-and -N-$R_3$ where $R_3$ is hydrogen, lower alkyl, or aralkyl; and

wherein n and o are unequal.

4. A metallic complex of a polyalkylamine of the general formula

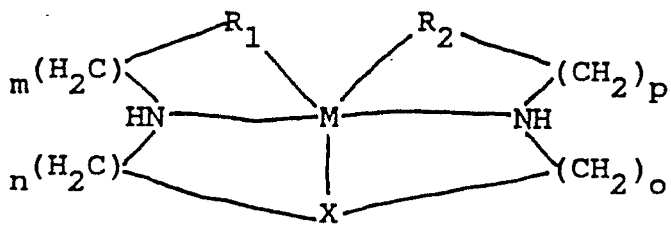

where

$R_1$ and $R_2$ are each organic groups including a nitrogen coordinated to M;

m, n, O, and p are each 1, 2, 3, or 4; and

X is selected from the group consisting of 2,6-pyridyl, 2,6-piperidyl, 2,5-pyrrolyl, 2,5-imidazolyl, -O--S-, -P-, and where $R_3$ is hydrogen, lower alkyl, or aralkyl; and

where n and o are unequal.

5. The metallic complex according to claim 4 wherein

M is selected from the group consisting of titanium, manganese, chromium, iron, cobalt, nickel, copper, ruthenium, rhodium, palladium, osmium, iridium, vanadium, and platinum.

6. The metallic complex according to claim 3 wherein $R_1$ and $R_2$ are each selected from the group consisting of amino, alkylamino-, dialkylamino-, 2-pyridyl, alkyl-substituted 2-pyridyl, 2-piperidyl, substituted 2-piperidyl, 2-imidazolyl, 4-imidazolyl, substituted 2-and 4-imidazolyl, 2-pyrrolyl, alkyl-substituted 2-pyrrolyl, 2-pyrazinyl, 2-indolyl, 1-and 3-isoindolyl, 8-quinolinyl, 2-quinolinyl, alkyl-substituted 2-quinolinyl, and alkyl-substituted 8-quinolinyl.

7. A method for extracting a ligand from a first fluid environment, the method comprising the steps of:

contacting the first fluid environment containing ligand with the first surface of a first ligand permeable membrane having a first and second surface wherein the membrane separates the environment from an interior space of a container;

contacting a carrier fluid with the second surface of the membrane wherein the carrier fluid is confined in the container and the carrier fluid contains a carrier compound, whereby at least a portion of a ligand which diffuses through the membrane binds to the carrier compound to give bound ligand complex;

transporting the carrier fluid containing the bound ligand complex to a first electrode compartment of an electrochemical cell which forms a second portion of the container;

electrochemically modulating the carrier compound to an oxidation state having relatively less binding affinity for the ligand, thereby releasing free ligand into the carrier fluid and producing a non-binding state carrier compound;

removing ligand from the carrier fluid to give a ligand depleted carrier fluid;

transporting the ligand depleted carrier fluid containing the non-binding state carrier compound to a second electrode compartment of an electrochemical cell which forms a third portion of the container; and

electrochemically modifying the non-binding state carrier compound to reform the binding state carrier compound;

wherein the carrier compound comprises a metallic complex of a polyalkylamine having the general formula:

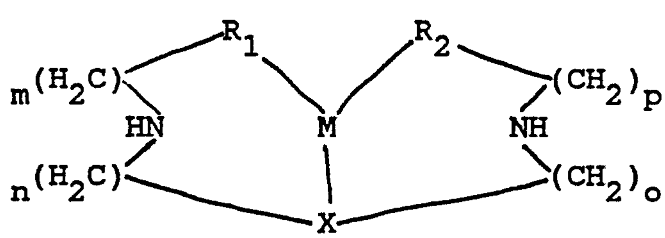

where

M is selected from the group consisting of titanium, manganese, chromium, iron, cobalt, nickel, copper, ruthenium, rhodium, palladium, osmium, iridium, vanadium, and platinum;

$R_1$ and $R_2$ are each organic groups including a nitrogen atom coordinated to M;

m, n, o, and p are each 1, 2, 3, or 4; and

X is selected from the group consisting of -O-, -S-, >P-R, 2, 6-pyridyl, 2,6-piperidyl, 2,5-pyrrolyl, 2,4-imidazolyl substituted heterocyclic amines, and -N-$R_3$ where $R_3$ is hydrogen, lower alkyl, or aralkyl.

8. A method for extracting a ligand from a first fluid environment and releasing the ligand to a second fluid environment, the method comprising the steps of:

providing an electrochemical cell including an anode, a cathode and an electrolyte comprising a transition metal oxygen carrier compound having the general formula:

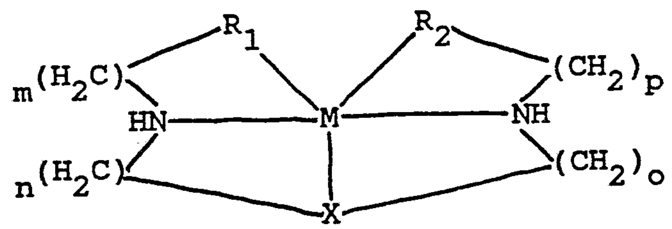

$R_1$ and $R_2$ are each organic groups including a nitrogen atom coordinated to M;

m, n, o, and p are each 1, 2, 3, or 4; and

X is selected from the group consisting of -O-, -S-, >P-R, 2,6-pyridyl, 2,6-piperidyl, 2,5-pyrrolyl, 2,4-imidazolyl, substituted heterocyclic amines, and -N-$R_3$ where $R_3$ is hydrogen, lower alkyl, or aralkyl;

providing a potential across the cell sufficient to convert the metal of the carrier compound to a binding valence state at the cathode and convert, at the anode, the metal of a carrier compound ligand complex to a non-binding valence state;

communicating the ligand from the first fluid environment to the electrolyte in the region of the cathode so that the carrier compound ligand complex is formed between the ligand and the binding valence state carrier compound; and

transporting the carrier compound ligand complex to the anode for release of the ligand.

9. The method of claim 8 wherein the ligand is molecular oxygen.

10. The method of claim 8 further comprising the step of electrochemically releasing the ligand from the carrier compound ligand complex to the second fluid environment.

11. The method of claim 8, 9, or 10 using an electrocatalyst to transfer electrons between the electrodes and the carrier compound, the electrocatalyst being mobile in the carrier fluid, immobilized on at least one of the electrodes, or immobilized on a substrate other than an electrode and circulated between the electrodes.

12. A method for extracting oxygen from a fluid environment, which comprises the steps of:

contacting a first fluid environment containing oxygen with a first surface of a first oxygen permeable membrane having a first and a second surface, wherein said membrane separates said environment from an interior space of an artificial container;

contacting a carrier fluid with said second surface of said membrane, wherein said carrier fluid is confined in said container and said carrier fluid contains a binding-state oxygen carrier, whereby oxygen which diffuses through said membrane binds to said carrier to give a bound oxygen complex;

transporting said carrier fluid containing said bound oxygen complex to an unloading station; and

removing oxygen from said carrier fluid to give an oxygen-depleted carrier fluid.

13. The method of claim 12 further comprising transporting said bound oxygen complex to the unloading station where the oxygen is removed from said carrier fluid by exposing said binding-state oxygen carrier to the cathodic side of an electrochemical cell which forms a second portion of said container.

14. The method of claim 12 further comprising transporting the said carrier fluid containing bound oxygen to the unloading station where the oxygen is removed from said carrier fluid by exposing said carrier fluid to a sufficiently low pressure of oxygen to give an oxygen-depleted carrier fluid.

15. A composition of matter for use in electrochemical ligand extraction and generation processes comprising:

an aqueous solution of greater than about 10 millimoles per liter of a metallic complex of a polyalkylamine having the general formula:

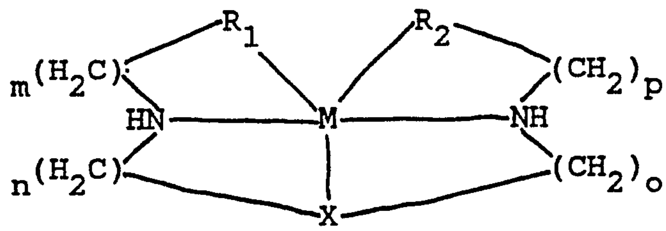

where

M is an electrochemically active transition metal ion;

$R_1$ and $R_2$ are each organic groups including a nitrogen atom coordinated to M;

m, n, o, and p are each 1, 2, 3, or 4; and

X is selected from the group consisting of -O-, -S-, >P-R, 2,6-pyridyl, 2,6-piperidyl, 2,5-pyrrolyl, 2,4-imidazolyl, substituted heterocyclic amines, and -N-$R_3$ where $R_3$ is hydrogen, lower alkyl, or aralkyl.

16. The composition of matter according to claim 15 further comprising a supporting electrolyte including a salt selected from the group consisting of sodium chloride, potassium chloride, sodium nitrate, potassium nitrate, sodium sulfate, and potassium sulfate, the salt having a concentration between about 0.1 and about 4.0 molar.

17. The composition of matter according to claim 15, titrated to a pH of about 1 pH unit above the pH at which greater than about 50% of the metallic complex, when exposed to a ligand containing environment, is present as a ligand complex.

18. An electrochemical cell for extracting oxygen from a fluid mixture feedstock, said cell comprising:

an anode and a cathode connectible to a voltage or current source, wherein at least one of said anode and cathode have been oxidized to produce catalytic sites on its surface;

a carrier fluid including a carrier compound capable in a reduced state of binding oxygen and in an oxidized state of releasing oxygen;

means for circulating the carrier fluid past the anode where oxidation of the carrier compound occurs and past the cathode where reduction of the carrier compound occurs; and

means for exposing the fluid mixture feedstock to the carrier fluid as it passes from the cathode to the anode whereby the carrier compound in its reduced state will bind the oxygen.

19. An electrochemical cell as in claim 18, further including means for collecting the oxygen which is released as a result of changing the oxidation state of the carrier compound.

20. An electrochemical cell as in claim 18, wherein at least one of the anode and cathode is composed of carbon or a metal selected from the group consisting of titanium, iron, nickel, copper, silver, platinum, gold, palladium, tin, tantalum, cobalt, lead, cadmium ruthenium oxide, and alloys and mixtures thereof.

21. An electrochemical cell as in claim 18, wherein at least one of the anode and cathode is a porous carbon electrode capable of allowing carrier fluid flow therethrough, selected from the group consisting of carbon felt, a carbon particle bed, matted carbon fiber, and woven carbon fiber.

22. An electrochemical cell as in claim 18, wherein the means for exposing the fluid mixture feedstock to the carrier fluid includes an oxygen-permeable membrane.

23. An electrochemical cell as in claim 18, wherein the catalytic sites have been introduced by surface oxidation of the anode and/or cathode.

24. An electrochemical cell as in claim 18, wherein the carrier compound comprises a transition metal complex of a porphin ring, or has the general formula:

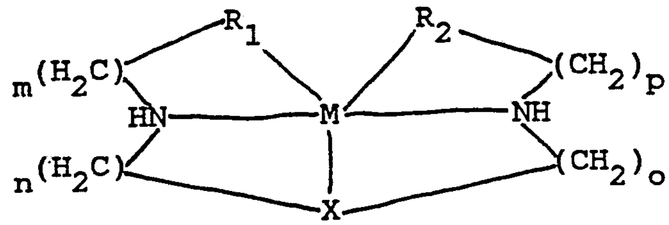

where

$R_1$ and $R_2$ are each organic groups including a nitrogen atom coordinated to M;

m, n, o, and p are each 1, 2, 3, or 4; and

X is selected from the group consisting of -O-, -S-, >P-R, 2,6-pyridyl, 2,6-piperidyl, 2,5-pyrrolyl, 2,4-imidazolyl, substituted heterocyclic amines, and $-N-R_3$ where $R_3$ is hydrogen, lower alkyl, or aralkyl;

wherein the transition metal is selected from the group consisting of titanium, manganese, chromium, iron, cobalt, nickel, copper, ruthenium, rhodium, palladium, osmium, iridium, vanadium, and platinum.

25. An improved method for extracting molecular oxygen from a fluid mixture feedstock of the type wherein a carrier fluid is circulated between a loading station and an electrochemical cell having a pair of electrodes, wherein said carrier fluid includes a carrier compound capable in a first oxidation state of binding oxygen and in a second oxidation state of releasing bound oxygen, whereby the carrier compound is converted to the first oxidation state by one electrode of the electrochemical cell in order to bind oxygen at the loading station and the carrier compound is converted to the second oxidation state by the other electrode in order to release oxygen, said improvement comprising:

providing an electrocatalyst selected to promote electron transfer between said electrode and the carrier compound proximate to at least one of the electrodes whereby the energy required to oxidize or reduce the carrier compound is decreased.

26. A method as in claim 25, wherein the electrocatalyst is selected from the group consisting of anions, cations, phenolic compounds, phenolic ether compounds, sulfonic ether compounds, organometallic compounds, metal porphyrins, metal macrocyclic compounds, amines, thiazines, delocalized aromatic compounds; cytochrome compounds; hydroxylamines; substituted ferrocenes, iodide ions, phenylenediamines, substituted quinones, and metal phosphine complexes.

27. A method as in claim 25, wherein the carrier fluid is at a pH in the range from about 5 to 9 and wherein the electrocatalyst is present at a concentration from about 0.01 mM to 1M

28. A method as in claim 25, wherein a voltage is applied across the electrodes, said voltage being from about 0.0 to 1.0 volts less than the uncatalyzed cell potential of the oxygenated carrier compound under the conditions of the cell.

29. An electrochemical system for extracting molecular oxygen from a fluid mixture feestock, said system comprising:

an oxygen loading station;

an electrochemical cell including a pair of electrodes;

a voltage source connected to the electrodes;

a carrier fluid which circulates between the electrodes of the electrochemical cell and the oxygen loading station, said carrier fluid including a carrier compound capable in a first oxidation state of binding molecular oxygen and in a second oxidation state of releasing bound oxygen; and

an electrocatalyst in proximity to at least one of the electrodes, said electrocatalyst selected to promote electron transfer between the electrode and the carrier compound.

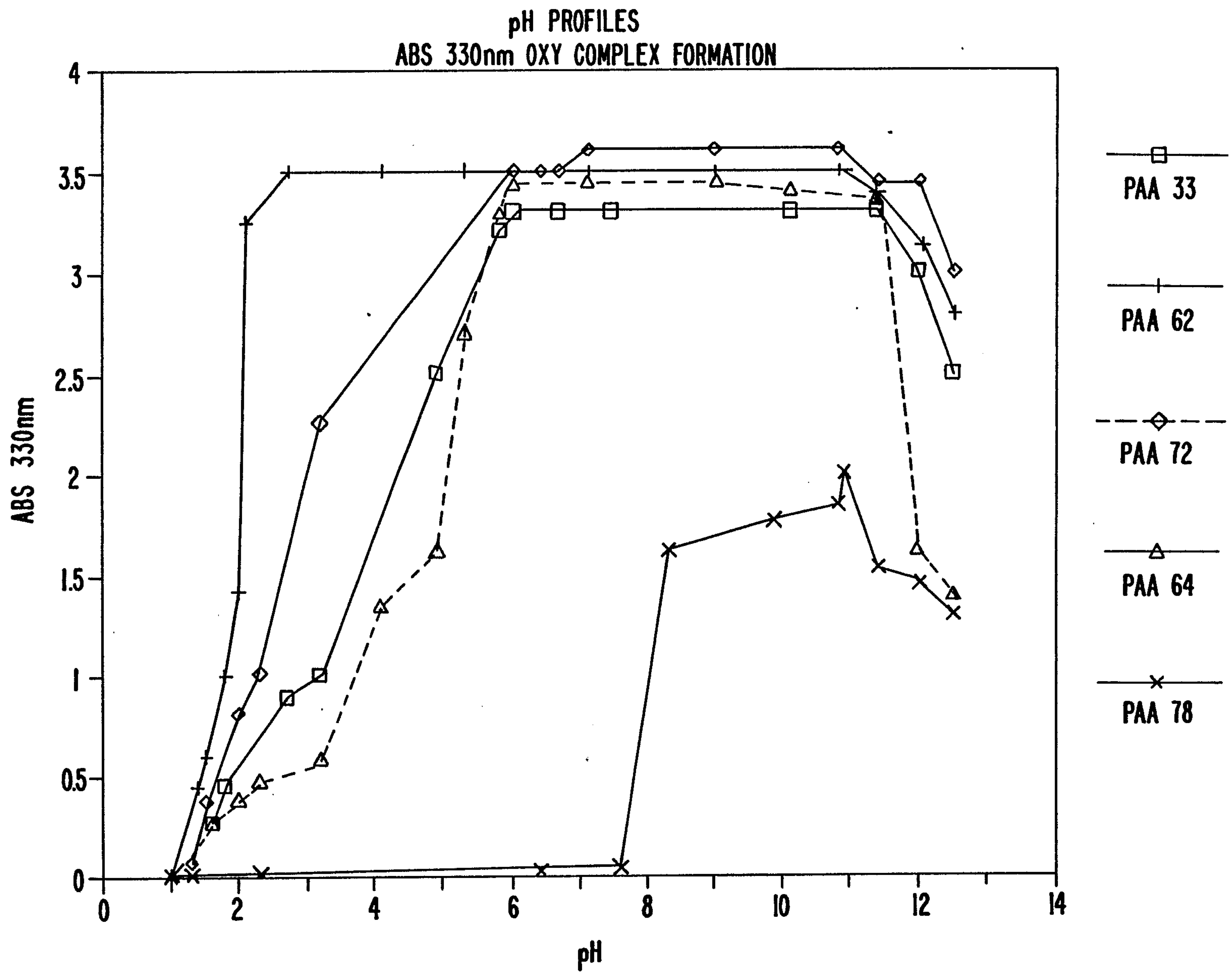
pH PROFILES
ABS 330nm OXY COMPLEX FORMATION
ABS 330nm
pH
0
0.5
1
1.5
2
2.5
3
3.5
4
0
2
4
6
8
10
12
14
PAA 33
PAA 62
PAA 72
PAA 64
PAA 78

FIG._1.

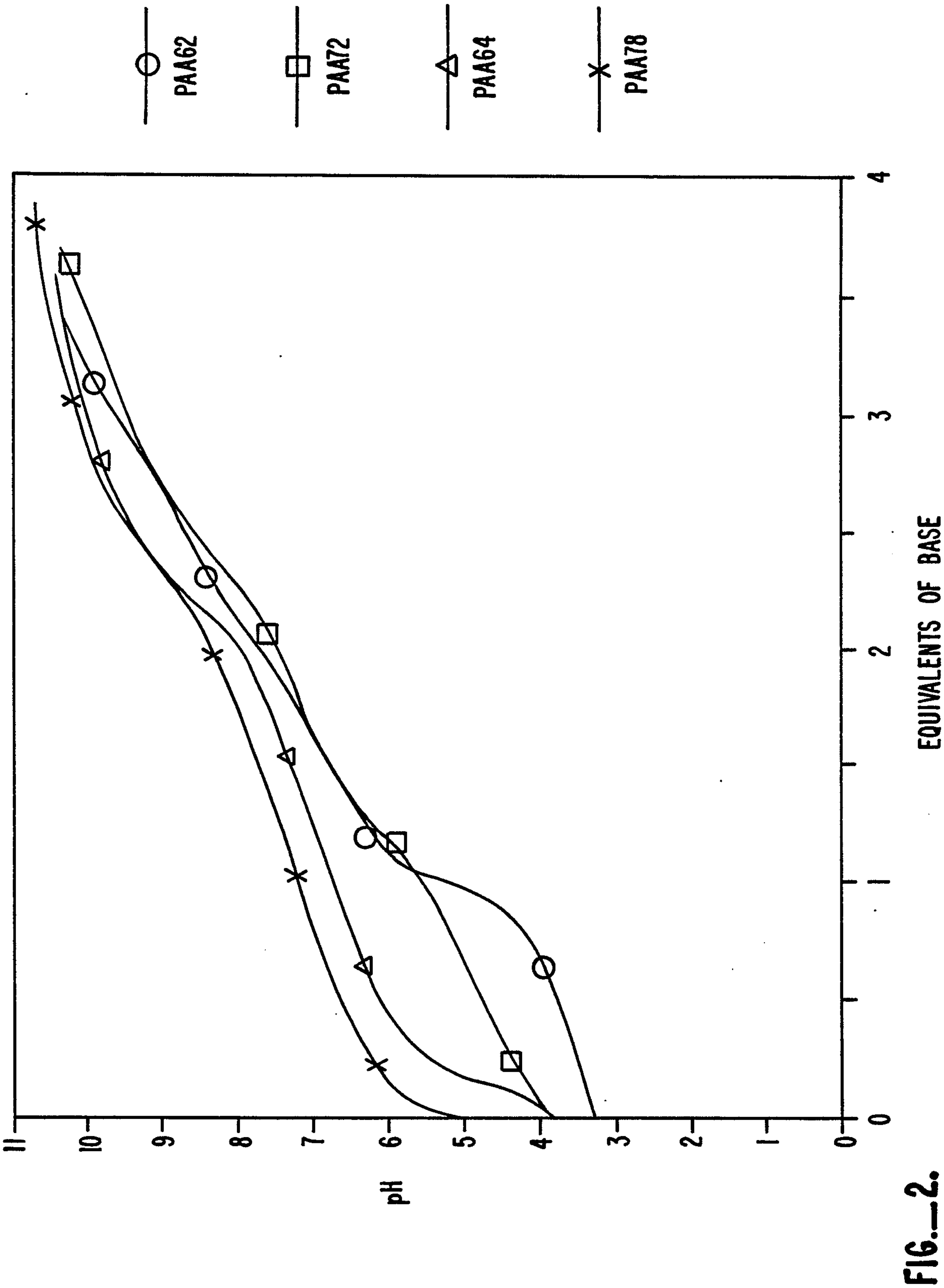
PAA62
PAA72
PAA64
PAA78
pH
11
10
9
8
7
6
5
4
3
2
1
0
0
1
2
3
4
EQUIVALENTS OF BASE

FIG.__2.

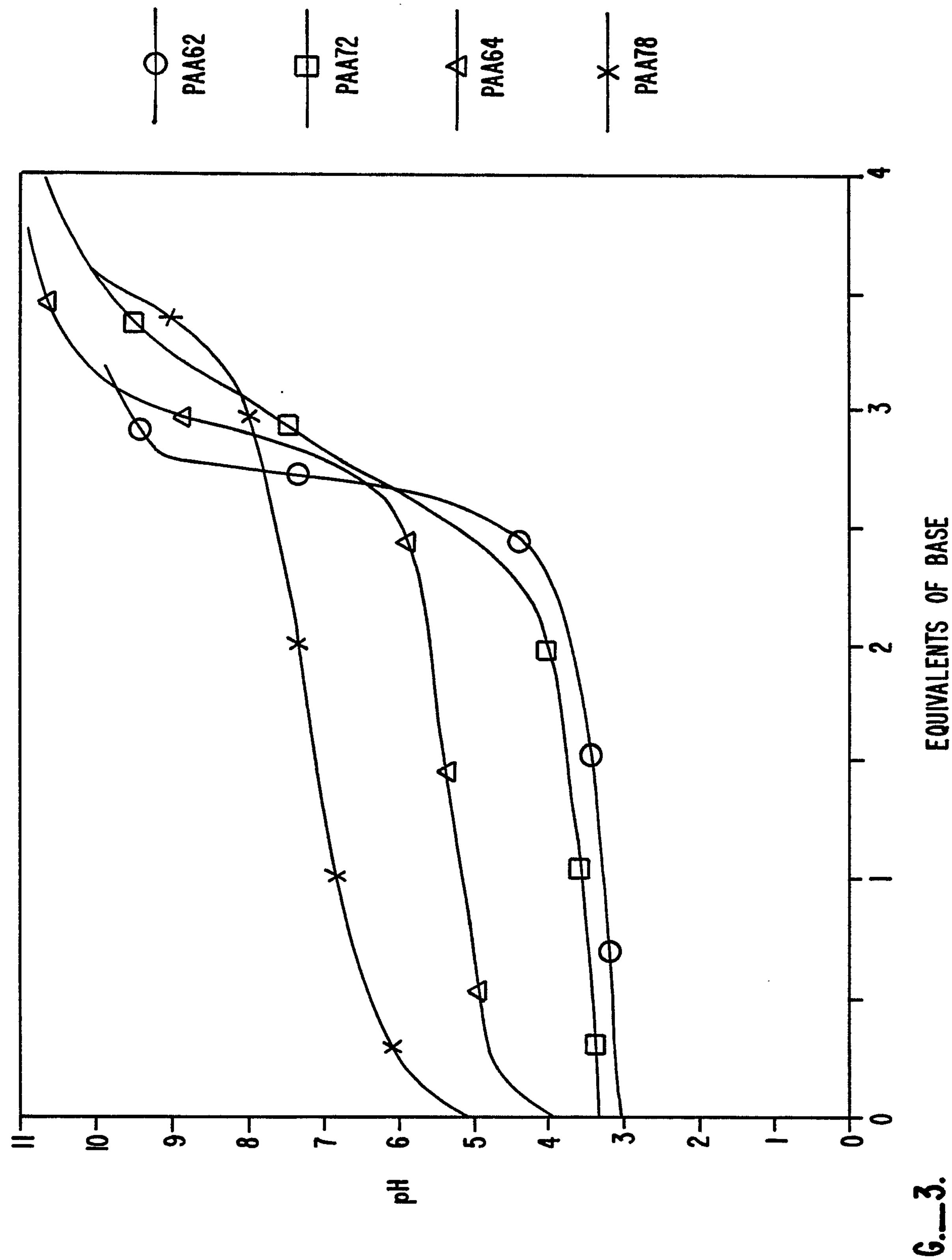
PAA62
PAA72
PAA64
PAA78
pH
0
1
2
3
4
5
6
7
8
9
10
11
0
1
2
3
4
EQUIVALENTS OF BASE

FIG._3.

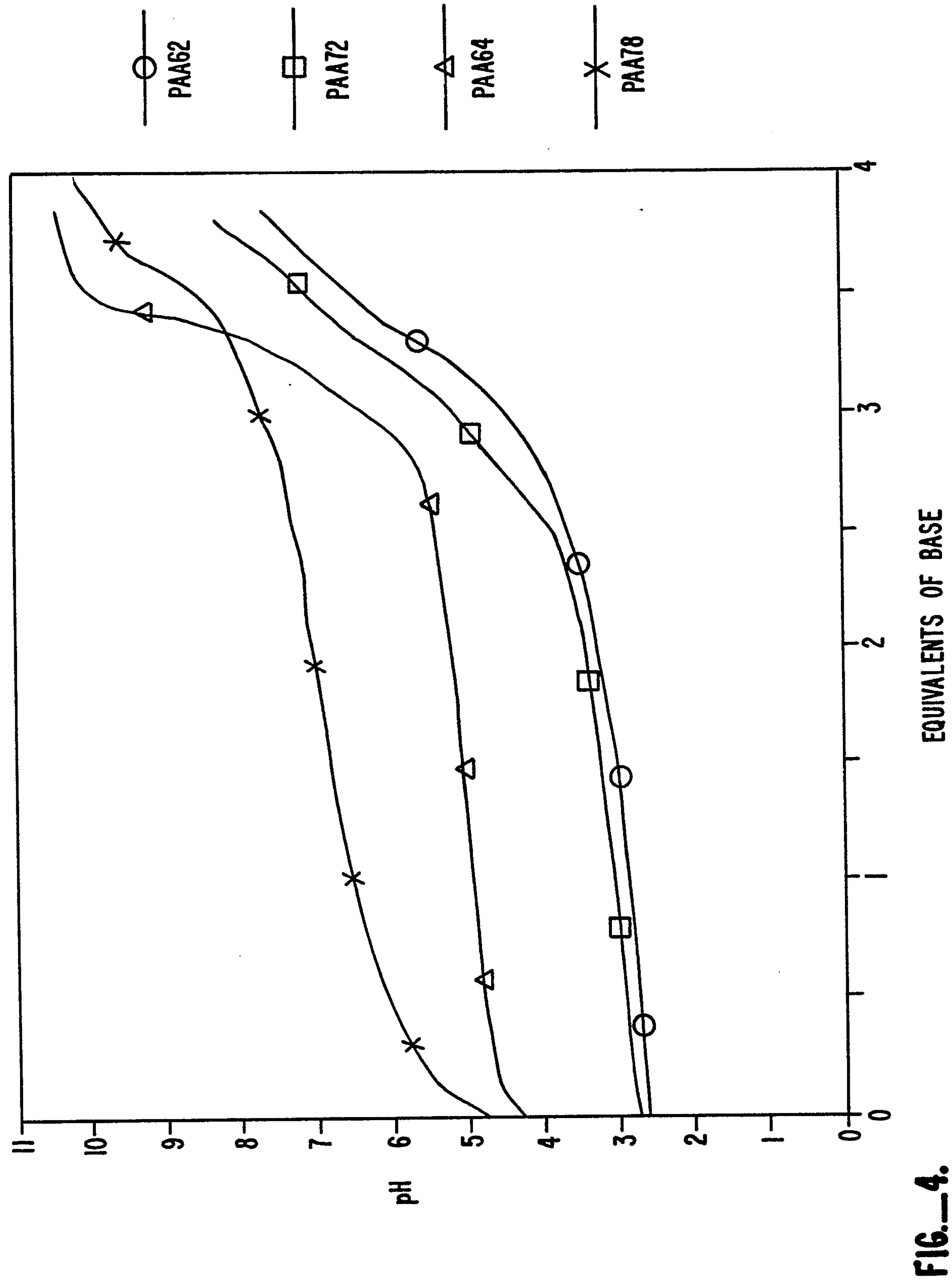
PAA62
PAA72
PAA64
PAA78
pH
0
1
2
3
4
5
6
7
8
9
10
11
EQUIVALENTS OF BASE
0
1
2
3
4

FIG._4.

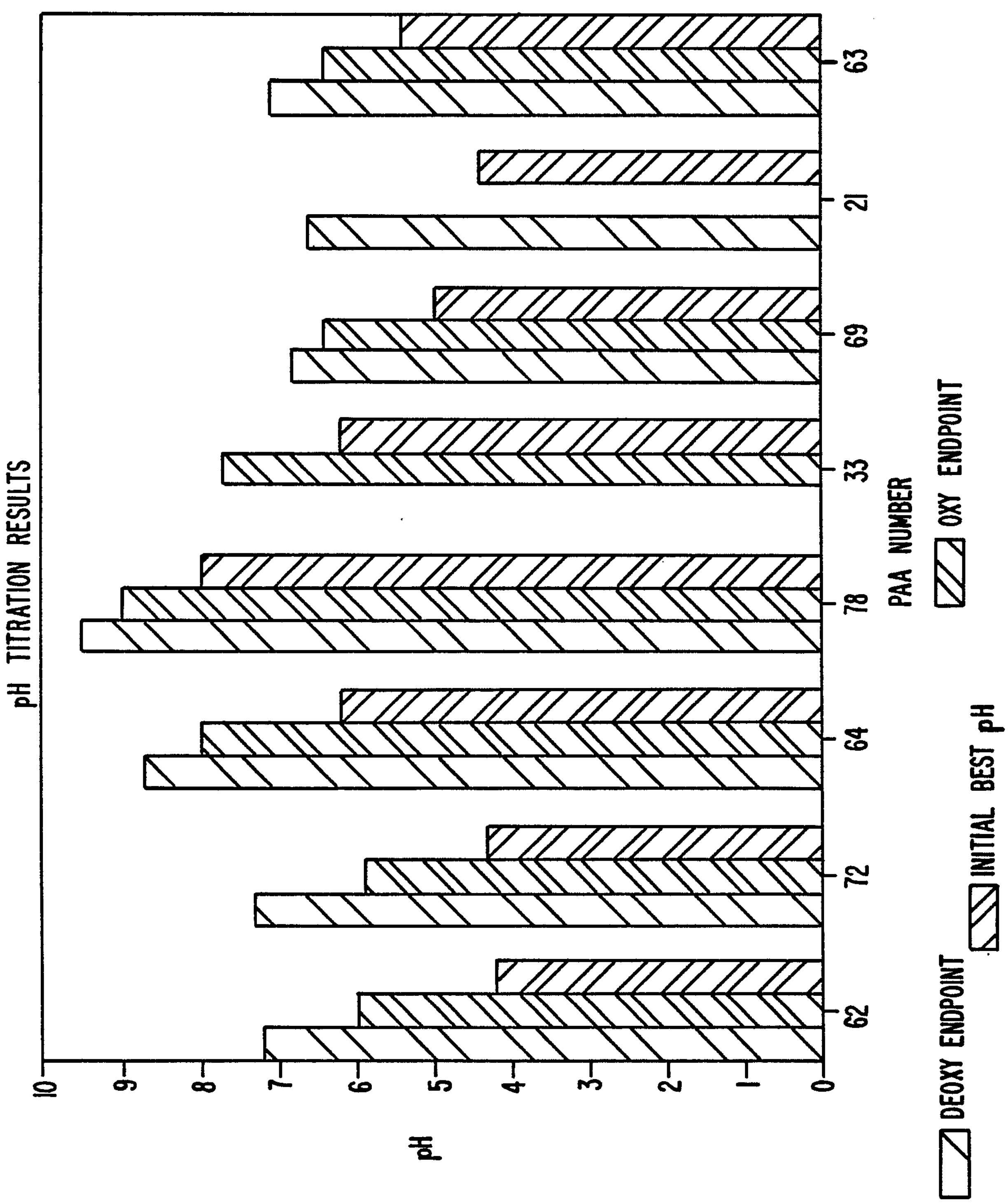

pH TITRATION RESULTS
pH
10
9
8
7
6
5
4
3
2
1
0
62
72
64
78
33
69
21
63
PAA NUMBER
DEOXY ENDPOINT
INITIAL BEST pH
OXY ENDPOINT


FIG.__5.

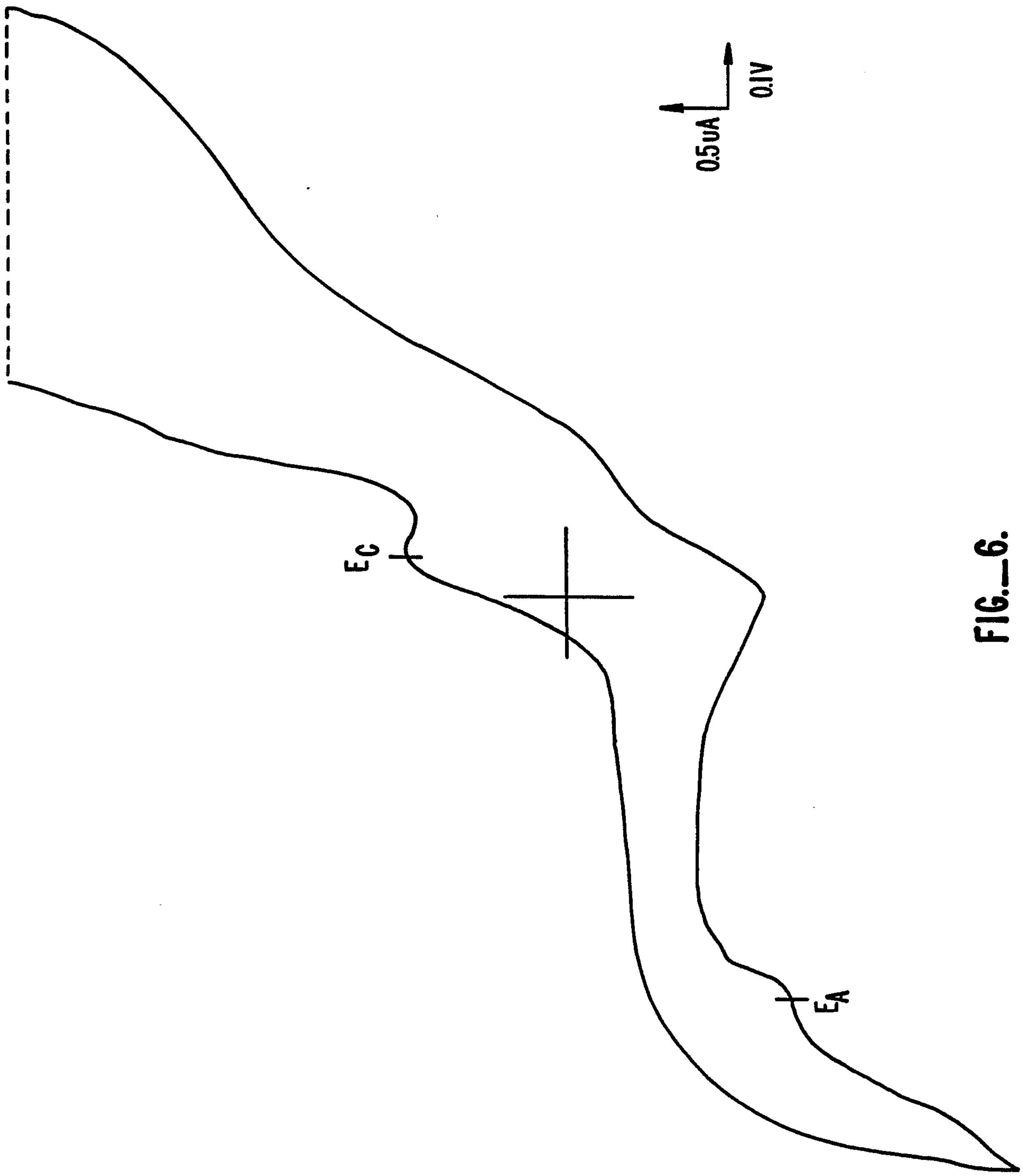


FIG._6.

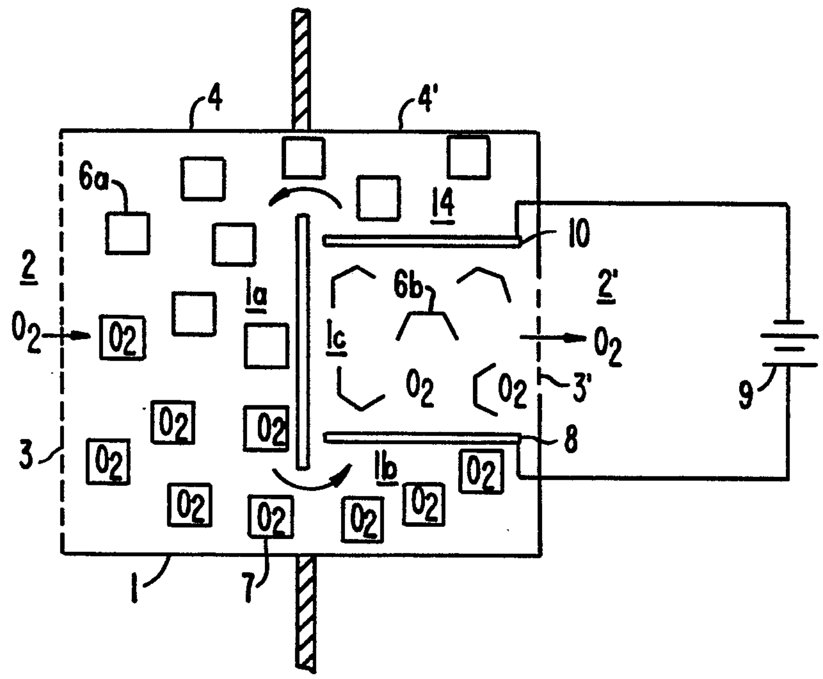

4
4'
6a
14
10
2
1a
6b
2'
$O_2$
$O_2$
1c
$O_2$
$O_2$
3'
9
8
3
1b
1
7


FIG._7.

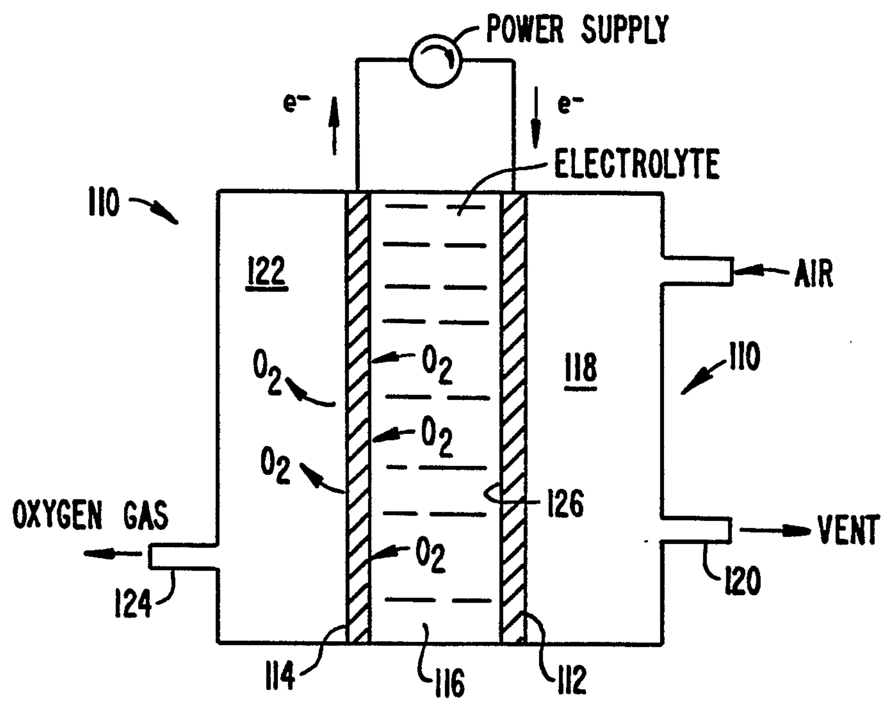

POWER SUPPLY
e-
e-
ELECTROLYTE
110
122
AIR
118
110
$O_2$
126
OXYGEN GAS
VENT
124
120
114
116
112


FIG._10.

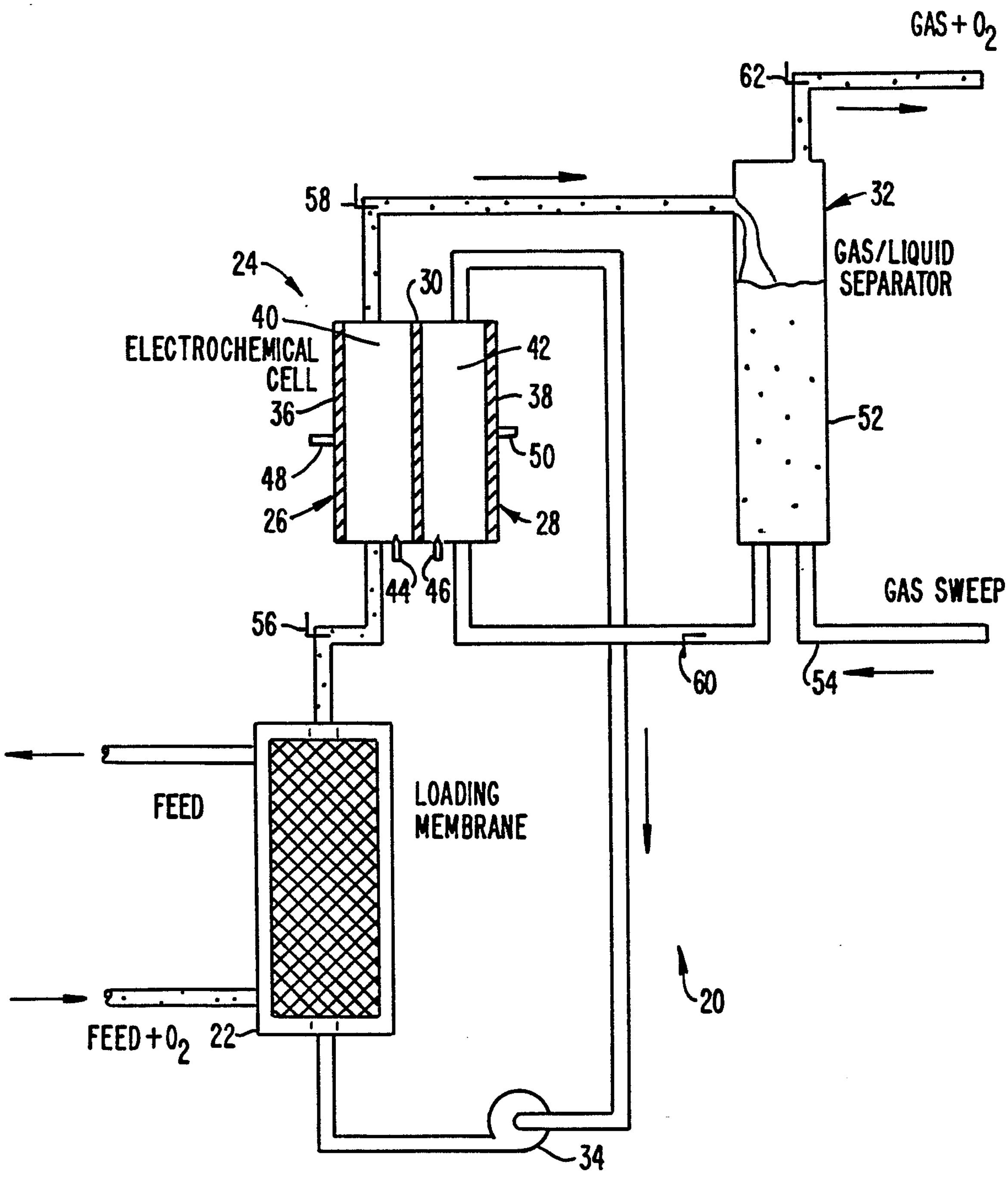
GAS + $O_2$
62
58
32
GAS/LIQUID SEPARATOR
24
30
40
ELECTROCHEMICAL CELL
42
36
38
52
48
50
26
28
44
46
GAS SWEEP
56
60
54
FEED
LOADING MEMBRANE
20
FEED + $O_2$
22
34

FIG._8.

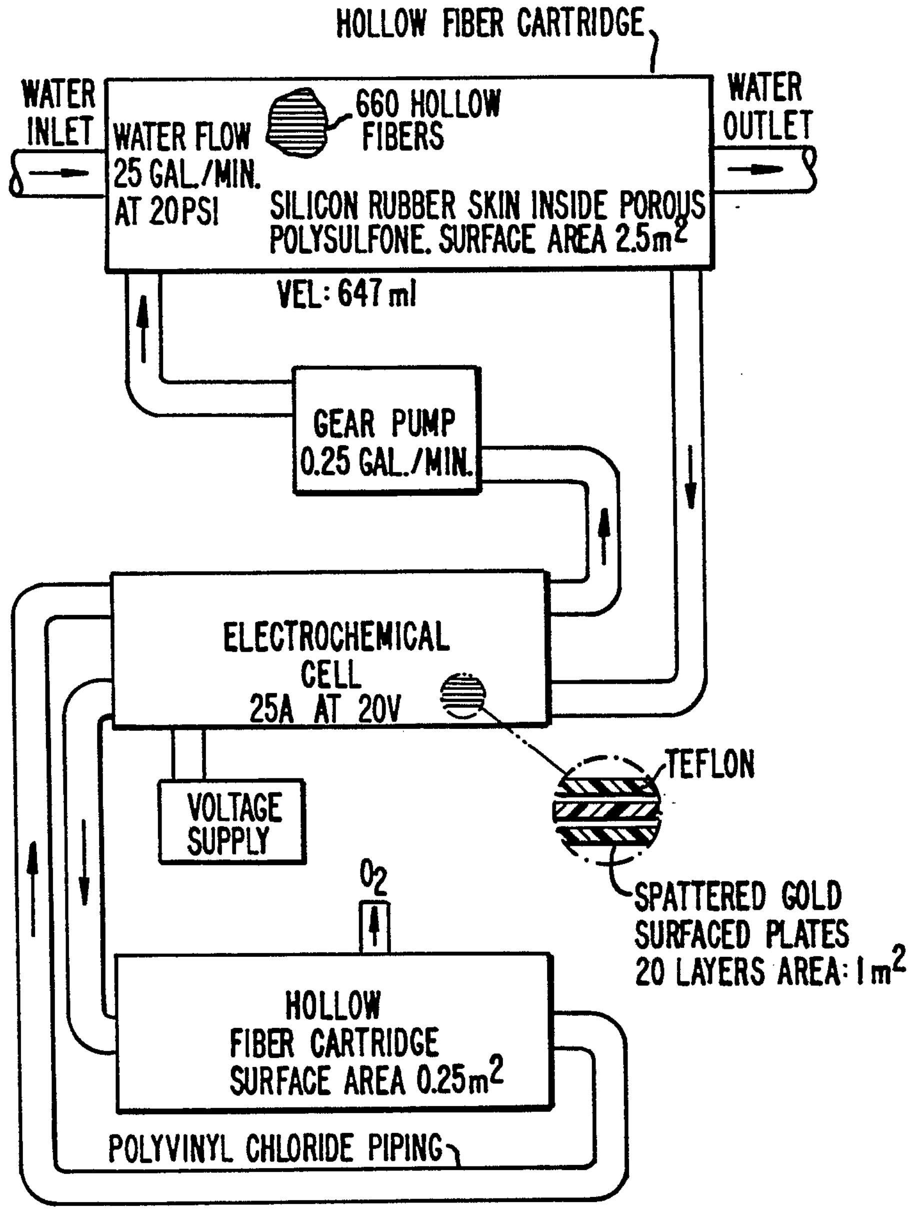
HOLLOW FIBER CARTRIDGE
WATER INLET
WATER FLOW 25 GAL./MIN. AT 20PSI
660 HOLLOW FIBERS
WATER OUTLET
SILICON RUBBER SKIN INSIDE POROUS POLYSULFONE. SURFACE AREA 2.5m2
VEL: 647 ml
GEAR PUMP 0.25 GAL./MIN.
ELECTROCHEMICAL CELL 25A AT 20V
TEFLON
VOLTAGE SUPPLY
O2
SPATTERED GOLD SURFACED PLATES 20 LAYERS AREA: 1 m2
HOLLOW FIBER CARTRIDGE SURFACE AREA 0.25m2
POLYVINYL CHLORIDE PIPING

FIG._9.

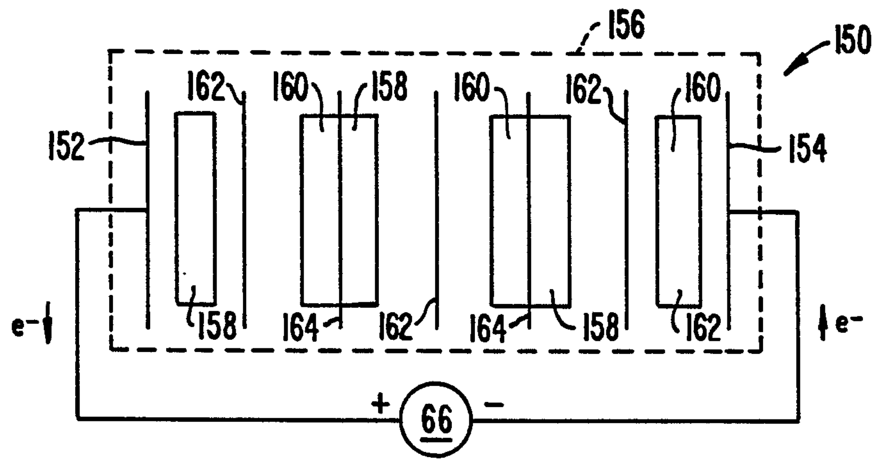
156
150
162
160
158
160
162
160
152
154
158
164
162
164
158
162
e-
e-
+
66
−

FIG._11.

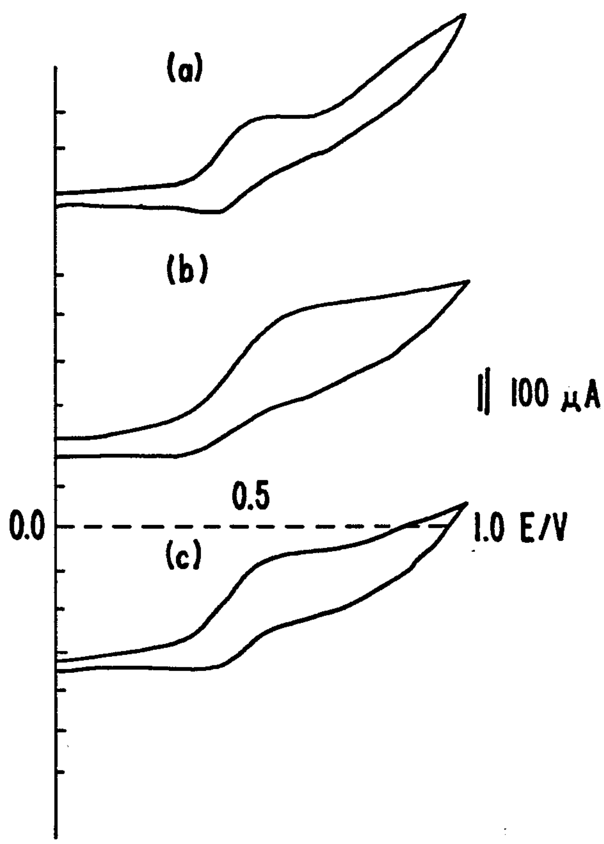
(a)
(b)
100 μA
0.5
0.0
1.0 E/V
(c)

FIG._17.

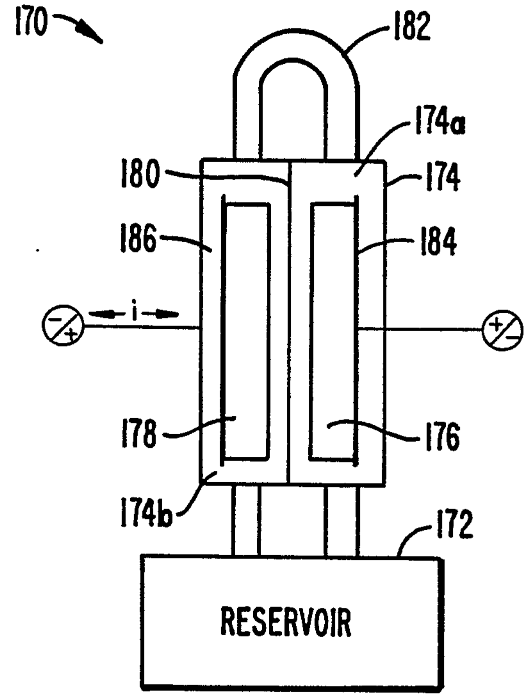
170
182
174a
180
174
186
184
i
178
176
174b
172
RESERVOIR

FIG._12.

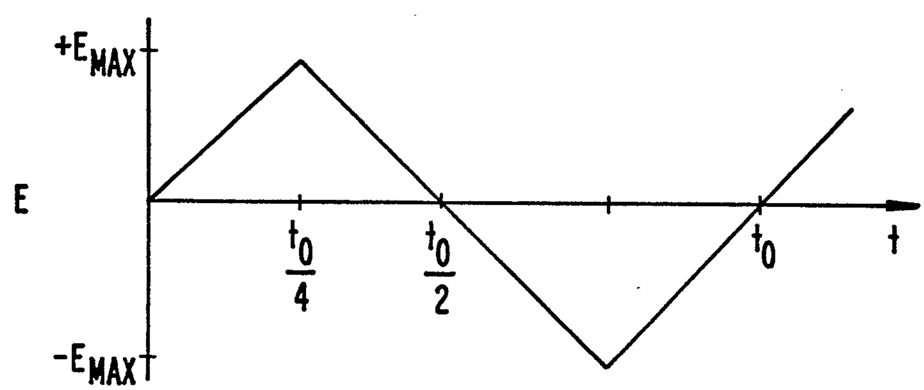
+E MAX
E
-E MAX
t0/4
t0/2
t0
t

FIG._13.

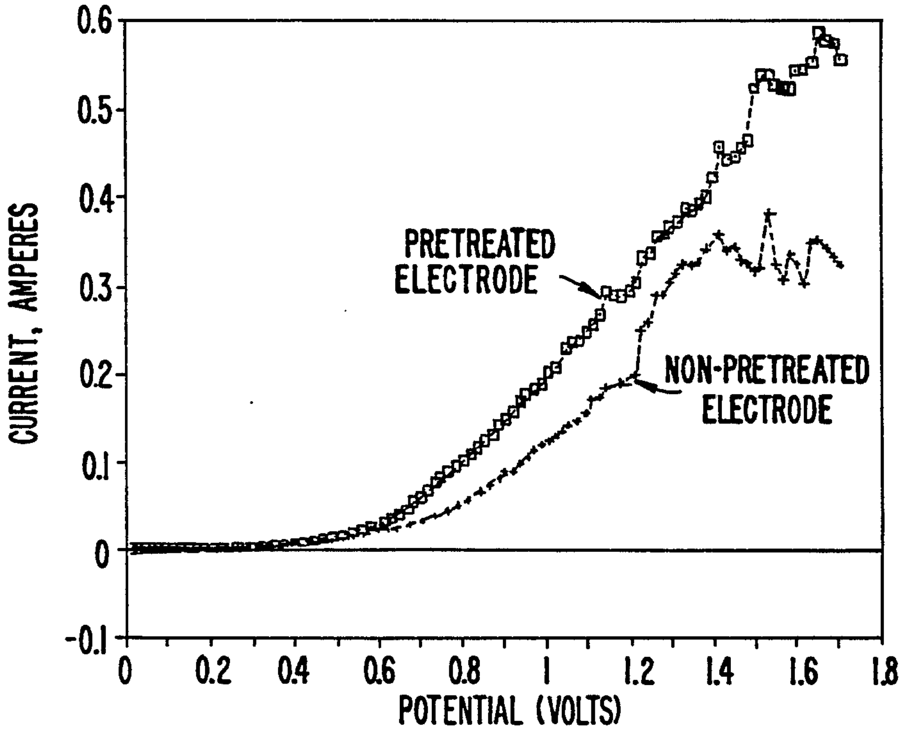


FIG._13A.

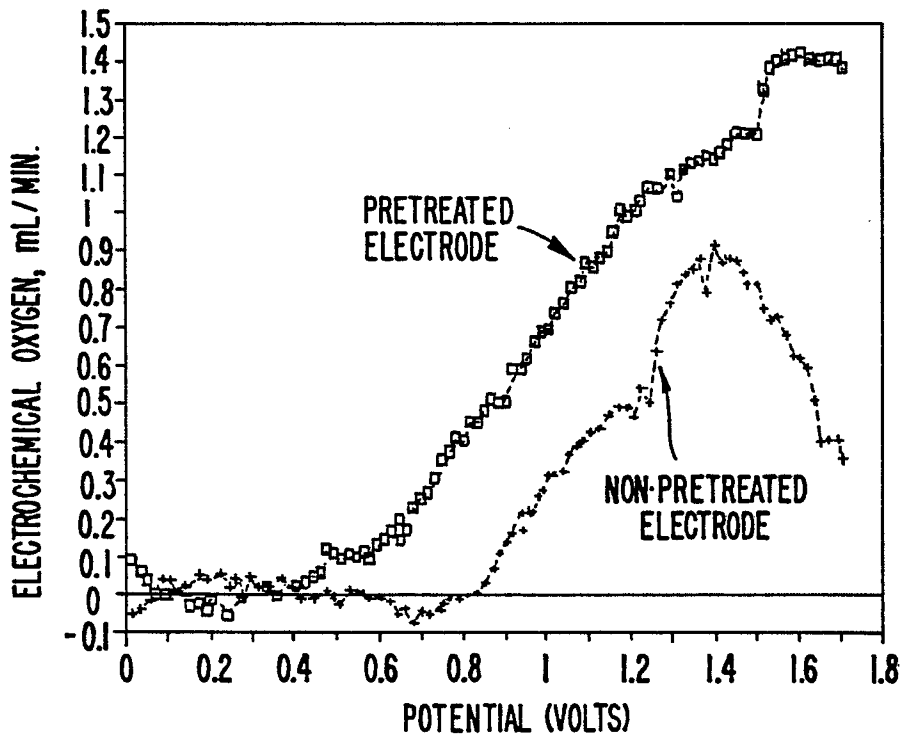


FIG._13B.

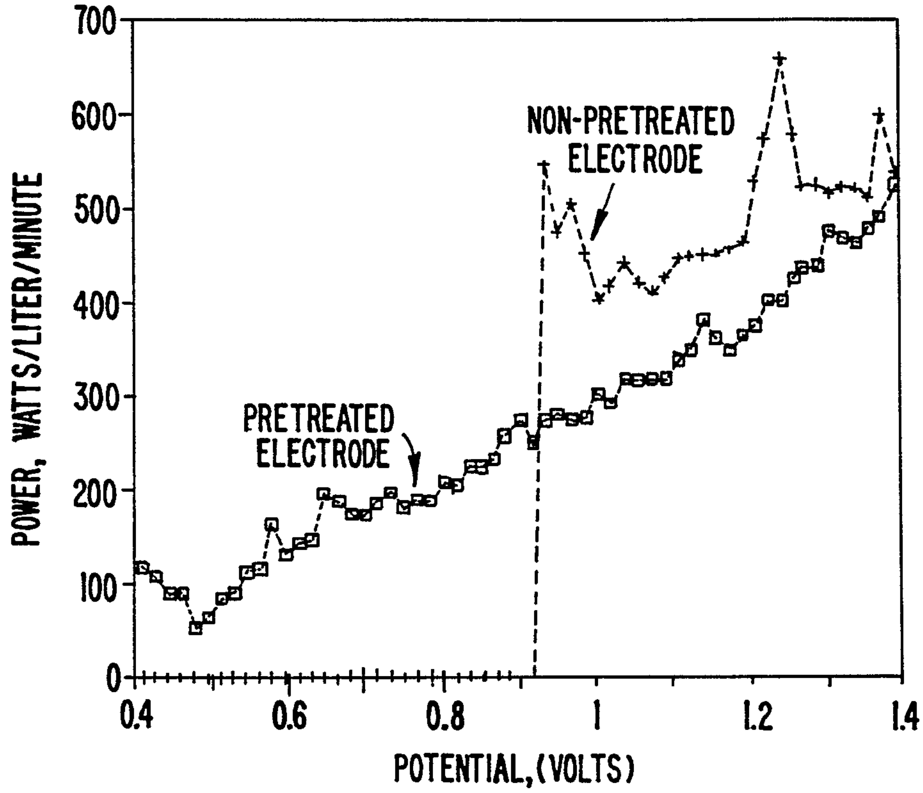


FIG._13C.

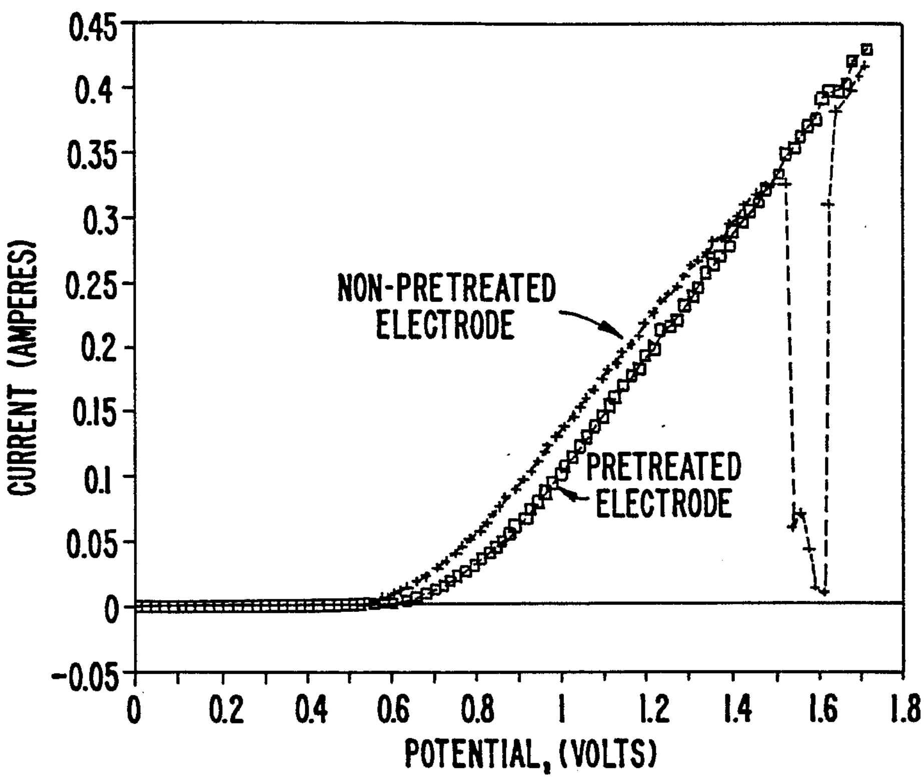


FIG._14A.

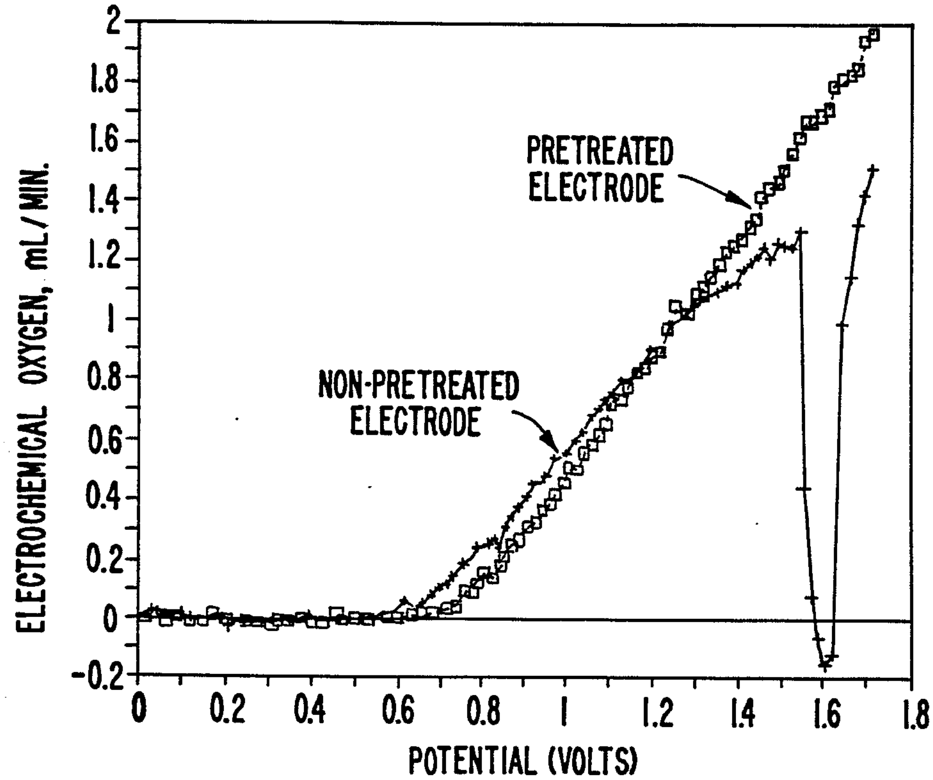


FIG._14B.

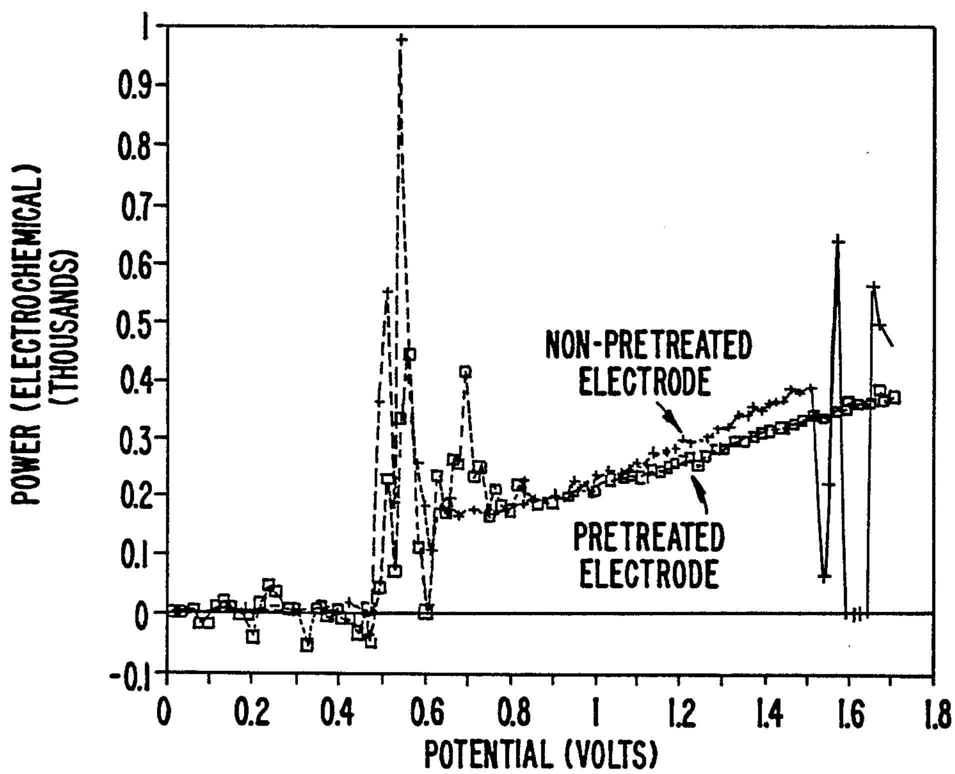


FIG._14C.

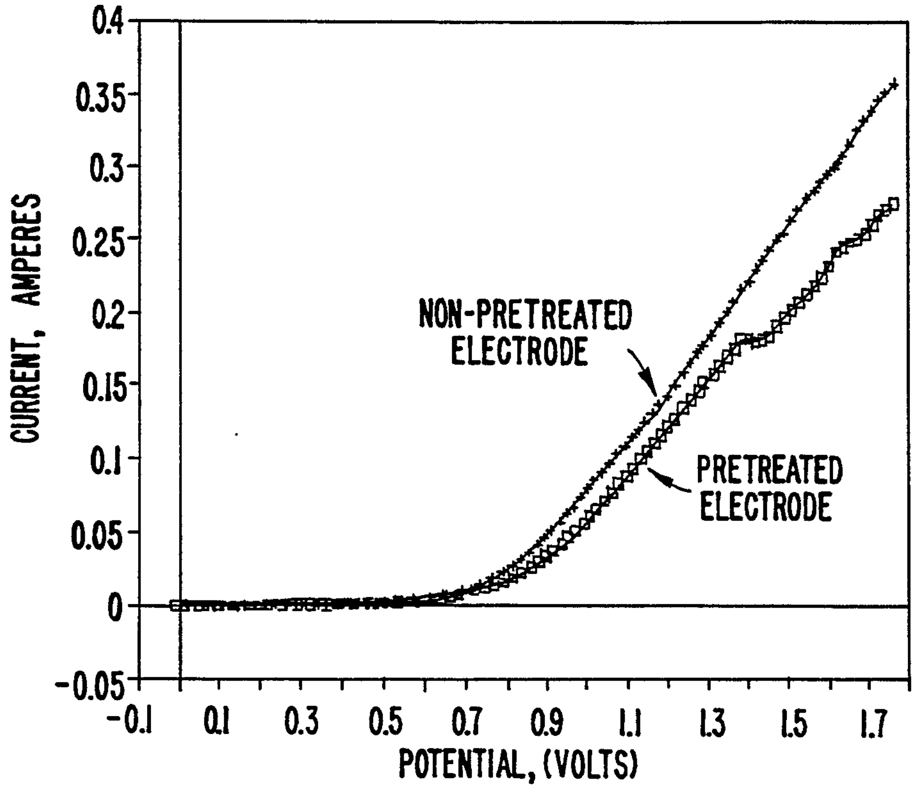


FIG._15A.

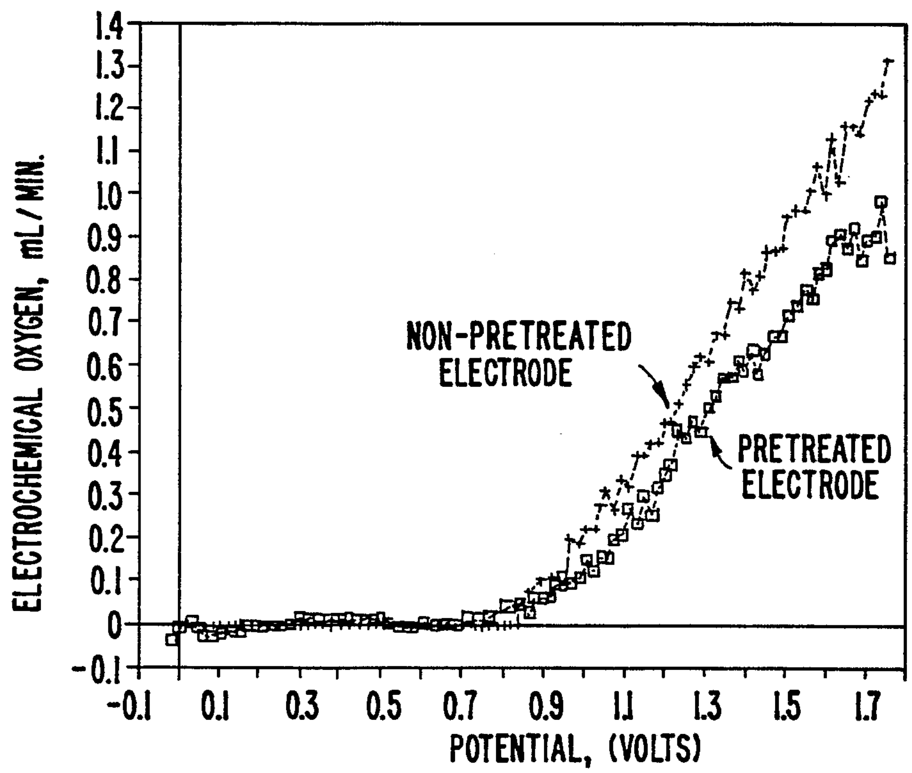


FIG._15B.

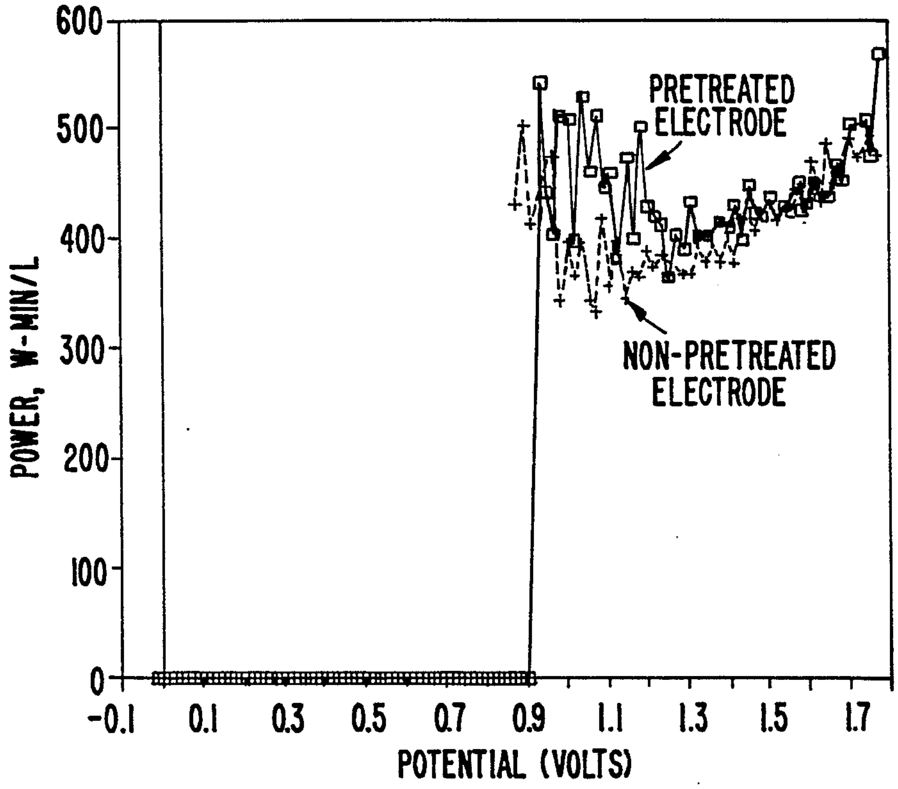


FIG._15C.

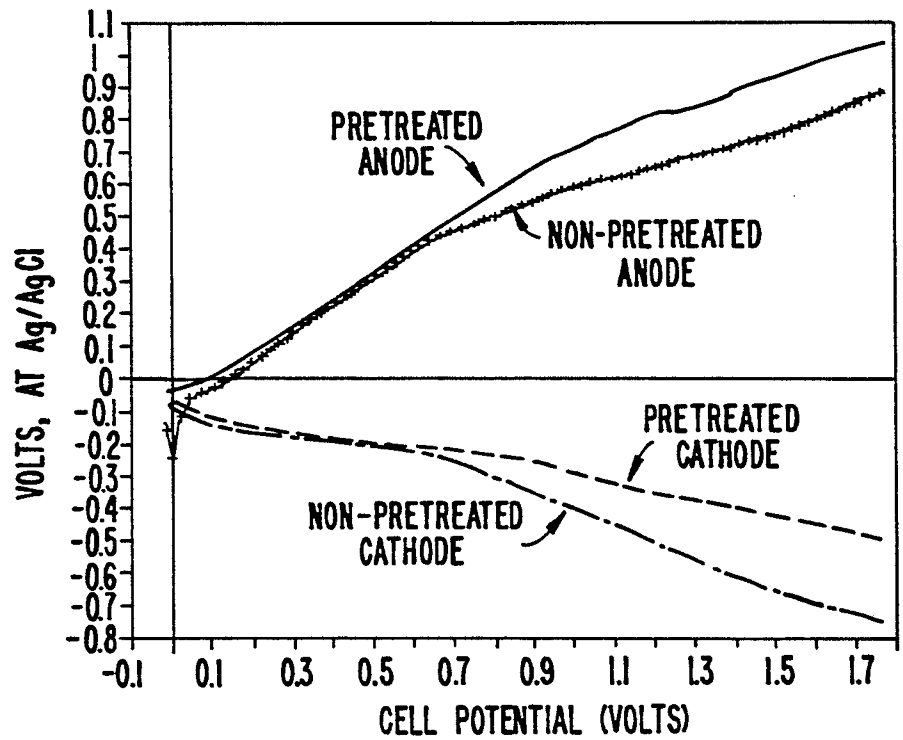


FIG._15D.

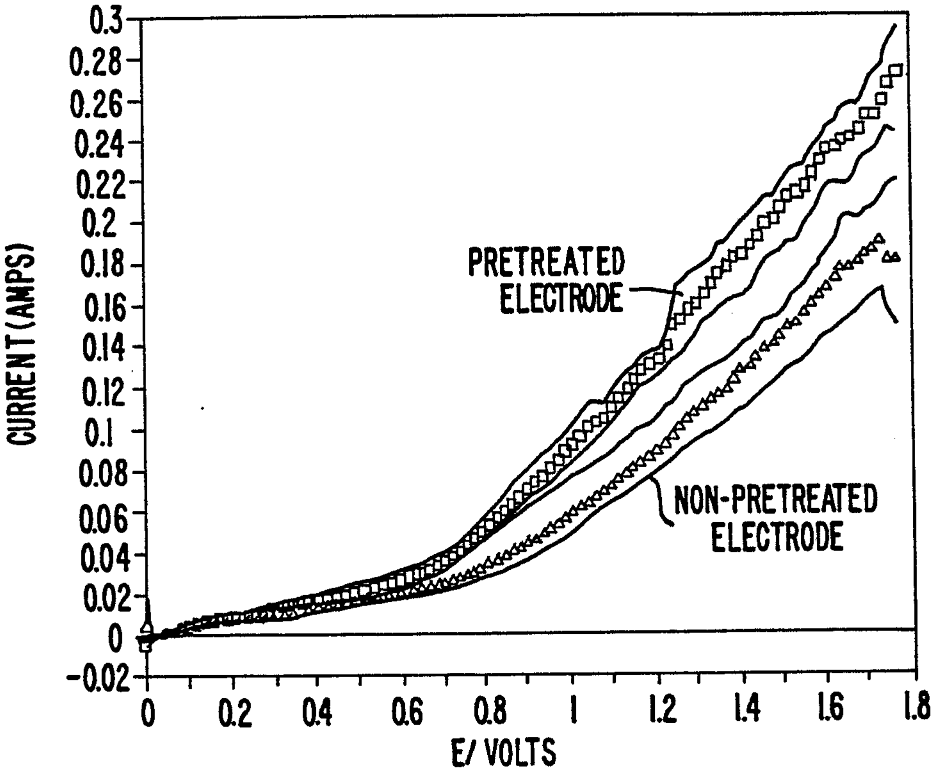


FIG._16A.

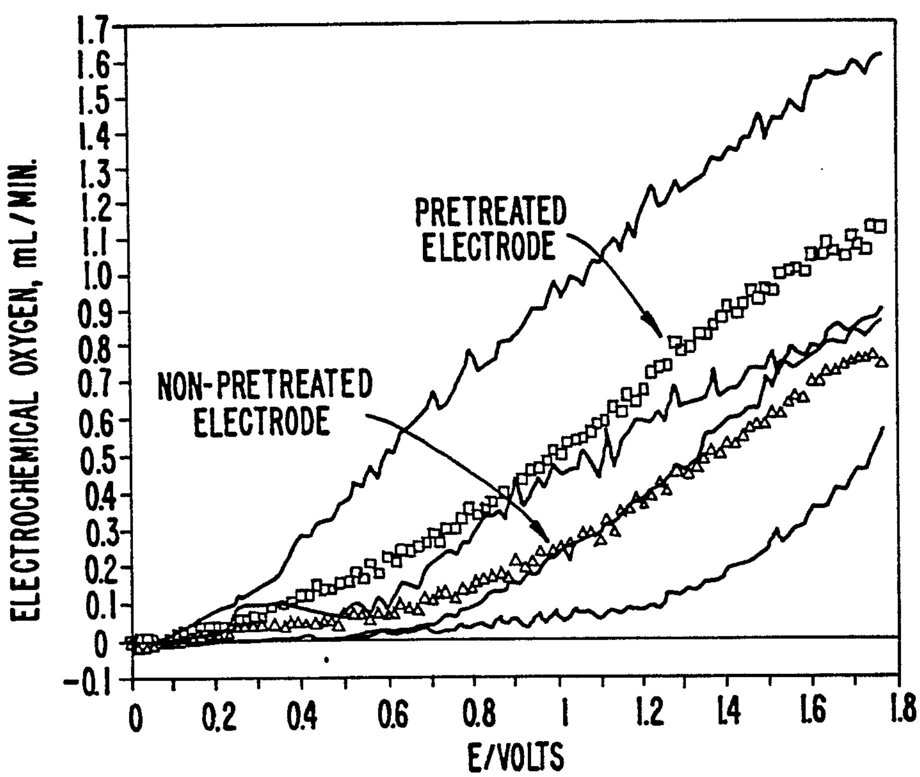


FIG._16B.